(19) Europäisches Patentamt
European Patent Office
Office européen des brevets

(11) EP 2 384 811 A1

(12) EUROPEAN PATENT APPLICATION

(43) Date of publication:
**09.11.2011 Bulletin 2011/45**

(51) Int Cl.:
***B01J 19/00*** *(2006.01)* ***C40B 60/02*** *(2006.01)*
***G01N 35/00*** *(2006.01)*

(21) Application number: **11173879.5**

(22) Date of filing: **11.01.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(30) Priority: **11.01.2006 DK 200600059**
**11.01.2006 US 757858 P**

(62) Document number(s) of the earlier application(s) in accordance with Art. 76 EPC:
**07700154.3 / 1 976 626**

(71) Applicant: **NOVO NORDISK A/S**
**2880 Bagsværd (DK)**

(72) Inventor: **Christensen, Søren Flygenring**
**2000 Frederiksberg (DK)**

(74) Representative: **Inspicos A/S**
**Kogle Allé 2**
**P.O. Box 45**
**2970 Hørsholm (DK)**

Remarks:
This application was filed on 13-07-2011 as a divisional application to the application mentioned under INID code 62.

# (54) A spherical encoded bead with an ultrasonic identification chip

(57) The present application discloses spherical polymer bead comprising embedded therein an ultrasonic identification chip, said chip comprising one or more resonator cavities, the dimensions of each of the one or more resonator cavities giving rise to an ultrasonic resonance frequency of 20 kHz or more. The application also discloses a bead sorting apparatus equipped with at least one ultrasonic transmitter and at least one ultrasonic receiver, and a method of measuring the ultrasonic code of an ultrasonic encoded bead using the bead sorting apparatus.

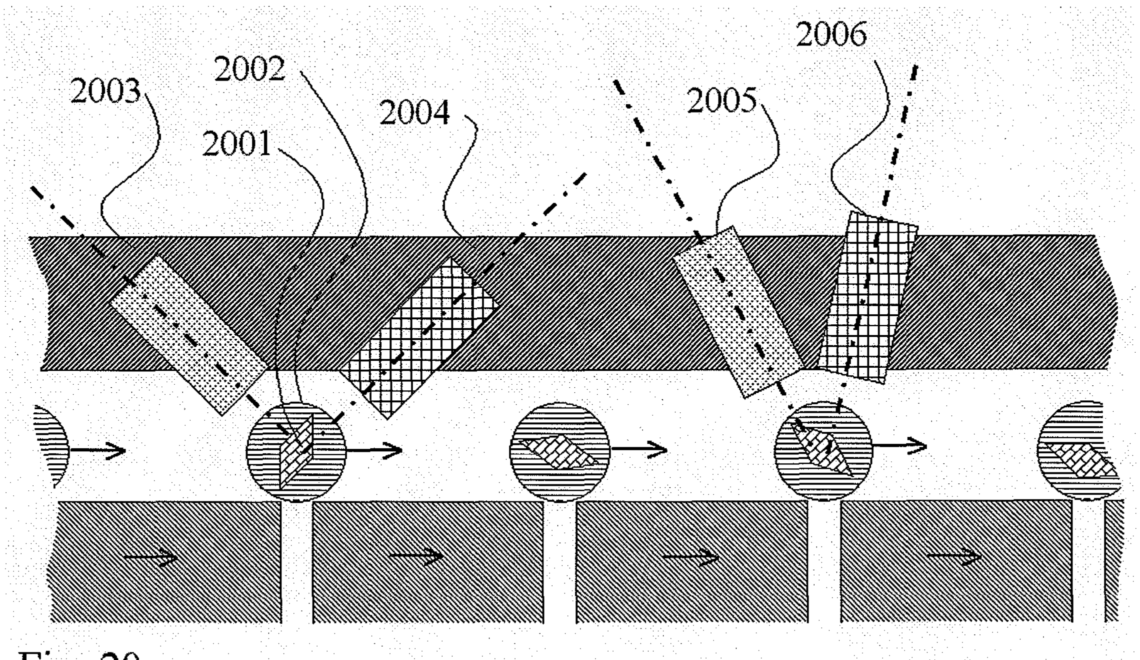


Fig. 20

EP 2 384 811 A1

## Description

### FIELD OF THE INVENTION

The present invention relates to compositions comprising spherical beads which are encoded with radiofrequency codes through incorporation of a radiofrequency chip. The beads are preferably made of polymeric material and can for example be used for the synthesis of chemical libraries, e.g. solid-phase chemical libraries. Preferred materials include some that minimise interference in biochemical assays (fouling). The invention also relates to batch and continuous methods of producing such compositions, including emulsion-polymerisation methods. In a further aspect, the present invention relates to an apparatus for analysing radiofrequency-encoded beads. Also provided are methods for detecting and/or analysing and/or sorting beads, as well as methods for processing beads once they have been analysed and/or sorted.

### BACKGROUND OF THE INVENTION

A number of prior art documents describe the use of radiofrequency chips for the encoding of beads to be used for the synthesis of chemical libraries.

US 6,265,219 (Chiron) describes transponder tagging of constituents used in compound synthesis. The synthesis members comprise a crown for solid synthesis and a stem in which the transponder is incorporated. Polyethylene, Teflon and fluorinated polymers are specifically proposed as materials for the synthesis members. The synthesis members are irregularly shaped and not suitable for high-throughput handling when dispersed in fluid compositions.

US 6,319,668 (Discovery Partners International) describes matrices with memories, i.e. tagging of matrix materials with identifying information. Use of the matrices in the production of combinatorial libraries is described. The described tagging methods include radiofrequency tagging. Manual or automated coating of memory devices and casting or dipping is proposed, but the document does not provide methods that ensure the synthesis of spherical beads. Furthermore, no process for production of hydrophilic beads containing radiofrequency tags is provided.

US 6,087,186 (Irori) describes labelled combinatorial synthesis libraries and methods and apparatuses for labelling individual library members of a combinatorial synthesis library with unique identification tags. Radiofrequency tags are amongst the proposed tags. Coating or encasing of tags is described, but the processes do not ensure formation of spherical beads.

WO 98/46548 (Zeneca) describes radiofrequency encoded chemical library synthesis particles which comprise a read-only radiofrequency tag linked to a solid phase. Their use in biological screening methods is also described. A process of 'dicing' beads out of a wafer is described. A spherical shape of the beads is proposed, but no process for its preparation is provided. The tags used are fairly large. Furthermore, only a limited number of hydrophobic polymeric materials are proposed for the bead. Some of these materials may cause inappropriate fouling in biological systems.

In conclusion, the prior art describes complex laborious methods for producing radiofrequency encoded beads, including dipping and dicing and manual insertion of beads. The beads are often large and irregularly shaped which makes them unsuitable for many high-throughput applications. Furthermore, many of the polymeric materials that are provided in the prior art only have a limited applicability for biological screening methods, as they result in fouling.

Radiofrequency chips and their antenna must be quite small if they are to be inserted into synthesis particles for use in high throughput screening. Such particles are typically spherical beads with a diameter less than 2 mm. Hence the size of the chip including antenna must be less than 2 mm long. Such small antennas typically operate at 2.45 GHz, which is a standard frequency for small radiofrequency identification systems.

Thus, there is a need for improved compositions comprising a plurality of beads that are optimally shaped for high throughput applications. Furthermore, there is a need for smaller radiofrequency-labelled beads and for novel non-fouling bead materials. There is also a need for methods of producing such compositions. In particular, there is a need for methods that allow efficient production of a large number of beads, and methods that allow to incorporate radiofrequency chips operating at a frequency of about 2.45 GHz into bead materials that are not readily compatible with the radiofrequency chip surface.

When large numbers of polymer beads, such as more than 10,000 beads, are to be analysed one by one at an acceptable total analysis time, the beads are typically dispersed in a liquid and passed through a measuring section of the analysis instrument.

WO 2005/062018 A2 discloses an apparatus for sorting and analysing beads.

The present invention is in one aspect directed to a bead analyser/sorter comprising a rotatable, circular capture body comprising a plurality of through-going inlets and antennae for radiofrequency identification, which is particularly suited for analysing beads each having incorporated therein a radiofrequency chip operating at a frequency of about 2.45 GHz.

The present invention is also directed to various methods.

Rønnekleiv et al. (submission at the 2005 IEEE Int. Ultrasonics Symp., Sept. 18-21, 2005, Rotterdam, The Netherlands) disclose the design of micromachined resonators for fish identification.

In a further main aspect, the present invention relates to spherical encoded beads comprising an ultrasound identification chip.

## SUMMARY OF THE INVENTION

In a first main aspect, the invention relates to a composition comprising a plurality of spherical beads, wherein a radiofrequency chip operating at a frequency of in the range of 2.2-2.7 GHz is embedded within each of said beads and wherein essentially each of said beads is individually identifiable on the basis of radiofrequency identification. Preferably, said beads comprise polymeric material comprising hydrophilic and/or hydrophobic moieties.

In a further main aspect, the invention relates to a method for the production of a composition comprising a plurality of spherical radiofrequency-identifiable polymeric beads comprising the steps of:

i) providing a first liquid,

ii) providing a second liquid comprising monomers to be polymerised and, optionally, a surfactant,
wherein said first and second liquid are immiscible,

iii) providing a plurality of radiofrequency chips operating at a frequency of in the range of 2.2-2.7 GHz, optionally coated with an initiator of polymerisation, wherein said optionally coated radiofrequency chips are capable of dispersing into the second liquid,

iv) mixing said first liquid, said second liquid and said plurality of radiofrequency chips, in any order, such that an emulsion is formed wherein said radiofrequency chips disperse into droplets of said second liquid,

v) optionally introducing an initiator if not provided in step iii), and

vi) allowing the formation of spherical polymeric beads having an embedded radiofrequency chip.

In a further main aspect, the invention relate to a method for the production of a composition comprising a plurality of spherical radiofrequency-identifiable polymeric beads comprising the steps of:

i) providing a first stream of a first liquid material,

ii) introducing into said first stream of liquid material, a second stream of monomers for the formation of a polymer, said stream further comprising a plurality of radiofrequency chips operating at a frequency of in the range of 2.2-2.7 GHz, and, optionally, a surfactant,
wherein the first liquid material and the monomers of the second stream are immiscible,

iii) regulating said second stream such that spherical droplets having embedded a radiofrequency chip are formed, and

iv) allowing the formation of spherical polymeric beads having embedded a radiofrequency chip from said droplets, said method further comprising, during one of the above steps, addition of an initiator of polymerisation, wherein addition of the initiator or activation of the initiator is timed in such a way that polymerisation is initiated simultaneously with, or after, the formation of droplets.

Radiofrequency encoding of beads through incorporation of radiofrequency chips provides a number of advantages over other means of encoding chips, including ease of detection and ease to avoid mix up between beads. Application on large scale has previously been hampered due to the large size of the radiofrequency chips (resulting in large beads), due to problems of producing large numbers of beads and due to problems with handling irregularly shaped beads. The problems have been solved in the present invention wherein methods are provided for large-scale batch or continuous preparation of spherical beads.

The spherical shape of beads makes it easy to handle the beads in high-throughput systems, in particular the high-throughput apparatuses of the present invention described herein. The spherical shape of the beads furthermore ensures optimal mechanical bead strength, because no protrusions can break off and mechanical stress is maximally distributed over the bead. A spherical shape of beads also minimises risk of beads sticking to solid surfaces or to each

other. In particular sticking of multiple beads to each other is important to avoid in order to allow individual analysis of beads. Thus, spherical shape ensures a maximum ease of handling beads without breaking beads, and further enables handling of single beads.

For some uses of the compositions of the invention, hydrophilic beads are more suitable than hydrophobic beads. This can be the case when compositions of the invention are used in biological screening assays. Hydrophilic materials, in particular PEG-based polymers, generally interfere much less in such assays than hydrophobic materials. Radiofrequency chips do normally not have hydrophilic surfaces and can thus not be readily incorporated into a bead made of hydrophilic core material. In the present invention, this problem has been solved by providing a coating of the chips that allows the chip to disperse into hydrophilic droplet of an emulsion containing hydrophilic monomers to be polymerised. Thus, in some embodiments of the present invention, the radiofrequency chip is, prior to incorporation into a bead, coated with a layer (an 'interphase') that renders it hydrophilic and the chip will end up embedded within the bead through an interphase consisting of different material than the core.

Also incorporation of radiofrequency chips into hydrophobic bead material can be problematic due to unsuitable surface characteristics of the radiofrequency chips. The present invention also solves such problems through suitable coating of the chips prior to embedding.

The present invention relates in a further aspect to an apparatus for analysing radiofrequency-encoded beads. The apparatus is highly suitable for the analysis of beads of the composition of the present invention. The apparatus in one embodiment comprises a rotatable, capture body, such as a circular disc comprising a plurality of through-going inlets, wherein an individual bead from a composition comprising different beads can be fixed to the disc at the end-position of a through-going inlet by applying a pressure drop over said disc comprising said through-going inlets. The pressure drop results in beads being sucked (i.e. detachably fixed) onto the surface of the planar disc on top of the through-going inlets. As essentially all of the bead is present on top of the disc (i.e. extends from the surface rather than being contained in a recess therein), analysis of bead properties can be performed more readily and more easily while still ensuring a high through-put rate. When the capture body, preferably in the form of a planar disc comprising a plurality of through-going holes, is rotated, the beads are transferred from the position where they initially became attached to the disc to fixed positions wherein suitable devices for radiofrequency identification and/or analysing and/or sorting the beads can be operated in order to e.g. detect and/or analyse and/or sort at least one bead of a plurality of beads.

An important advantage of the apparatus of the present invention is that it allows stepwise analysis of the composition of beads. This allows to prolong the reading time which is a significant advantage e.g. if there is a poor signal-to-noise ratio. Furthermore, the apparatuses of the invention allow radiofrequency identification at small distance from the bead. This is also important if the signal-to-noise ratio is poor.

The present invention offers several solutions to the problems associated with prior art proposals for achieving an efficient sorting of e.g. radiofrequency-encoded beads:

The present invention ensures, when compared to the prior art,

i) that the comparatively short measurement times of prior art devices can be increased, thus allowing more reliable data to be generated, and/or allowing a wider variety of analysing equipment to be used,

ii) that the comparatively short analysis time (i.e. time for algebra/mathematical calculations) of prior art devices can be increased considerably, thereby allowing more conclusive results to be generated, thereby allowing a more correct sorting to be achieved,

iii) that the limited spatial control over beads in prior art flow systems can be increased as the beads are detachably fixed to the capture body of the vacuum container of the apparatus of the present invention, and

iv) that the sorting method can be interrupted at request for a short period of time without decreasing the high through-put rate - the reason being that no time-consuming and laborious start-up procedures are required.

In summary, when compared to fluid dynamics based instruments, the present invention allows for measurement exposure times orders of magnitude higher while maintaining comparable through-put rates, i.e. total number of beads screened per total screening time.

In one aspect of the present invention there is provided an apparatus for analysing a plurality of spherical radiofrequency-identifiable beads, said apparatus comprising

i) a vacuum container comprising at least one planar capture body capable of rotating around a central axis, wherein said capture body comprises a plurality of through-going inlets arranged substantially concentrically around the central axis of the capture body,

wherein the diameter of each inlet is smaller than the average diameter of the beads to be detected,

ii) a pressure-controlling device capable of controlling the pressure in the vacuum container,

iii) a guiding channel enclosing said plurality of inlets;

iv) a device for rotating the vacuum container around the axis of the capture body, and

v) a detection device comprising at least one antenna for emitting and receiving radiofrequency electromagnetic irradiation operating at a frequency of in the range of 2.2-2.7 GHz for determining the radiofrequency code of said beads.

In another aspect of the present invention there is provided an apparatus for analysing a plurality of spherical radiofrequency-identifiable beads, said apparatus comprising

i) a vacuum container comprising at least one planar capture body capable of rotating around a central axis, wherein said capture body comprises a plurality of through-going inlets arranged substantially concentrically around the central axis of the capture body,
wherein the diameter of each inlet is smaller than the average diameter of the beads to be detected,

ii) a pressure-controlling device capable of controlling the pressure in the vacuum container,

iii) a guiding channel enclosing said plurality of inlets;

iv) a device for rotating the vacuum container around the axis of the capture body, and

v) a detection device comprising at plurality of antennas for emitting and receiving radiofrequency electromagnetic irradiation for determining the radiofrequency code of said beads, at least some of said antennas being positioned at each of said through-going inlets of said capture body.

In still another aspect of the present invention there is provided an apparatus for analysing a plurality of spherical radiofrequency-identifiable beads, said apparatus comprising

i) a vacuum container comprising at least one planar capture body capable of rotating around a central axis, wherein said capture body comprises a plurality of through-going inlets arranged substantially concentrically around the central axis of the capture body,
wherein the diameter of each inlet is smaller than the average diameter of the beads to be detected,

ii) a pressure-controlling device capable of controlling the pressure in the vacuum container,

iii) a guiding channel enclosing said plurality of inlets;

iv) a device for rotating the vacuum container around the axis of the capture body, and

i) a detection device for determining the radiofrequency code of said beads; and
wherein the planar capture body is arranged in a tilted manner at least 15° off a horizontal arrangement and so that the detection device is positioned in or in close proximity of the upper half of the guiding channel.

The apparatus in one embodiment further comprises an analysing device for analysing results being generated from the detection of the radiofrequency code of beads, wherein said analysis enables individual beads to be characterised and/or identified and optionally also sorted.

Also provided in accordance with the present invention are methods for detecting and/or analysing and/or sorting beads, as well as methods for processing beads once they have been analysed and/or sorted. In one aspect the methods comprise the steps of diverting the beads to the bead sorting apparatus of the invention, detecting the radiofrequency code of at least one bead, and sorting at least one bead based on an analysis of the measurement result.

When data for the identification of all encoded beads in the bead population have initially been recorded on a data storage medium, i.e. data for the identification of all encoded beads in the bead population have been recorded prior to the actual step of identifying individual beads, all radiofrequency codes will already have been stored on the

data storage medium. The total set of radiofrequency codes is therefore available and can thus be used for analysing and/or identifying individual encoded beads. An individual encoded bead will be identified once a match is found between the recorded radiofrequency code for the bead to be identified and the already stored radiofrequency codes for all beads.

BRIEF DESCRIPTION OF THE FIGURES

Figure 1 illustrates the principle of the present invention: 101 dispersion liquid, 102 bead, 103 capture body, 104 loading section (P1 > P2), 105 capture hole, 106 detection section (P1 > P2), 107 means for detecting, 108 treating section (P1 > P2), 109 means for treating, 110 unloading section (P1' < P2').

Figure 2 illustrates the same principle as in figure 1, but using a vacuum container: 201 vacuum container, 202 bead stopper.

Figure 3 shows an overview of an apparatus: 301 bead suspension reservoir, 302 bead suspension pump, 303 water pump, 304 water reservoir, 306 outer cylinder of bead handling apparatus, 307 computer, 308 valve, 309 first bead filter, 310 third water pump, 311 second water pump, 312 second bead filter, 313 stepper motor.

Figure 4 shows a vacuum container and a vacuum container housing: 401 guiding plate holder, 402, 406 wet sections, 403, 405 dry sections, 404 vacuum connecting piece, 407 shaft hole, 408 guiding plate, 409 momentum transfer split, 410 hollow shaft, 411 back plate, 412 - 414 separation plates, 415 capture disc holder, 416 capture disc.

Figure 5 shows parts of a vacuum container and a vacuum container housing: 501 direction of rotation.

Figure 6 shows sections of an apparatus: 601 excess bead unloading section, 602 sorting section, 603 bead feeding section, 604 excess bead flushing section, 605 water feeding section, 606 unloading section, 607 analysing section.

Figure 7 shows a bead sorting apparatus with auxiliaries for controlling the bead handling: 702 stepper motor controller, 703 pulse generator.

Figure 8 shows an unloading section for removing beads from the capture body by use of a bead stopper: 801 tube, 802 connecting piece.

Figure 9 shows a sorting section for selectively removing beads from the capture body by suction: 901 connecting piece, 902 piston, 903 piston cylinder.

Figure 10 shows a sorting section for selectively blowing beads from the capture body: 1001 vacuum volume, 1002 vacuum outlet, 1003 high pressure connecting piece, 1004 high pressure volume, 1005 high pressure outlet, 1006 vacuum connecting piece.

Figure 11 shows a sorting section for selectively displacing beads from the capture body with a bead displacing body: 1101 bead displacing body, 1102 bead displacing body container, 1103 bead displacing body guiding channel.

Figure 12 shows a batch process for producing a composition comprising a plurality of spherical radiofrequency encoded beads.

Figure 13 shows a continuous process for producing a composition comprising a plurality of spherical radiofrequency encoded beads wherein the physical dimensions of the tubing control bead formation.

Figure 14 shows a continuous process for producing comprising a plurality of spherical radiofrequency encoded beads wherein a narrowing of the stream controls bead formation.

Figure 15 shows a set-up for the detection of the radiofrequency code of radiofrequency encoded beads.

Figure 16 shows one spherical radiofrequency tagged polymer bead. The bead is swollen with water and surrounded by air.

Figure 17 shows a plurality of spherical radiofrequency tagged polymer beads. The beads are swollen with water and surrounded with water.

Figure 18 shows sections of an apparatus corresponding to the apparatus of Figure 6, but where 1801 is a liquid free section, and 1802 is a dispersion liquid level.

Figure 19 shows cross sections from the side (a) and from the top (b) of an acoustic resonance chip. 1901 Silicon nitride coating (0.5 micrometer thickness), 1902 microstructured silicon layer, 1903 silicon sealing, 1904 cavity.

Figure 20 shows a set-up for the detection of the ultrasonic code of ultrasonic encoded beads. 2001 ultrasonic identification chip, 2002 spherical bead, 2003 first acoustic wave transmitter, 2004 first acoustic wave detector, 2005 second acoustic wave transmitter, 2006 second acoustic wave detector.

## DETAILED DESCRIPTION OF THE INVENTION

### *Definitions*

*spherical* - is used to indicate an essentially spherical shape of a bead of the invention. This is includes moderate deviations from a perfect spherical shape, e.g. moderately spheroidal shapes such as prolates or oblates, having an aspect ratio of between 0.8 and 1.2.

*surface* - part of a bead that is in contact with the surrounding medium.

*interphase* - layer between the radiofrequency chip and the core of the bead.

core - part of the bead that is not in contact with the surrounding medium. When an interphase is present, the core is furthermore not in contact with the radiofrequency chip.

*hydrophilic* - a composition that forms a contact angle with water of less than 60˚, preferably less than 30˚.

*matrix* - cross-linked polymer material.

*radiofrequency chip* - device that can communicate with an antenna through radiofrequency electromagnetic waves.

*radiofrequency identification* - identification on the basis of radiofrequency electromagnetic waves.

*essentially* each *of said beads* - in connection with a specified criterion, this indicates that more than 90%, such as more than 95%, e.g. more than 98%, such as more than 99%, e.g. more than 99.5%, such as more than 99.9%, e.g. more than 99.99%, such as more than 99.999% of the beads fulfil the specified criterion.

*emulsion, dispersion, suspension* - liquid system comprising two immiscible liquids one of said liquids forming droplets in a continuum of the other of said liquids, said droplets being stabilised in said continuum by the combined action of stirring and the presence of a compound situated at the interface between the two phases.

*fouling* - indicates adhesion to biomolecules, such as DNA molecules, DNA-analog-molecules, RNA-molecules, RNA-analog-molecules, amino-acids, proteins, enzymes, lipids, antigens, viruses, cells, and the like.

*surfactant* - compound that stabilises droplets in an emulsion.

*PEGA* - PEG-acrylamide copolymer (may be alkylated on amide).

*POEPOP* - Polyethyleneglycol-polyoxypropylene copolymer.

*SPOCC* - Polymer obtained by ring opening polymerisation of partially or fully 3-methyloxetan-3-ylmethyl alkylated PEG.

*HYDRA* - PEG-tri-aminoethylamine star copolymer.

*swelling* - when beads are capable of swelling, any physical measurement, including size determinations and volume determinations, refer to measurements conducted for the swelled bead.

### *Compositions* of *the invention*

In a main aspect, the invention relates to a composition comprising a plurality of spherical beads, wherein a radiofrequency chip is embedded within each of said beads and wherein essentially each of said beads is individually identifiable on the basis of radiofrequency identification.

Compositions of the invention preferably comprise more than $10^3$ of said beads, such as more than $10^4$ of said beads, e.g. more than $10^5$ of said beads, such as more than $10^6$ of said beads, e.g. more than $10^7$ of said beads, such as more than $10^8$ of said beads, e.g. more than $10^9$ of said beads, such as more than $10^{10}$ of said beads.

Beads of the composition are preferably suitable for solid-phase synthesis. Thus, preferably, essentially each bead comprises at least one site for chemical functionalisation to which a ligand or a bioactive species can be attached. Bioactive when used herein indicates causing a measurable change in a system comprising biomolecules. Biomolecules may for example be DNA molecules, DNA-analog-molecules, RNA-molecules, RNA-analog-molecules, amino-acids,

proteins, enzymes, lipids, antigens, viruses, cells and the like. Preferably, the site for chemical functionalisation comprises a reactive group or a scaffold comprising two or more reactive groups.

*Shape and* size of *beads*

Compositions of the invention comprise beads that are spherical. Spherical shapes can be characterised by their aspect ratio (= diameter/height). Spherical shapes of the invention have an aspect ratio of between 0.8 and 1.2, most preferably between 0.9 and 1.1. 'Spherical' is not intended to indicate that the surface of the bead is entirely smooth, minor surface irregularities may occur. In spherical beads of the invention, the distance from the gravitational centre to any point on the surface of the bead is preferably in the range of from a quarter of the average distance from the gravitational centre to the surface to less than four times the average distance from the gravitational centre to the surface. Preferably, this distance is in the range from half of the average distance to less than two times. More preferably, this distance to any point of the surface is in the range from 0.75 to 1.25 times the average distance from the gravitational centre to the surface. The size of beads of the invention may vary, but preferably, essentially each of said beads has a volume of between 0.04 $mm^3$ and 4 $mm^3$, preferably between 0.1 $mm^3$ and 0.5 $mm^3$.

*Radiofrequency chips*

Essentially each of the beads of the composition of the invention is individually identifiable, i.e. can be discriminated from other beads of the invention on the basis of its radiofrequency code contained within the radiofrequency chip. Radiofrequency chips used in the beads of the compositions of the invention are small. Preferably, a radiofrequency chip is smaller than 1 mm x 1 mm x 1 mm, more preferably smaller than 0.5 mm x 0.5 mm x 0.5 mm. Radiofrequency chips can have a read-only memory, or, alternatively, a read-and-write memory. The chips preferably comprise an internal antenna. Preferred are furthermore chips wherein the individual identification is based on an identification number of 16, 32, 64 or 128 bits. Suitable chips can for example 0.4 mm x 0.4 mm RFID μ-chips with embedded antenna, supplied by Hitachi. Other suitable chips include ELAMS™ chips from Biomedic Data Systems and TIRIS™ chips from Texas Instruments. In one embodiment of the present invention the chips comprise a spherical antenna, whereby it is obtained that the reading of the chip becomes insensitive to the orientation of the radiofrequency waves.

Highly preferred chips are those operating at a frequency of in the range of 2.2-2.7 GHz, e.g. around 2.45 GHz.

*Bead material*

Typically, the beads of the composition of the invention comprise polymeric material.

The spherical beads of the composition of the invention are characterised by a number of features. One essential feature is the presence of a radiofrequency chip operating at a frequency of in the range of 2.2-2.7 GHz which is embedded within the bead material. Beads that contain an only partially embedded chip will often be suitable for most applications, but preferably the chip is entirely embedded within the bead, i.e. fully surrounded by bead material. Thus, preferred embodiments of composition of the invention are ones in which in essentially all beads of the composition more than 50% of the surface of the radio-frequency chip is embedded within the bead, preferably more than 75%, more preferably more than 90%, most preferably essentially 100%, most preferably 100%. Beads of the present invention are normally micro-porous, whereby it is obtained that compounds can diffuse through the bead material. However, they normally do not contain large cavities, and thus are normally not vessels or vials.

The bead material surrounding the chip consists of a core, a surface and optionally an interphase. The surface is the part of the bead that is in contact with the surrounding medium, usually a liquid. The core is the part of the bead, usually the bulk part of the total bead material, that is not in contact with the surrounding medium. If there is no interphase, then the core is in contact with the chip. However, in a number of embodiments, there is an interphase between the core and the chip, composed of different material than the core. Such an interphase may be necessary to allow incorporation of the chip into the bead material.

*Core and surface materials*

Any material capable of forming spherical beads is in principle suitable for use in the production of beads of the invention. Preferably, the core material of a bead is polymeric. In some embodiments, the core comprises or consists of hydrophilic polymeric material. In other embodiments, the core comprises or consists of hydrophobic polymeric material. In some embodiments, the surface of the beads comprises or consists of the same material as the core. In other embodiments, the surface consists of other material than the core. For instance, beads of the latter type can be obtained by chemical surface-modification of beads after polymerisation. Such surface-modification may include chemical functionalisation to render the beads suitable for solid-phase synthesis.

In some important embodiments, the surface of said beads comprises hydrophilic moieties. In particular, more than 50% of the surface, such as more than 60%, e.g. more than 70%, such as more than 80%, e.g. more than 90%, such as more than 95%, e.g. more than 99% of the surface of each of said beads consists of said hydrophilic moieties. As mentioned above, the core of said beads preferably comprises hydrophilic moieties. Preferred examples of such hydrophilic moieties are polyethylene glycol moieties, preferably cross-linked polyethylene glycol moieties, or polyamine moieties, or polyvinylamine moieties, or polyol moieties.

In other embodiments, the surface of said beads comprises hydrophobic moieties.

The choice of the type of beads, hydrophilic or hydrophobic, surface-modified or not, may depend on the application of the beads that is envisaged. A number of criteria may play a role, including physical characteristics, e.g. swelling, compatibility with aqueous solutions, compatibility with the type of molecules, such as biomolecules, to be attached, bioassays in which the beads are going to be screened, etc.

Encoded polymer beads according to the invention can be prepared from a variety of polymerisable monomers, including styrenes, acrylates and unsaturated chlorides, esters, acetates, amides and alcohols, including, but not limited to, polystyrene (including high density polystyrene latexes such as brominated polystyrene), polymethylmethacrylate and other polyacrylic acids, polyacrylonitrile, polyacrylamide, polyacrolein, polydimethylsiloxane, polybutadiene, polyisoprene, polyurethane, polyvinylacetate, polyvinylchloride, polyvinylpyridine, polyvinylbenzylchloride, polyvinyltoluene, polyvinylidenechloride and polydivinylbenzene. In other embodiments, the beads are prepared from styrene monomers or PEG based macro-monomers. The polymer is in preferred embodiments selected from the group consisting of polyethers, polyvinyls, polyacrylates, polymethacrylates, polyacylamides, polyurethanes, polyacrylamides, polystyrenes, polycarbonates, polyesters, polyamides, and combinations thereof. Highly preferred surface and core moieties include cross-linked PEG moieties, polyamine moieties, polyvinylamine moieties, and polyol moieties.

Preferred hydrophilic materials include PEG-grafted resins and PEG-cross-linked resins. PEG-grafted resins, such as TentaGel S (Rapp, W. In Combinatorial Peptide and Nonpeptide Libraries: A Handbook; Jung, G., Ed.; John Wiley & Sons, 1998, pp.425-464), and PEG-cross-linked resins, such as PEGA (polyethylene glycol-polyacrylamide copolymer) (Renil et al (1998). J. Pept. Sci. 4: 195-210); POEPOP (polyoxyethylene-polyoxypropylene) (Renil and Meldal (1996) Tetrahedron Lett. 37: 6185-6188); POE-PS3 (polyoxyethylene-polystyrene) (Buchardt and Meldal (1998) Tetrahedron Lett. 39: 8695-8698); SPOCC (Rademann et al. (1999). J. Amer. Chem. Soc. 121: 5459-5466) and HYDRA (Groth et al. (2000) J. Chem. Soc., Perkin Trans. 1:4258-4264) are aqueous compatible, and e.g. in general suitable for high-resolution MAS-NMR analysis. PEGA supports have proven useful for enzymology studies, for example, the screening of peptide or peptide-based inhibitor libraries (Smith and Bradley (1999) J. Combi. Chem. 1: 326-332; St. Hilaire, et al (1999) J. Combi. Chem. 1: 509-523; Rossé et al. (2000) J. Combi. Chem. 2000, 2: 461-466).

In some preferred embodiments, the bead comprise a polymer selected from the group consisting of SPOCC, PEGA, HYDRA, POEPOP, PEG-polyacrylate copolymers, polyether-polyamine copolymers, cross-linked polyethylene diamines.

In a highly preferred embodiment, beads of the compositions of the invention comprise cross-linked polymeric material (i.e. a matrix) selected from the group consisting of polyoxetane-triethyleneglycol, polyoxetane-tetraethyleneglycol, and polyoxetane-pentaethylene-glycol, including any combination and/or derivative thereof. The matrix preferably comprises the structure:

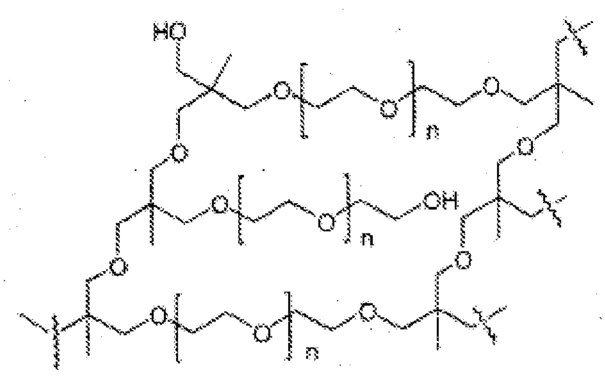

wherein n is a number between 2 and 600, such as between 2 and 100, for example between 2 and 20, such as between 2 and 10. In one preferred embodiment, n is 2 or 3.

Another highly preferred matrix is selected from the group consisting of polyglycerol-triethyleneglycol, polyglycerol-tetraethyleneglycol, and polyglycerol-pentaethylene-glycol, including any combination and/or derivative thereof. The matrix preferably comprises the structure:

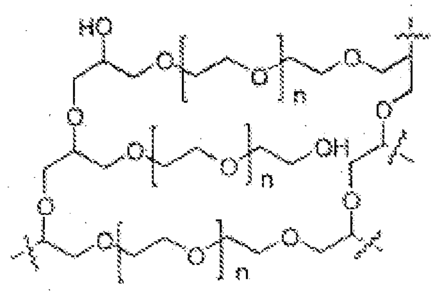

wherein n is a number between 2 and 600, such as between 2 and 100, for example between 2 and 20, such as between 2 and 10. In one preferred embodiment, n is 2 or 3.

Yet another highly preferred matrix is selected from the group consisting of poly(acryl)amide-triethyleneglycol, poly(acryl)amide-tetraethyleneglycol, and poly(acryl)amide-pentaethyleneglycol, including any combination and/or derivative thereof. The matrix preferably comprises the structure:

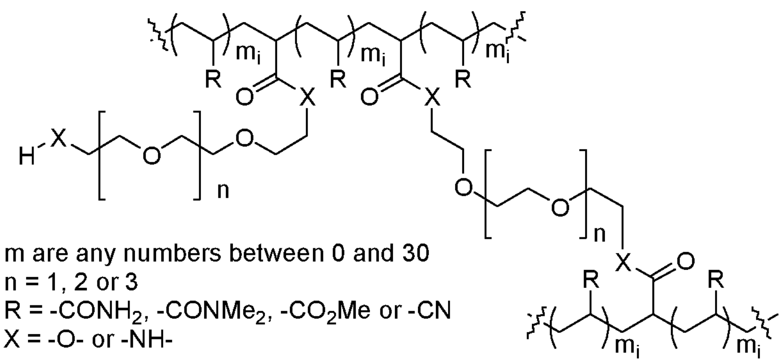

m are any numbers between 0 and 30
n = 1, 2 or 3
R = $-CONH_2$, $-CONMe_2$, $-CO_2Me$ or -CN
X = -O- or -NH-

Irrespective of whether n is 1, 2, or 3, it is preferred in one embodiment that R is $-CONH_2$. In another embodiment, R is $-CONMe_2$. In a further embodiment, R is $-CO_2Me$, and in a still further embodiment, R is -CN. Irrespective of whether n is 1, 2, or 3, and irrespective of whether R is $-CONH_2$, $-CONMe_2$, $-CO_2Me$, or -CN, X can be -O- or -NH-. A more preferred matrix is one wherein n is 2, wherein R is $-CONH_2$, and wherein X is -O-.

The above types of polymeric materials can be prepared as described in PCT/DK02/00687 and references therein.

Poly(alkylene)glycol based amino polymers

Other suitable polymer matrices include those illustrated as formula 3 below, which can be prepared by exhaustive reduction of amide groups in the matrix of formula 4.

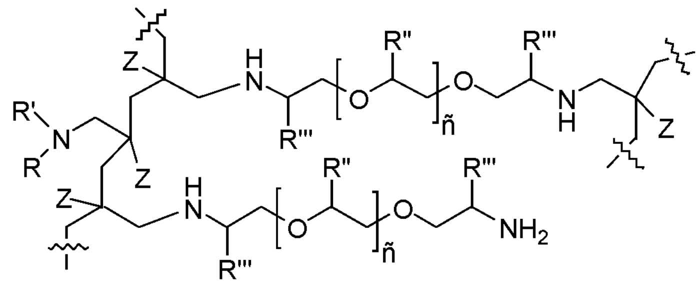

$Z = H$ or $CH_3$ or $C_2H_5$
$R = H$ or $CH_3$ or $CH_2OH$ or $C_2H_5OH$ or $i\text{-}C_3H_7$ or $n\text{-}C_3H_7$ or $i\text{-}C_4H_9$ or $n\text{-}C_4H_9$
$R' = H$ or $CH_3$ or $i\text{-}C_3H_7$ or $n\text{-}C_3H_7$ or $i\text{-}C_4H_9$ or $n\text{-}C_4H_9$
$R'' = H$ or $CH_3$
$R''' = H$ or $CH_3$

(3)

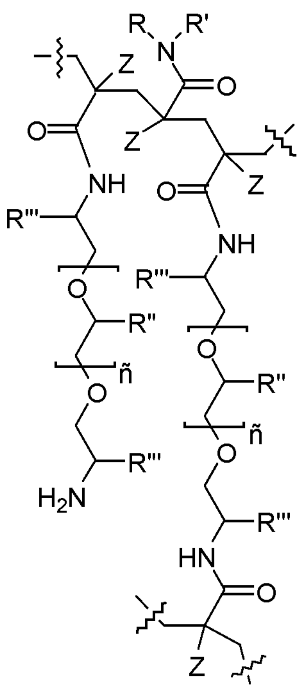

$Z = H$ or $CH_3$ or $C_2H_5$
$R = H$ or $CH_3$ or $CH_2OH$ or $C_2H_5OH$ or $i\text{-}C_3H_7$ or $n\text{-}C_3H_7$ or $i\text{-}C_4H_9$ or $n\text{-}C_4H_9$
$R' = H$ or $CH_3$ or $i\text{-}C_3H_7$ or $n\text{-}C_3H_7$ or $i\text{-}C_4H_9$ or $n\text{-}C_4H_9$
$R'' = H$ or $CH_3$
$R''' = H$ or $CH_3$

(4)

wherein $\tilde{n}$ is a real number and designates the average degree of polymerisation (dp) of poly(alkylene)glycol in the range of from 3 to 2000.

The above types of polymeric materials can be prepared as described in PCT/DK2004/000461 and references therein.

Poly(aminoalkylene) polymer materials

Other suitable polymer materials for the beads of the compositions of the invention include cross-linked, optionally substituted, poly(aminoalkylene), of the formula I:

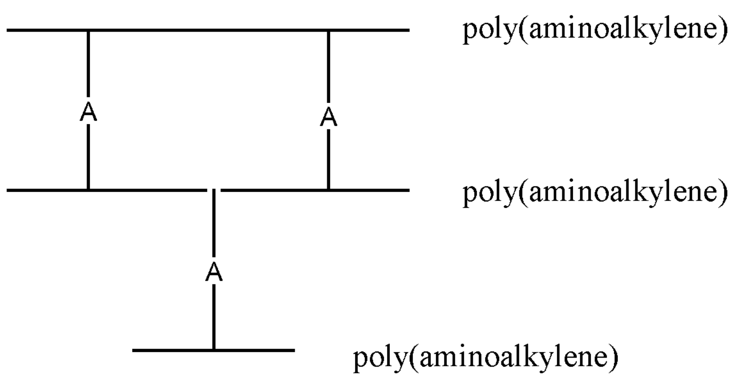

formula I

wherein A is a cross linking unit of functionality ≥2,

Other suitable materials include a beaded and cross-linked poly(aminoalkylene) matrix obtained by radical polymerisation of a molecule of formula IV having a radical reactive group $R^4R'''CR''CY$

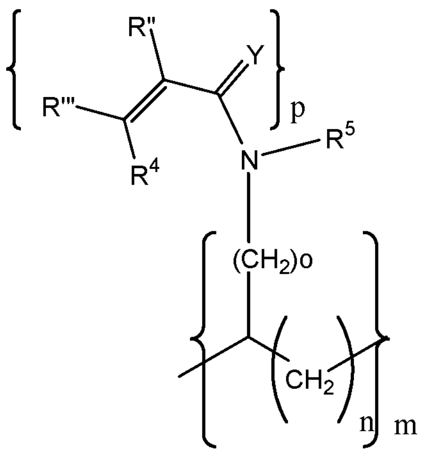

formula IV

wherein n is a number from 0 to 10;
wherein m is a number from 3 to 15,000;
wherein o is number 0 or 1;
wherein p is a number >0 and <m;
wherein Y is a heteroatom
wherein R'', R''', $R^4$, and/or $R^5$ are hydrogen or optionally substituted saturated or unsaturated alkyl or optionally substituted aryl groups.

Methods for generating the above-mentioned beaded and cross-linked matrices include radical polymerisation methods. When the polymer matrices are made by radical polymerisation methods, there is further provided in accordance with the present invention a polymer matrix comprising a plurality of substituted amino groups, wherein the polymer matrix is obtained by a radical polymerisation method in combination with the further step of converting - after the polymerisation step - at least some of the amino groups to functional groups $NR^6R^7$, of formula V:

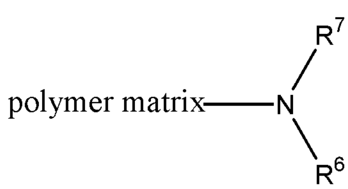

formula V

wherein $R^6$ and $R^7$ independently are H or an organic group formed by reaction of the amino groups of the polymer matrix according to the invention with an alkylating or acylating agent.

Polyethyleneimine polymers

Further suitable matrix materials to be used in beads of compositions of the invention include cross-linked polymer matrices formed from a macromonomer comprising a polyethyleneimine functionalised with at least one fragment comprising a vinyl group, wherein said fragment can be polymerised using radical or ionic initiators to form the cross-linked polymer matrix.

The polyethyleneimine and the vinyl group can be linked by a unit Z preferably selected from a carbonyl group, a sulfone group, an aryl group, and derivatives thereof. The cross-linked polymer matrix preferably comprises the structure:

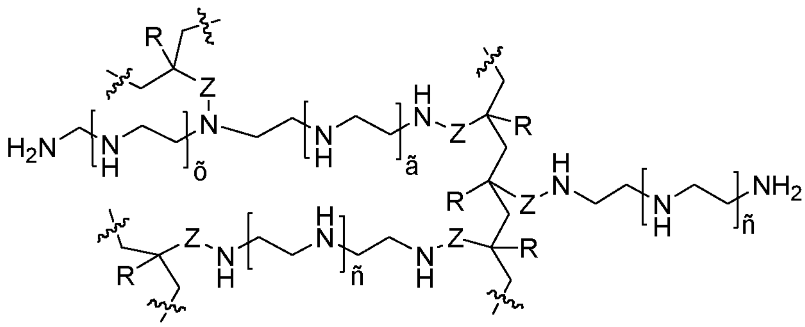

Z= CO or $COCH_2$ or $SO_2$ or CS or CNH or Aryl

R= H or $CH_3$ or $C_2H_5$

wherein $\tilde{n}$ is an integer in the range of from 5 to 1500 and $\tilde{a}$ and $\tilde{o}$ are integers in the range of from 0 to $\tilde{n}$.

In further preferred polymers, the unit Z can be selected from the group consisting of CO; $CO\text{-}(CH_2)_m$; $SO_2$; CS; and CNH; $C_6H_4$; and $C_6H_4\text{-}CO\text{-}(CH_2)_m$, where $0 \leq m \leq 10$, such as 0, 1, 2, 3, 4, 5, 6, 7, 8, 9 or 10.

In another preferred embodiment there is provided a polymer matrix comprising the structure:

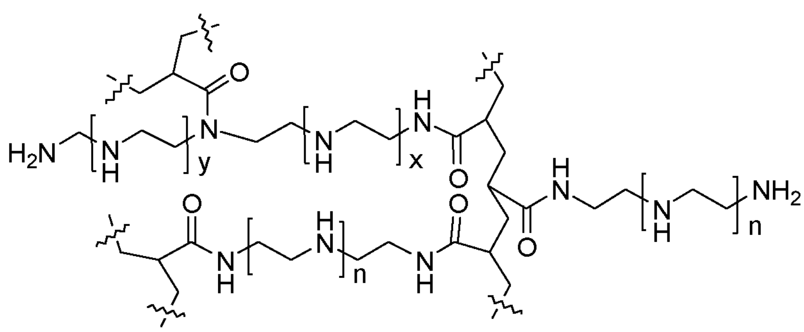

wherein $\tilde{n}$ is an integer in the range of from 2 to 1550, and

wherein the sum of x and y is an integer of more than 0 and at the most $\tilde{n}$-1.

The above types of polymeric materials can be prepared as described in PCT/DK2004/000330 and references therein.

PD-DVB

A preferred hydrophobic polymer to be used for production of beads of the composition of the invention is PS-DVB (polystyrene divinylbenzene). PS-DVB has been widely used for solid-phase peptide synthesis (SPPS), and has more recently demonstrated utility for the polymer-supported preparation of particular organic molecules (Adams et al. (1998) J.Org.Chem. 63:3706-3716). When prepared properly (Gr∅tli et al. (2000) J.Combi.Chem.2:108-119), PS-DVB supports display excellent properties for chemical synthesis such as high loading, reasonable swelling in organic solvents and physical stability.

*Interphase materials*

Beads of the compositions of the present invention in some embodiments comprise an interphase for attaching the core bead material to the radiofrequency chip. Thus, in such embodiments, the radiofrequency chip is embedded within the bead through an interphase. Said interphase preferably comprises less than 10% of the total volume of the bead (excluding the chip), preferably less than 5% of the total volume of the bead. Interphase material can e.g. be coated onto the radiofrequency chips by plasma deposition and/or chemical vapour deposition and/or UV grafting and/or etching and/or silane grafting.

In a preferred embodiment, the interphase comprises an inner coating for protecting the chip, and an outer coating for binding the coated chip to the bead material. The inner coating is, in such embodiments, in contact with the chip, whereas the outer coating is in contact with the core material of the bead.

Suitable protective inner coatings can for instance comprise or consist of one or more of the following materials: glass, organic polymers, ceramics, plastics, such as polyoxymethylene, polyethylene, polycarbonate, polystyrene, epoxy resin, PEEK, and fluorinated polymers, such as e.g. Teflon. In particular, the inner coating comprises inorganic glass or organic polymer.

The outer coating of the interphase, if present, has the function of binding and/or making the coated chip compatible with the polymeric material of the bead. This can be achieved in a number of ways. In some embodiments, the outer coating comprises a monomer which will be integrated into the polymeric material of the core of the bead by polymerisation. In other embodiments, the outer coating comprises material (a 'compatibiliser') which makes the chip compatible with polymeric material without becoming part of the polymer, i.e. it ensures that the coated chip can disperse and is miscible with the material to be polymerised. In some embodiments, the outer coating may contain, in addition to the compatibiliser, an initiator or co-initiator for initiation of polymerisation.

The following materials are presently preferred as interphase materials:

Silane materials suitable for glass surface treatments:

acrylic-silane (monomer), peroxide-silane (initiator), photoinitiator-silane (photo-initiator), polyethyleneglycol-silane (compatibiliser), aminosilane (co-initiator), e.g. 4,N,N-di-methyl-methylsilane-aniline, N,N-diethyl(trimethylsilylmethyl)amine, (N,N-dimethylaminopropyl)-trimethoxysilane, (3-diethylaminopropyl)trimethoxysilane, or tri-methoxysilane-bound polyethyleneimine polymers.

Materials suitable for liquid phase UV grafting on plastics:

acrylic-anthraquinone (monomer), peroxide- anthraquinone (initiator), polyethyleneglycolanthraquinone (compatibiliser), amino anthraquinone (co-initiator), e.g. 4,N,N-di-methyl-methyl-anthraquinone-aniline, N,N-diethyl(trimethyl-anthraquinonemethyl)amine, (N,N-dimethylamino-propyl)trimethoxyanthraquinone, (3-diethylaminopropyl)trimethoxy-anthraquinone.

Gas plasma deposited materials:

Outer coating materials can also be deposited by gas plasma deposition: Particularly useful for the present application are low-intensity alternating current plasma deposition techniques, such as low-intensity radiofrequency-pulsed plasma deposition techniques or low-intensity sub-radiofrequency plasma deposition techniques, such as low-intensity 50Hz plasma deposition. Preferred materials to be deposited by gas plasma deposition include acrylic acid, ethanol, acetonitrile, acrylonitrile, acryloylchloride, ethylamine, acetonitrile, and tetraglyme.

Both the inner coating and the outer coating are only optional parts of the interphase (which itself also only is optional). Thus, it is also envisaged that an interphase only consists of the inner coating materials described above and does not contain outer coating materials. Conversely, an interphase can consist of outer coating materials and not contain inner coating material.

*Methods for producing beads and compositions of the invention*

The invention also relates to methods of producing compositions comprising a plurality of spherical radiofrequency-identifiable polymeric beads, such as the compositions according to the invention as described herein.

In a first main aspect, the invention relates to a batch emulsion-polymerisation method for the production of a

composition comprising a plurality of spherical radiofrequency-identifiable polymeric beads comprising the steps of:

i) providing a first liquid,

ii) providing a second liquid comprising monomers to be polymerised and, optionally, a surfactant, wherein said first and second liquid are immiscible,

iii) providing a plurality of radiofrequency chips operating at a frequency of in the range of 2.2-2.7 GHz, optionally coated with an initiator of polymerisation, wherein said optionally coated radiofrequency chips are capable of dispersing into the second liquid,

iv) mixing said first liquid, said second liquid and said plurality of radiofrequency chips, in any order, such that an emulsion is formed wherein said radiofrequency chips disperse into droplets of said second liquid,

v) optionally introducing an initiator if not provided in step iii), and

vi) allowing the formation of spherical polymeric beads having an embedded radiofrequency chip.

Figure 12 provides a schematic illustration of the above batch process carried out in a reactor. The radiofrequency chips that are provided in step iii) and introduced in step iv) must be miscible with the monomeric liquid phase. Depending on the type of monomeric liquid phase and on the type of radiofrequency chips used, the radiofrequency chips may be coated, e.g. with any one or more of the materials described in the interphase section above, to make them compatible with the monomer liquid phase. The mixing in step iv) can be obtained by any standard means, e.g. a stirring rod.

Initiation of polymerisation may be obtained in different ways. In some embodiments, the initiator is added independently of the chips, either after or upon addition of the chips to the emulsion. In other embodiments, the radiofrequency chips are coated with an initiator, thus ensuring that polymerisation only occurs around the chips.

Often, a combination of an initiator and a co-initiator will be used. In preferred embodiments, the initiator may be added during any of the steps i) to iv) of the above method, and the addition of the co-initiator or its activation is timed such that polymerisation does not occur before formation of droplets containing radiofrequency chips. In one such embodiment, exemplified in Example 5 herein, an initiator is added to the emulsion before introduction of the chips, and a co-initiator is added after introduction of the chips. In another embodiment, exemplified in Example 8, the chips are coated with an initiator, and a co-initiator is added after mixture of the first liquid, the second liquid and the radiofrequency chips.

The steps in the above batch preparation may furthermore include heating of the emulsion, bobbling with argon to remove oxygen, or other procedures known in the art that promote emulsion polymerisation. Furthermore, the resulting product may be washed and/or filtered to obtain a composition suitable for further use.

In a further main aspect, the invention relates to a method for continuous production of a composition comprising a plurality of spherical radiofrequency-identifiable polymeric beads comprising the steps of:

i) providing a first stream of a first liquid material,

ii) introducing into said first stream of liquid material, a second stream of monomers for the formation of a polymer, said stream further comprising a plurality of radiofrequency chips operating at a frequency of in the range of 2.2-2.7 GHz, and, optionally a surfactant,
wherein the first liquid material and the monomers of the second stream are immiscible,

iii) regulating said second stream such that spherical droplets having embedded a radiofrequency chip are formed, and

iv) allowing the formation of spherical polymeric beads having embedded a radiofrequency chip from said droplets, said method further comprising, during one of the above steps, addition of an initiator of polymerisation, wherein the addition or the activation of the initiator is timed in such a way that polymerisation is initiated simultaneously with, or after, formation of droplets.

The radiofrequency chips are in the above method capable of dispersing into the second stream of monomeric material. Figures 13 and 14 provide schematic illustrations of two different embodiments of the above continuous process. The radiofrequency chips that are introduced in step ii) are miscible with the second monomeric liquid phase. Depending

on the type of monomeric liquid phase and on the type of radiofrequency chips used, this may mean that the radiofrequency chips need to be coated to make them compatible with the monomer liquid phase. Step iii) comprising *regulating said second stream such that spherical droplets having embedded a radiofrequency chip are formed,* can be carried out in several ways.

Figure 13 illustrates an embodiment in which spherical droplets are formed due to a restriction of the flow. The flow is restricted by the dimensions of the tubing in which the process is carried out. Figure 14 illustrates an embodiment in which spherical droplets are formed by break-up of a capillary flow due to a narrowing of the stream through the tubing.

Initiation of polymerisation may be obtained in different ways in the above continuous production method. In some embodiments, the initiator is added independently of the chips, either before, after or upon addition of the chips to the emulsion.

In one embodiment, the addition of an initiator of polymerisation occurs after formation of droplets.

In a preferred embodiment, said addition of an initiator of polymerisation is performed immediately prior to entry of said second stream into said first stream such that substantially no polymerisation occurs before formation of the droplets.

In other embodiments, the radiofrequency chips are coated with an initiator, thus ensuring that polymerisation only occurs around the chips. In this latter embodiment, it is important that said coated radiofrequency chips are added immediately prior the formation of droplets such that substantially no polymerisation occurs before formation of the droplets.

Often, a combination of an initiator and a co-initiator will be used. For example, an initiator of polymerisation may be provided in the second stream and a co-initiator is provided in the first stream, such that initiation of polymerisation starts upon contact between said first and second stream. In one such embodiment, exemplified in Example 9 and 10, the chips are coated with an initiator, and a co-initiator is added after mixture of the first liquid, second liquid and radiofrequency chips.

The steps in the above continuous preparation process may furthermore include heating of the emulsion, bobbling with argon to remove oxygen, or other procedures known in the art that promote emulsion polymerisation. Furthermore, the resulting product may be washed and/or filtered to obtain a composition suitable for further use.

In some embodiments of the above batch and continuous methods, the initiator and/or co-initiator is/are added in an inactive form and polymerisation is initiated by activation of the initiator, e.g. by heat or UV light.

In some embodiments of the above batch and continuous methods of the invention, the radiofrequency chips that are provided have been coated with material, e.g. a compatibilizer, that has rendered their surface more hydrophilic and the said second liquid or second stream comprises hydrophilic monomers to be polymerised. In other embodiments, the radiofrequency chips that are provided have been coated with a material, e.g. a compatibilizer, that has rendered their surface more hydrophobic and said second liquid or second stream comprises hydrophobic monomers to be polymerised. Thus, the radiofrequency chips that are used in the above batch and continuous methods can e.g. be coated with any of the materials described in the 'Interphase materials section' above, including monomers, compatibilisers and combinations thereof.

The above batch and continuous methods of the invention may optionally be followed by a step of separating beads that have one radiofrequency chip from beads that have no radiofrequency chip or more than one radiofrequency chip. Such separation may e.g. be done flow or using a bead sorter, e.g. as described in Examples 6 and 7.

*Surfactants*

In preferred embodiments of the present invention, a surfactant is included in the polymerisation process. Suitable surfactants include for example anionic surfactants, such as the following anionic surfactants (supplied by Huntsman):

Alkyl Benzene Sulphonate Derivatives: NANSA series
Alpha Olefin Sulphonates: NANSA LSS series
Alcohol Sulphates: EMPICOL series
Alcohol Ethoxy Sulphates: ALKANATE W, EMPICOL series
Alkylphenol Ethoxy Sulphates: ALKANATE W, EMPICOL series
Naphthalene Sulphonate Derivatives: DEHSCOFIX series
Sulphosuccinates: EMPICOL S, SURFONIC DOS series
Phosphate Ester Derivatives: ALKANATE P, EMPIPHOS, SURFONIC PE series
Sodium Vinyl Sulphonate: HARTOMER 4900

Examples of suitable non-ionic surfactants include the following (supplied by Huntsman):

Alkylphenol Alkoxylates: EMPILAN NP, EMPILAN OP, SURFONIC N, TERIC N, TERIC X series
Alcohol Alkoxylates: EMPILAN K, SURFONIC L, TERIC A series
EO/PO Copolymers: EMPILAN PF, SURFONIC POA, TERIC PE series
Alkyl Polysaccharides: ALKADET, ECOTERIC series
Alkylamine Ethoxylates: EMPILAN AMO, EMPILAN AMT, SURFONIC T, TERIC M series

Other alternative suitable surfactants include alcohol alcoxylates, such as BEROL EP 25 and BEROL EP 35, supplied by Akzo Nobel, and Nonyl Phenol Ethoxylates, such as BEROL 02 or BEROL 09 (also supplied by Akzo Nobel).
A further alternative suitable surfactant includes sorbitain monolaurate.
In view of the above-mentioned methods for the preparation of beads, it should be understood that the invention also relates to a composition comprising a plurality of radio-frequency-identifiable polymeric beads obtainable by the methods described above.

*Apparatuses* of *the invention*

The present invention in a further main aspect provides an apparatus comprising devices for bead manipulation and bead detection. This apparatus is highly suitable for manipulation and detection of beads of the compositions of the invention.
In one aspect of the present invention there is provided an apparatus for analysing a plurality of spherical radiofrequency-identifiable beads, said apparatus comprising

i) a vacuum container comprising at least one planar capture body capable of rotating around a central axis, wherein said capture body comprises a plurality of through-going inlets arranged substantially concentrically around the central axis of the capture body,
wherein the diameter of each inlet is smaller than the average diameter of the beads to be detected,

ii) a pressure-controlling device capable of controlling the pressure in the vacuum container,

iii) a guiding channel enclosing said plurality of inlets;

iv) a device for rotating the vacuum container around the axis of the capture body, and

v) a detection device comprising at least one antenna for emitting and receiving radiofrequency electromagnetic irradiation operating at a frequency of in the range of 2.2-2.7 GHz for determining the radiofrequency code of said beads.

In one embodiment, the apparatus has a ratio R between a) the average diameter of the beads being manipulated, and b) the diameter of the through-going inlets, R=a/b, is more than 2, such as more than 4, for example more than 6, such as more than 8, for example more than 10, such as more than 12, for example more than 14, such as more than 16, for example more than 18, such as more than 20, for example more than 25, such as more than 30, for example more than 35, such as more than 40, for example more than 50, and preferably less than 100.
Preferably, the capture body of the apparatus is a planar disc.
The bead manipulation device preferably comprises a mechanical bead handling apparatus comprising a vacuum container comprising a capture disc for bead capture and manipulation. Once captured onto the capture disc of the vacuum container the radiofrequency code of the beads can be detected, e.g. by using an antenna. The generated data can be stored on a data storage medium and analysed. Accordingly, the apparatus can further comprise a device for bead analysis based on the data generated by the detection. In an even further embodiment the apparatus can also comprise a device for bead processing based on the data generated by the detection device and/or the data generated by the analysing device.
The principle of the operation of the apparatus according to the present invention is illustrated in Figure 1. A bead (102) is dispersed in a dispersion liquid (101) and brought into proximity of the capture body (103), preferably in the form of a disc. The bead is placed firmly on top of a through-going inlet (i.e. capture hole) (105) due to the formation of a pressure drop, $P_2 - P_1$, over the inlet.
The circular capture body (103) can be manipulated, such as rotated in a step-wise fashion, so that a bead, once it has been firmly fixed onto an inlet, can be transferred to a detection section (106) where the radiofrequency code of the bead can be measured by a suitable device (107). The detection section and the detection device will preferably be stationary, whereas the step-wise motion of the capture disc will transfer - in a step-wise fashion - beads to the detection section, one bead after the other. Accordingly, the term "section" as used herein will be understood to refer

to a particular volume that contains the full track of the capture holes or parts thereof, and through which at least one capture hole can be manipulated. By the "track of the capture holes" is meant the spatial geometry described by the moving capture holes. In the case of a rotating capture disc with capture holes arranged along a circle centred around the axis of rotation of the capture disc, the track of the capture holes is a circle. In preferred embodiments of the present invention a section contains only parts of the track of the capture holes, and preferably all capture holes can be manipulated through a section. In cases where an apparatus of the present invention includes a guiding plate, a section typically is fixed relative to the guiding plate. In the preferred cases, where the guiding plate comprises a guiding channel, a section typically refers to a volume including a specific part of the guiding channel. Accordingly, any bead, which is detected by the detection device is positioned in a detection section. The beads are preferably detected in stationary mode, i.e. in between the step-wise motions, which are required in order to rotate the capture disc and transfer beads from one section (e.g. a loading section) to another section (e.g. a detection section).

It is to be understood that the capture body can be of various geometries other than circular and can be manipulated in various ways other than rotation. As an example the capture body can be spherical with capture holes arranged along a circle and can be rotated around and axis perpendicular to the geometrical plane of the capture holes and going through the centre of the circle described by the capture holes. As a further example a capture body can comprise a rectangular capture surface with a rectangular array of capture holes arranged in rows and columns, and can e.g. be manipulated in directions parallel to the rows and columns of the capture holes. Furthermore the loading and/or unloading can be performed batch wise. As an example, a capture body can be loaded with beads by immersing the capture surface of the capture body into a dispersion of beads, and can be unloaded by immersing the capture surface in dispersion liquid and disconnecting the vacuum body from the vacuum and optionally connecting the vacuum container to a pressurised source of dispersion liquid.

Examples of suitable detection devices are radiofrequency detection devices, such as radiofrequency detection devices comprising a radiofrequency antenna connected to a radiofrequency antenna controller. One example of a radiofrequency antenna is a radiofrequency antenna comprising a cylindrical ferrite core circumvented by a copper coil.

In one preferred embodiment of the present invention the radiofrequency detection device and the RFID chip operate at a frequency of in the range of 2.2-2.7 GHz, such as around 2.45 GHz.

In another aspect of the present invention there is provided an apparatus for analysing a plurality of spherical radiofrequency-identifiable beads, said apparatus comprising

i) a vacuum container comprising at least one planar capture body capable of rotating around a central axis, wherein said capture body comprises a plurality of through-going inlets arranged substantially concentrically around the central axis of the capture body,
wherein the diameter of each inlet is smaller than the average diameter of the beads to be detected,

ii) a pressure-controlling device capable of controlling the pressure in the vacuum container,

iii) a guiding channel enclosing said plurality of inlets;

iv) a device for rotating the vacuum container around the axis of the capture body, and

v) a detection device comprising at plurality of antennas for emitting and receiving radiofrequency electromagnetic irradiation for determining the radiofrequency code of said beads, at least some of said antennas being positioned at each of said through-going inlets of said capture body.

In this variant, the capture disc comprise radio-frequency antenna positioned at every capture hole of said capture disc, thus, the radio-frequency antennas rotate together with the capture disc. As an example the radiofrequency antenna comprise a thin layer of microstructured electrically conductive material in the shape of e.g. a spiral around each capture hole. Such antenna can be manufactured by standard deposition and etching methods known from the electronics industry. In this way the distance between the radiofrequency chip and the antenna for reading the chip is determined by the distance from the radiofrequency chip to the surface of the radiofrequency encoded bead.

Preferably, the detection devices within the above variant further comprise one or more radiofrequency antenna oriented at various angles to the surface of the capture disc. Optionally one or more antenna are positioned at the back of the vacuum container and focussed on the detection section of the apparatus. When using radiofrequency chips, which can not be read from any direction, the combined operation of antenna placed at the front and at the back of the vacuum container ensure that all radiofrequency encoded beads can be read regardless of orientation.

Examples of suitable analysing devices are e.g. computers with computer programs installed for comparison of a radiofrequency code with stored radiofrequency codes. Suitable computer programs can furthermore e.g. generate a sorting result on the basis of the comparison, keep track of the position of beads and their associated sorting results,

and control an actuator of an optional sorting section of an apparatus of the present invention. Furthermore, computer programs can control the means for treating a bead in one or more optional treating sections of the present invention, such as keeping track of synthesis beads and their individual predetermined building block exposure sequences and control the addition of specific building blocks to said one or more optional treating sections in accordance thereto.

Once a bead has been subjected to a detection step and optionally also a analysis step, the capture body can be further manipulated, such as rotated, preferably in the same orientation as previously, so that a bead having been detected and optionally also analysed, subsequently enters a processing section (108) where the bead can optionally be processed by a suitable processing device (109).

A processing or treatment step can include a chemical reaction. By chemical reaction is meant a process that breaks existing chemical bonds, such as covalent bonds, ionic bonds, or hydrogen bonds, and forms new chemical bonds within a given chemical compound. As an example chemical compounds with a desired structure can be synthesised on beads for solid phase synthesis, so-called synthesis beads, by exposing the beads to building blocks in a specified sequence. As an example the treating device can comprise a plurality of compartments comprising chemical building blocks said compartments being connected to the treating section by at least one tube for diverting individual chemical building blocks to the treating section, such that specific beads can be exposed to specific building blocks in the treating section.

In a similar and still further step of operating the capture body, the bead can be transported to an unloading section (110) by suitable manipulation of the capture body. The bead in question can be removed from the capture body e.g. by reversing the pressure drop having been exerted during the aforementioned steps, i.e. by reversing - once the bead enters the unloading section - the pressure drop $P_2' - P_1'$ over the inlet to which the bead has been attached during the above-mentioned operations.

The bead sorting and detection apparatus described in principle above allows a fast and reliable sorting, detection and identification of a plurality of polymer beads. Using the bead sorting apparatus disclosed herein it is possible to perform methods enabling a detection in a single hour of as many as more than 10,000 beads, such as more than 20,000 beads, such as at least 30,000 beads, such as at least 36,000 beads, such as at least 76,000 beads per hour, with detection times of about 1/20 second or less. Detection times in this range are orders of magnitudes longer than the approximately 10 microseconds allowed for by a purely fluid dynamics based systems.

Furthermore, the sensor for detecting the coming of a bead, which is an essential component of the purely fluid dynamics based system, is rendered superfluous by the present invention due to the accurate mechanical control of the capture body being operated by a stepper motor.

Figure 1 discloses the principle of attaching a bead to a through-going inlet of a capture disc and transferring the bead to certain (stationary) "utility sections" by rotating the disc. In a preferred embodiment of the present invention, as illustrated in Figure 2, the capture body forms part of a (capture) vacuum container (201) connected to a vacuum so that an essentially constant pressure, $P_2$, can be maintained inside the capture vacuum container throughout the operation of the apparatus. The capture vacuum container ensures that the capture body surface can be moved freely around a central axis with only a minimum of friction.

The vacuum container comprises a first (outer) surface onto which beads can be captured, and through-going inlets extending from the first surface to a second (inner) surface. The captured beads can be transferred between different "utility sections" - defined by fixed positions occupied by different beads over time - when the vacuum container is rotated around a central axis. By "utility sections" is meant sections such as e.g. loading sections, detection sections, analysing sections, processing sections, and unloading sections.

The beads can finally be removed from the capture vacuum container at an unloading section (110) by rotating the capture vacuum container so that a bead on the first surface is contacted by a bead stopper (202) which forces the bead away from the first surface of the capture vacuum container. The use of a bead stopper eliminates the need for supplying a strong vacuum near the first surface of the capture vacuum container at the unloading section.

In one aspect of the invention there is provided a vacuum container comprising a) a circular capture disc comprising a plurality of through-going inlets, b) a circular capture disc support supporting the capture disc at a distal end thereof (at the perimeter) and being connected at a proximal end (at the central axis) of the capture disc to c) a hollow shaft, wherein the hollow shaft is preferably fitted with a shaft hole so that a vacuum (i.e. a pressure below 1 bar) can be applied to the interior of the vacuum container, and d) a stepper motor operably linked to a momentum transfer split for transferring the momentum from the stepper motor to the vacuum container, thereby causing the vacuum container to rotate in a controlled, step-wise fashion.

In the above description the pressure drop over the capture disc is generated by applying a vacuum to the interior of the vacuum body. It is to be understood though that the pressure drop can be generated in other ways. One alternative is to apply a pressure to the dispersion liquid contacting the outer surface of the capture disc by e.g. connecting a pressurised dispersion liquid reservoir thereto. A further alternative is to apply a vacuum to the inside of the vacuum container and at the same time to apply a pressure to the dispersion liquid on the outside.

The above-described vacuum container comprising a rotatable capture disc for bead sorting is preferably

integrated into an apparatus for bead sorting further comprising the following features

i) a bead feeding section for diverting beads to the vacuum container of the bead sorting apparatus,

ii) a loading section for loading beads onto the capture disc of the vacuum container,

iii) a device for rotating the vacuum container and thereby transferring beads detachably attached to through-going inlets of the capture disc from one location to another location,

iv) a detection section for detecting the radiofrequency code of a bead attached to the capture disc,

v) an detection device for detection said radiofrequency code,

vi) an analysing device for analysing and storing the data obtained from detecting the radiofrequency code, and

vii) at least one unloading section for unloading beads from the capture disc of the vacuum container.

An overview of the apparatus for bead sorting according to the invention is described herein below with reference to Figure 3.

Overview of bead sorting apparatus

The following paragraphs describe with reference to Figure 3 the best mode for operating the bead sorting apparatus of the invention as well as the methods for bead sorting which are thereby enabled.

Figure 3 illustrates a bead suspension reservoir (301) in which beads to be sorted can be suspended in water by a sufficiently rapid stirring. The beads can be diverted to the bead suspension reservoir e.g. following a solid phase synthesis step. A bead suspension pump (302) supplies the suspended beads from the bead suspension reservoir to the bead feeding section of the apparatus. Any non-captured beads can be re-circulated to the bead suspension reservoir from the excess bead unloading section.

It is to be understood that the beads can be suspended in any sufficiently easy flowing liquid. By easy flowing is meant that the liquid has a not too high viscosity, such as a viscosity less than 10000 milli Pa s, such as less than 1000 milli Pa s, preferably less than 100 milli Pa s, e.g. between 0.5 milli Pa s and 10 milli Pa s, such as about 1 milli Pa s, which is the viscosity of water at room temperature. As an example aqueous solutions of minerals and/or biological material can be used as suspension liquid.

In one preferred embodiment of the invention the suspension liquid has little or practically no absorbance of electromagnetic radiation at the frequency used to read the RFID tag inside the bead, whereby it is it obtained that the operating radiofrequency radiation of the RFID-chip of the bead is not damped by the dispersion liquid.

In a further preferred embodiment of the invention the suspension liquid has little or practically no absorbance of electromagnetic radiation at 2,45 GHz, e.g. an organic liquid, such as a hydrocarbon such as hexane, a halogenated solvent such as di-chloromethane, or a mineral oil such as Isopar-M supplied by ExxonMobil Chemical.

In yet a further preferred embodiment of the present invention the suspension liquid is water and the operating frequency of the RFID-chip is about 2.45 GHz. In this embodiment the suspension liquid does in fact absorb the electromagnetic radiation at the operating frequency of the RFID-chip. To minimize the undesired absorbance of the electromagnetic radiation by the suspension liquid, the suspension liquid is removed from the detection section and optionally from a further part of the guiding channel, said part of the guiding channel including the detection section.

Hence, in still another aspect of the present invention there is provided an apparatus for analysing a plurality of spherical radiofrequency-identifiable beads, said apparatus comprising

i) a vacuum container comprising at least one planar capture body capable of rotating around a central axis, wherein said capture body comprises a plurality of through-going inlets arranged substantially concentrically around the central axis of the capture body,
wherein the diameter of each inlet is smaller than the average diameter of the beads to be detected,

ii) a pressure-controlling device capable of controlling the pressure in the vacuum container,

iii) a guiding channel enclosing said plurality of inlets;

iv) a device for rotating the vacuum container around the axis of the capture body, and

ii) a detection device for determining the radiofrequency code of said beads; and
wherein the planar capture body is arranged in a tilted manner at least 15˚ off a horizontal arrangement and so that the detection device is positioned in or in close proximity of the upper half of the guiding channel.

This embodiment is illustrated in Figure 18, where the planar capture body is arranged in an upright position, i.e. at a tilted manner 90˚ off a horizontal arrangement. In this example, the suspension liquid has been removed from a part of the guiding channel around the detection section. By arranging the apparatus and thereby the guiding channel in a tilted manner, e.g. in a vertical manner (90˚ off a horizontal arrangement) or at angel of, e.g. 30˚ or 45˚, positioning the detection section at the upper half of the guiding channel, exposing the free surface of the suspension liquid inside the suspension liquid reservoir to the atmosphere, and positioning the suspension liquid reservoir such that the free surface of the suspension liquid inside the suspension liquid reservoir reaches the desired suspension liquid level inside the guiding channel. Hence, in this manner, the suspension liquid, e.g. an aqueous liquid or water, will run off the bead (which may, however, still contain water in the polymer matrix thereof), and the damping of the signal will be minimized.
The water reservoir (304) diverts aqueous liquid such as water to the water feeding section of the apparatus. The water in the water reservoir preferably has a free surface for ensuring a water pressure inside the guiding channel of approximately 1 bar.
The first water pump (305) is connected to the vacuum connecting piece of the apparatus for maintaining a vacuum inside the vacuum container. The vacuum ensures that beads remain firmly fixed to the capture disc of the vacuum container during transfer to a detection section. The transfer occurs when beads having been fixed to the capture disc of the vacuum container by the applied vacuum pressure are rotated in step-wise motions by the action of a stepper motor operated by a computer (307).
The radiofrequency code of beads are detected by a detection device (303) and optionally also stored on a data storage medium in a computer (307).
In one preferred embodiment of the present invention the operating radiofrequency code of the beads and the detection device is 2.45 GHz.
The computer (307), or a set of different computers, can be used for controlling the stepper motor, as well as controlling the detection device, storing data, analysing the data obtained, and controlling the piston valve at the unloading section.
A third water pump (310) generates a vacuum for removing beads from the capture disc at a sorting section. The removal of beads is ensured by the actions of a piston valve (308) connecting the vacuum of the third water pump to the sorting section. A second filter (309) can retain beads removed at the sorting section. A second water pump 311) generates a vacuum for removing beads not removed at the unloading section from the capture disc at the unloading section.

Operation of the bead sorting apparatus

The below sections describe the actions routinely performed when operating the above-described apparatus.
Initially, the computer (307) and the detection device are turned on. The valve (308) is closed and the water reservoir (304) is filled with demineralised water. The first water pump (304) is activated, whereby a pressure of less than 0.5 bar is maintained inside the vacuum container. The third water pump (310) is started whereby a pressure of 0.1 bar is maintained downstream from the second bead filter (309). The second water pump (311) is started whereby a pressure of 0.1 bar is maintained downstream from the first bead filter (312).
A computer program is run which controls the stepper motor (313), the valve (308), and the detection device, so that the vacuum body is rotated in a step-wise fashion and so that radiofrequency codes are obtained, stored, and analysed in the computer every time a capture hole is momentarily at rest in the detection section. The valve (308) is controlled on the basis of the result of the analysis of the codes, thereby enabling sorting of the beads.

Vacuum container

A detailed illustration of one preferred embodiment of a vacuum container and a vacuum container housing is provided in Figure 4. The vacuum container according to this embodiment preferably comprises:

a) a circular capture disc (416) comprising a plurality of a through going inlets (105) forming a circle close to the perimeter of the capture disc,
such as e.g. a 100 mm diameter and 5 mm thick capture disc with e.g. about 100 cylindrical or conically shaped through-going inlets (capture holes) having the same diameter or different diameters through the disc (depending on whether the inlet is a cylinder or a cone). When being conical in shape, the through going inlets can have a diameter of about 0.2 mm at the first side of the disc, and a diameter of about 2.0 mm at the second side of the

disc. The capture holes can e.g. be arranged along an 80 mm diameter circle 10 mm from the perimeter of the disc,

b) a circular capture disc support (415),
preferably having an outer diameter of about 100 mm, supporting the capture disc (416) at a distal end and being connected at a proximal end to

c) a hollow shaft (410),
preferably a hollow stainless steel shaft, wherein the shaft can have an outer diameter of about 6 mm and an inner diameter of about 4 mm, wherein the hollow shaft (410) is preferably fitted with a shaft hole (407) so that a vacuum (i.e. a pressure below 1 bar) can be applied to the interior of the vacuum container,

Capture disc holder of vacuum container

A cylindrical capture disc holder (415) makes it possible to apply a pressure drop over the disc. The capture disc holder (415) can have an outer diameter of e.g. 100 mm. The capture disc holder can support the disc at the perimeter of the disc while the central section of the capture disc holder is supported by a hollow shaft (410), preferably a hollow stainless steel shaft, through which shaft one can apply a first vacuum of less than e.g. 0.5 bar. The hollow stainless steel shaft (410) can have an outer diameter of about 6 mm and an inner diameter of about 4 mm.

Vacuum container housing

The vacuum container housing according to this embodiment serves the purposes of containing the dispersion liquid, holding the vacuum container in place, connecting the inside of the vacuum container to a vacuum, and transferring rotational momentum to the vacuum container.
The vacuum container housing in one embodiment preferably comprises:

a) an outer cylinder (303) for containing the dispersion liquid,

b) a vacuum pump connecting piece (404) therein for connecting the wet section (406) of the vacuum container housing to a suitable pump, such as e.g. a water pump for maintaining and controlling the vacuum inside the vacuum container,

c) a guiding plate (408) as illustrated in Figure 4, and optionally

d) a momentum transfer split (409) operably linked to a stepper motor (313) for transferring the momentum from the stepper motor to the vacuum container thereby causing the vacuum container to rotate in a controlled step-wise fashion.

A suitable means for stepwise rotating the disc is a stepper motor with e.g. 200 steps per round mounted on the shaft and arranged so that the motor causes the disc and the container to rotate around a common central axis. In this way, the capture holes are moved along a planar, circular path. The stepper motor comprises an electronic stepper motor controller for controlling the motion of the stepper motor.
The guiding plate preferably comprises a circular guiding channel, such as e.g. a 1 mm deep circular guiding channel having an outer diameter of e.g. about 81.5 mm and an inner diameter of e.g. about 78.5 mm carved therein, said guiding plate further comprising a number of through-going inlets for supplying and retracting beads, or more preferably dispersion liquid comprising beads, to and from the guiding channel of the guiding plate, wherein the guiding plate is optionally attached to a guiding plate holder (401) for holding the guiding plate.
The vacuum container and vacuum container housing can be constructed in different ways in order to serve the purpose of transferring beads from one section of utility to another. The construction is not critical as long as it permits the container to function according to the principles of the invention. In Figure 4 is illustrated a design based on a circular back plate (411), such as a circular stainless steel back plate (411), and a plurality of separation plates (412 - 414), such as circular stainless steel separation plates for separating dry sections (403, 405) from the wet sections (402, 406). The separation plates are preferably fitted with central through-going holes equipped with sealings for keeping the liquid from leaking from the wet sections to the dry sections. The plates are preferably further equipped with low friction bearings for ensuring low-friction and non-wobbling rotation of the shaft.
The individual components of a vacuum container comprise a) a circular capture disc comprising a plurality of a through-going inlets forming a circle close to the perimeter of the capture disc, b) a circular capture disc support supporting the capture disc at a distal end and being connected at a proximal end to c) a hollow shaft preferably fitted

with a shaft hole so that a vacuum can be applied to the interior of the vacuum container, and of a vacuum container housing comprising d) a stepper motor operably linked to a momentum transfer split for transferring the momentum from the stepper motor to the vacuum container thereby causing the vacuum container to rotate in a controlled step-wise fashion, and optionally further components, is disclosed in the following.

Figure 5 illustrates detailed side and top views of a capture disc of the vacuum container and vacuum container housing illustrated in Figure 4.

The capture body (416) can comprise e.g. a 100 mm diameter and 5 mm thick plastic disc comprising two planar, circular sides, a first and a second side. The capture holes (105) can comprise any suitable number of through-going inlets, such as e.g. about 100 cylindrical through-going inlets of varying diameter, the diameter being e.g. about 0.2 mm at the first side of the disc (to which the beads are attached), and the diameter being e.g. about 2.0 mm at the second side of the disc. In a preferred embodiment the number steps of the stepper motor is divisible by the number of capture holes, and the capture holes are equidistantly spaced, whereby it is obtained that all capture holes are at rest at the exact same positions.

The capture holes (through-going inlets) can e.g. be arranged along an 80 mm diameter circle positioned about 10 mm from the perimeter of the disc.

Utility sections of the apparatus for bead sorting

Loading section

The loading section (104) can comprise a volume of e.g. at least 1 $mm^3$, said volume being confined in an essentially cylindrical space extending from the surface of the first side of the disc and into the dispersion liquid and positioned at the circle described by the capture holes.

In a preferred embodiment the loading section comprises an elongated volume extending along the track of the capture holes for a distance corresponding to several times the average distance between neighbouring capture holes, such that at all times during the operation of the apparatus multiple capture holes, such as at least ten capture holes, are contained in the loading section, whereby the probability of a capture hole capturing a bead while traversing the loading section is increased compared to the case of a loading section containing only one capture hole at a time. In order to further increase the chance of capture holes capturing a bead inside the loading section the number of mobile beads in the loading section should be maximised. By "mobile beads" is meant beads that can be captured by a an empty passing capture hole by action of the flow of dispersion liquid towards the capture hole. At low numbers of beads (the bead number) the number of mobile beads (the mobile bead number) increases with increasing bead number up to a certain critical bead number, the clogging bead number, where beads become immobilised by friction and adhesion interactions with neighbouring beads and with the solid surfaces surrounding the loading section. Hence, the bead number in the loading section should be kept just below the clogging bead number. It should be noticed then, that the clogging bead number depends on various parameters, such as e.g. bead size, bead composition, dispersion liquid composition, dispersion liquid flow velocity, and loading section geometry. To avoid the bead capture rate from becoming the throughput limiting factor in the operation of the apparatus the mobile bead number should be maximised.

As already mentioned, the mobile bead number can be increased by increasing the clogging bead number. As an example this can be achieved by inducing static flow in the loading section, e.g. by stirring, such as stirring with a magnetic stirrer, or by infusing dispersion liquid at one end of the loading section and withdrawing dispersion liquid from the distal end of the loading section. In many cases a more pronounced effect can be achieved by inducing an alternating flow field.

A further obvious way of increasing the mobile bead number is to extend the loading section along the track of the capture holes. Obviously the length of the loading section is limited by the total length of the track of the moving capture holes. In the case of a circular capture hole track the total length of the capture hole track can be increased by increasing the diameter of the capture hole track. In cases where the capture holes are arranged along a circle in a capture disc the total length of the capture hole track can be increased by increasing the diameter of the capture disc. If for instance a 500 mm capture disc be used, a total of up to 500 capture holes can be arranged along a circle with 3 mm between neighbouring capture holes. The loading section can then be designed such that at least 400 capture holes be present in the loading section at all times during operation. This significantly increases the probability of a capture hole capturing a bead in the loading section compared to the case of a 100 mm diameter capture disc with the same inter-capture hole distance.

The unloading section (110) preferably also comprises an at least 1 $mm^3$ essentially cylindrical space extending from the surface of the first side of the disc and into the dispersion liquid and positioned at the circle described by the capture holes at e.g. 180˚ from the loading section.

Detection, analysis and unloading sections

The detection section can be defined by a 1 $mm^3$ spherical space extending from the surface of the first side of the disc and into the dispersion liquid. The detection section (106) for detecting radiofrequency codes, and optionally also analysing the data resulting from the detection, is preferably positioned on the circle perimeter defined by the capture holes at an angle of 90° from both the loading section (104) and the unloading section.

Accordingly, beads are transferred from the loading section via the detection section to the unloading section. The detection section is so positioned that the stepwise rotation of the disc causes a through-going inlet (capture hole) to which a bead is fixed to be stationary (i.e. not moving) when the bead fixed to the through-going inlet passes the detection section. This ensures that individual beads can be detected in "stationary mode" during the movements generated by the stepper motor.

Once the beads have passed through the detection section (106), they are optionally transferred by further step-wise rotation to an analysis section (607).

Once the beads have passed through the detection section (106) and optionally an analysis section (607), they need to be unloaded from the capture disc. In the embodiment disclosed in Figure 6 one unloading section (606) is illustrated, which serves to unload beads. Also, an unloading section (110) is illustrated in Figure 5 opposite to the loading section (104) in the illustrated embodiment.

When a bead enters the unloading section it is firmly fixed onto a through-going inlet of the disc due to the pressure drop over the inlet. Any type of pressure controlling equipment can be used in an unloading section for normalising the vacuum or, preferably, for generating a reverse pressure drop over the part of the disc which at any one time is positioned in the unloading section. The pressure-controlling equipment can e.g. comprise a pipe for unloading beads, preferably of stainless steel, having a length of e.g. about 20 mm and an inner diameter of e.g. about 1.1 mm.

The pipe comprises a first end and a second end, and the pipe is preferably positioned perpendicular to the first side of capture disc, the first end of the pipe pointing towards the first side of the disc and being positioned about 1 mm from the capture disc and entering the unloading section, the second end of the pipe being connected to a second vacuum of 0.1 bar, whereby a reverse pressure drop, $P_1' - P_2' = -0.4$ bar, is generated over the capture disc at the unloading section,

The different sections of the bead sorting apparatus are illustrated in more detail in Figure 6. It will be understood that the term "section" can refer to a part of the capture disc when said part is positioned in a predetermined location with respect to e.g. the stationary devices used for detecting, analysing and the like, including a predetermined stationary location, as the disc is rotated in a step-wise fashion during the operation of the apparatus.

With reference to Figure 6, the sections of utility can be e.g. a loading section (104), a detection section (106), an analysis section (607), and at least one unloading section (602, 606).

For example, the through-going capture inlet n will initially be located in the loading section for being loaded with a bead.

As the stepper motor rotates the disc a single step, the through-going capture inlet n will be rotated one step in the orientation of the rotation. At the same time, the through-going capture inlet n+1 will be located in the loading section for being loaded with a bead.

As the stepper motor rotates the disc another single step, the through-going capture inlet n+1 will be rotated one step in the orientation of the rotation. At the same time, the through-going capture inlet n+2 will be located in the loading section for being loaded with a bead, and so on.

As the stepper motor rotates the disc step-wise, the through-going capture inlet n will be rotated a plurality of steps in the orientation of the rotation. After a certain number of step-wise rotations, the through-going capture inlet n will have been rotated so many steps that it will be positioned in the detection section.

In the embodiment of the capture disc disclosed in Figure 6, the beads having been dispersed in a dispersion liquid are brought into contact with the capture disc at a bead feeding section (603) where the dispersed beads are diverted to the capture disc loading section (104), preferably via a guiding channel as illustrated in Figure 6.

In the loading section (104) the beads are sucked onto the through-going capture inlets of the capture disc, and non-captured beads are removed in an excess bead unloading section (601).

There is also provided a liquid feeding section (605) in which e.g. water can be diverted to the guiding channel generating a flow of water in a direction away from the water feeding section. Also provided in this embodiment is an excess-bead flushing section (604) for flushing any non-captured beads away from the flushing section and towards the bead feeding section, whereby it is obtained that only captured beads proceed from the excess-bead flushing section towards the detection section. Examples of non-captured beads include non-captured beads sticking to captured beads, non-captured beads sticking to the surface of the capture disc, non-captured beads sticking to the walls of the guiding channel, and freely flowing non-captured beads. In this way it is ensured that non-captured beads do not pass the water feeding section.

Sporting section

Once the beads have passed through the detection section (106) and an analysis section (408), they are optionally sorted into at least two fractions. In the embodiment disclosed in Figure 6 one sorting section (602) is illustrated, but more sorting sections are required in other embodiments. The sorting section (602) serves to remove certain beads from the capture body while leaving other beads to proceed to the unloading section.

Detailed disclosures of preferred embodiments of the sorting section are provided in Figures 8, 9, 10 and 11.

Figure 8 discloses the unloading section comprising an inlet in the guiding plate (408) fitted with a connecting piece (802) for forming a connection to a pump via a tubing (801). A stationary bead stopper (202), e.g. a PMMA bead stopper, is attached to one or more wall parts of the guiding channel, e.g. by a thin layer of glue, and blocks almost entirely the cross section of the guiding channel, thus ensuring that all beads (102) fixed to a capture hole (105) and entering the unloading section are unloaded from the capture disc (416). The stationary bead stopper at the same time keeps beads from passing from the loading section to the unloading section in the direction opposite the direction of the motion of the capture holes. This ensures that all beads pass the detection section on the way from the loading section to the unloading section.

The sorting section is illustrated in a preferred embodiment in Figure 9. The sorting section for unloading beads (102) from the capture disc (416) is located upstream of the unloading section and preferably comprises a through-going hole delimited by a cylinder (903) in the guiding plate (408) with a piston valve (902) positioned within the cylinder. The cylinder (903) has an inner diameter of about 1 mm and is arranged perpendicular to the guiding channel so that the extended axis of the piston valve projects through the centre of the capture holes (105) of the capture disc (416) for the period of time during which the capture disc is stationary in-between the step-wise rotation of the capture disc. The piston valve (902) positioned in the cylinder (903) serves to connect and disconnect a vacuum in the guiding channel generated by a water pump. Preferably, a connecting piece (901) connects the water pump to the piston valve via a tube. A computer can be used to control the state of the valve (open vs. closed).

In a further embodiment of the sorting section illustrated in Figure 10, the sorting section preferably comprises

- a first cylindrical through-going hole in the guiding plate with a cylindrical high pressure connecting piece (1003) therein comprising

- a first end extending from the surface of the guiding plate (408) for connecting the high pressure connecting piece to the outlet of a valve via a high pressure tube, the inlet of said valve being connected to a pressurised water source,

- a second end positioned 0.1 mm from the surface of the capture body (416),

- an interior high pressure volume (1004),

- a high pressure outlet (1005) near the surface of the capture body and positioned such that the distance between the high pressure outlet and a passing capture hole be at its minimum in the time interval between the steps-wise motion of the capture holes,
  whereby it is obtained that when the valve is open a captured bead is blown away from its capture hole by the flow caused by the pressure drop over the high pressure outlet without neighbouring beads being affected,

- a second cylindrical through-going hole in the guiding plate with a cylindrical vacuum connecting piece (1006) therein comprising

- a first end extending from the surface of the guiding plate (408) for connecting the vacuum connecting piece to a vacuum via a vacuum tube,

- a second end positioned 0.1 mm from the surface of the capture body,

- an interior vacuum volume (1001) with a diameter allowing for a bead to unhindered pass through the vacuum connecting piece, and

- a vacuum outlet (1002) near the surface of the capture body and positioned opposite the high pressure outlet of the high pressure connecting piece, said vacuum outlet connecting the vacuum volume to the guiding channel and having a cross section allowing for a bead to unhindered enter from the guiding channel to the vacuum volume,
  whereby it is obtained that a bead that has been blown away from its capture hole is drawn from the guiding channel and into the vacuum volume due to the flow caused by the pressure drop over the vacuum outlet, and removed

from the apparatus via the vacuum tube.

It is essential that the pressure drop over the vacuum outlet be sufficiently high for being able to draw away beads that have been blown from their capture holes from the guiding channel, yet sufficiently low to not remove captured beads from their capture holes.

In yet a further embodiment of the second, optional unloading section illustrated in Figure 11, the unloading section comprises

- a bead-displacing body (1101) contained inside a bead-displacing body container (1102) and restricted by a bead displacing body guiding channel (1101) connecting said bead-displacing body container to the guiding channel, said bead-displacing body container and said bead-displacing body guiding channel extending from the surface of the capture body (416) and a distance less than the thickness of the guiding plate into the guiding plate, said bead-displacing body guiding channel restricting the motion of said bead-displacing body such that said bead displacing body can move only in directions essentially perpendicular to the motion of the beads, and said bead-displacing body container restricting the motion of said bead-displacement body such that said bead-displacement body can only move a fixed distance in directions essentially perpendicular to the motion of the beads corresponding to a few bead diameters, and such that at one extreme of said restricted motion of said bead-displacing body said bead-displacing body extends across the track of the moving capture holes, and such that at the other extreme of said restricted motion of said bead-displacing body said bead-displacing body does not extend across the track of the moving capture holes and such that the shortest distance between the said bead-displacing body to the track of the moving capture holes be larger than the bead radius, and

- means for manipulating said bead-displacing body comprising
  a magnetic bead displacing body, and
  an electric coil positioned above said magnetic bead displacing body such that when a voltage is applied to said electric coil a magnetic field is generated that causes said magnetic bead-displacing body to move to said one extreme of said restricted motion of said bead-displacing body and such than when an opposite voltage is applied to said electric coil a magnetic field is generated that causes said magnetic bead-displacing body to move to said other extreme of said restricted motion of said bead-displacing body,
  whereby it is obtained that a bead can be displaced from its capture hole or not removed from its capture hole at the unloading section depending on the voltage applied to said electric coil,
  a second cylindrical through-going hole in the guiding plate with a cylindrical vacuum connecting piece (1006) therein comprising
  a first end extending from the surface of the guiding plate (408) for connecting the vacuum connecting piece to a vacuum via a vacuum tube,
  a second end positioned 0.1 mm from the surface of the capture body,
  an interior vacuum volume (1001) with a diameter allowing for a bead to unhindered pass through the vacuum connecting piece,
  a vacuum outlet (1002) near the surface of the capture body and positioned opposite the high pressure outlet of the high pressure connecting piece, said vacuum outlet connecting the vacuum volume to the guiding channel and having a cross section allowing for a bead to unhindered enter from the guiding channel to the vacuum volume,
  whereby it is obtained that a bead that has been blown away from its capture hole is drawn from the guiding channel and into the vacuum volume due to the flow caused by the pressure drop over the vacuum outlet, and removed from the apparatus via the vacuum tube.
  whereby it is obtained that beads can be sorted into two fractions, by controlling the voltage applied to the electric coil.

When both the unloading section and the sorting section are present the different sections are connected to different pumps or the same pump for generating a vacuum in the unloading section and sorting section, respectively.

Accordingly, using the apparatus for bead sorting disclosed herein above it is possible to perform a method wherein

a) beads are dispersed in dispersion liquid, thereby providing a dispersion comprising the beads to be measured and sorted,

b) the stepper motor is started, whereby the vacuum container comprising the capture disc is rotated in a step-wise manner in the direction indicated by the arrow in Figure 5,

c) the vacuum container comprising the capture disc is submerged in dispersion liquid,

d) a first and a second vacuum is applied to the vacuum container and to the pipe for unloading beads by activating suitable pressure-controlling devices including pumps,

e) dispersion comprising the dispersed beads is fed to the loading section of the apparatus, the beads being confined to a circular volume contacting the first surface of the capture disc by a stationary circular channel, such as a 1.1 mm deep and 1 mm wide stationary circular channel carved in a guiding plate and extending from the surface of the first surface of the disc and running along the perimeter of the circle defined by the capture holes: The capture holes are positioned in the middle part of the channel, whereby the beads are sucked onto the capture disc, essentially only one bead being captured at each capture hole.

f) individual beads are transferred along a circular path through the detection section, where the radiofrequency code of the beads is detected.

g) individual beads are further transferred to the unloading section where they are unloaded and removed from the capture disc through the pipe.

*Methods of the invention*

In a further main aspect, the invention relates to a method for detecting a radiofrequency code of at least one bead of a plurality of beads, said method comprising the steps of

i) providing a plurality of beads, preferably spherical beads, each comprising a radiofrequency code,

ii) providing an apparatus as defined herein for analysing a plurality of radiofrequency-identifiable beads,

iii) contacting at least one bead of the plurality of beads provided in step i) with the vacuum container capture body of the apparatus provided in step ii),

iv) rotating the capture body to transfer at least one bead from the loading section of the vacuum container to the detection section of the vacuum container, and

v) using the detection device of the apparatus for determining the radiofrequency code of the at least one bead.

In another main aspect, the invention relates to a method for identifying at least one bead of a plurality of beads, said method comprising the steps of

i) providing a plurality of beads, preferably spherical beads, each comprising a radiofrequency code,

ii) providing an apparatus as defined herein for analysing a plurality of spherical radiofrequency-identifiable beads,

iii) contacting at least one bead of the plurality of beads provided in step i) with the vacuum container capture body of the apparatus provided in step ii),

iv) rotating the capture body to transfer at least one bead from the loading section of the vacuum container to the detection section of the vacuum container,

v) using the detection device of the apparatus for detecting the radiofrequency code of the at least one bead,

vi) using the analysing device for analysing data generated by the detection device, and

vii) identifying at least one bead of a plurality of beads by analysing the data generated by the detection device.

In a further main aspect, the invention relates to a method for sorting at least one bead of a plurality of beads, said method comprising the steps of

i) providing a plurality of beads, preferably spherical beads, each comprising a radiofrequency code,

ii) providing an apparatus as defined herein for sorting a plurality of beads,

iii) contacting at least one bead of the plurality of beads provided in step i) with the vacuum container capture body of the apparatus provided in step ii),

iv) rotating the capture body to transfer at least one bead from the loading section of the vacuum container to the detection section of the vacuum container,

v) using the detection device of the apparatus for detection the radiofrequency code of said at least one bead,

vi) using the analysing device for analysing data generated by the detection device, and

vii) sorting the at least one bead of a plurality of beads based on the result of the analysis performed in step vi).

Each of the above methods, i.e. the method for detecting, the method for identifying and the method for sorting, can be part of a method for treating at least one bead of a plurality of beads, said method comprising carrying out the steps of one of the above methods and the further step of treating at least one bead of a plurality of beads, preferably based on the identification.

In a further main aspect, the invention relates to a method for treating at least one bead of a plurality of beads, such as polymer beads, said method comprising the steps of

i) providing a plurality of beads, preferably spherical beads, each comprising a radiofrequency code,

ii) providing an apparatus as defined herein for treating at least one bead,

iii) contacting at least one bead of the plurality of beads provided in step i) with the vacuum container capture body of the apparatus provided in step ii),

iv) rotating the capture body to transfer at least one bead from the loading section of the vacuum container to the detection section of the vacuum container,

v) using the detection device of the apparatus for detection the radiofrequency code of at least one bead,

vi) analysing data generated by the detection device, and

vii) treating at least one bead of a plurality of beads based on the result of the analysis performed in step vi).

In preferred embodiments of the above methods of the invention, the radiofrequency code of the at least one bead is detected within a time period of between 1 millisecond and 1 second, preferably between 10 milliseconds and 100 milliseconds, such as 50 milliseconds.

Furthermore, in preferred embodiments of the above methods of the invention, a total of more than 4000 beads is detected per hour, such as more than 5000 beads per hour, for example more than 10,000 beads per hour, such as more than 15,000 beads per hour, for example more than 20,000 beads per hour such as more than 25,000 beads per hour, for example more than 30,000 beads per hour such as more than 40,000 beads per hour, for example more than 50,000 beads per hour such as more than 60,000 beads per hour, for example more than 70,000 beads per hour, such as more than 80,000 beads per hour, for example more than 90,000 beads per hour such as more than 100,000 beads are detected per hour.

In further preferred embodiments of the above methods, the distance between the detection device and the at least one bead is between 0.1 mm and 5 mm, such as about 0.5 mm, during the detection.

In further preferred embodiments, the step of treating at least one bead of a plurality of beads comprises exposing the at least one bead to at least one chemical building block under reaction conditions suitable for the reaction of said building block.

*Applications of the invention*

A number of uses of the present invention are envisaged.

Thus, in a further main aspect, the invention relates to a method for recording individual reaction steps involved in the step-wise synthesis of a chemical compound on a radiofrequency-detectable bead, said method comprising the steps of

i) immobilising a radiofrequency chip in each of a plurality of beads, e.g. as described herein,

ii) isolating, preferably by automated selection, at least a subset of the beads provided in step a),

iii) recording and storing a radiofrequency identification number for each bead,

iv) step-wise synthesising chemical compounds on functional groups present on the beads, wherein the identity of each bead is recorded and stored for each reaction step, and

v) obtaining for each bead a record of the individual reaction steps.

In another main aspect, the invention relates to a method for identifying a chemical compound having been synthesised on a radiofrequency-detectable bead, said method comprising the steps of

i) performing the recording method described above,

ii) selecting beads of interest by using an assay or a diagnostic screen selective for the chemical compound having been synthesised on the bead,

iii) recording the radiofrequency code for each of the beads selected in step ii),

iv) comparing the radiofrequency code recorded in step iii) with all of the radiofrequency codes recorded and stored in step iii) of the method above, thereby obtaining information about the identity of the selected bead,

v) identifying for each selected bead the sequence of individual steps having lead to the synthesis of the chemical compound, and

vi) identifying, based on the sequence of individual steps, the chemical structure of the compound.

In a preferred embodiment, the assay is a binding assay performed by measuring the binding of a protein to a ligand bound to the bead.
In another preferred embodiment, the assay is performed by measuring an enzyme activity on a substrate bound to the bead.
In a further preferred embodiment, the assay is performed by measuring enzyme inhibition of a molecule bound to the bead.
In an even further preferred embodiment, the assay is performed by measuring receptor interaction with a compound bound to the bead.
In preferred embodiments of the above application methods, the bead is a bead from a composition of the invention as defined hereinabove.

*Method for deconvoluting a conventional library*

In a further aspect, the invention provides a method for synthesising and deconvoluting a combinatorial library comprising the steps of:

(a) apportioning in a stochastic manner among a plurality of reaction vessels a plurality of beads on which a plurality of different compounds can be synthesised, wherein said plurality of beads comprises a population of detectably distinct beads each having a radiofrequency code, which distinctively identifies a respective bead before, during and after said synthesis from other beads,

(b) determining and recording the codes of said plurality of beads in order to track the movement of individual detectably distinct beads into particular reaction vessels of said plurality of reaction vessels, wherein said codes are determined prior to step (d);

(c) reacting the beads in each reaction vessel with a building block;

(d) pooling the beads from each reaction vessel;

(e) apportioning the beads in a stochastic manner among the plurality of reaction vessels;

(f) reacting the beads in each reaction vessel with another building block;

(g) recording the codes of said plurality of beads in order to track the movement of individual detectably distinct beads into particular reaction vessels of said plurality of reaction vessels, wherein said codes are recorded after step (e) and/or step (f);

(h) pooling the beads from each reaction vessel;

(i) iterating steps (e) through (h) as required in order to create a combinatorial compound library wherein member compounds of the library are associated with the detectably distinct beads and wherein codes of the detectably distinct beads are deconvolutable using tracking data provided by said recordal steps to identify the sequence of reactions experienced by the said detectably distinct beads.

The identification steps (step (c) and (d)) may be effected by use of any suitable method or apparatus for analysing the radiofrequency code of a bead.

*Building block reactions*

The beads of the compositions of the invention are applicable to any type of chemical reaction that can be carried out on a solid support. Such chemical reaction includes, for example:

1. 2+2 cycloadditions including trapping of butadiene;
2. [2+3] cycloadditions including synthesis of isoxazolines, furans and modified peptides;
3. acetal formation including immobilisation of diols, aldehydes and ketones;
4. aldol condensation including derivatisation of aldehydes, synthesis of propanediols;
5. benzoin condensation including derivatisation of aldehydes;
6. cyclocondensations including benzodiazepines and hydantoins, thiazolidines, -turn mimetics, porphyrins, phthalocyanines;
7. Dieckmann cyclisation including cyclisation of diesters;
8. Diels-Alder reaction including derivatisation of acrylic acid;
9. Electrophilic addition including addition of alcohols to alkenes;
10. Grignard reaction including derivatisation of aldehydes;
11. Heck reaction including synthesis of disubstituted alkenes;
12. Henry reaction including synthesis of nitrile oxides in situ (see 2+3 cycloaddition);
13. catalytic hydrogenation including synthesis of pheromones and peptides (hydrogenation of alkenes);
14. Michael reaction including synthesis of sulfanyl ketones, bicyclo] 2.2.2] octanes;
15. Mitsunobu reaction including synthesis of aryl ethers, peptidyl phosphonates and thioethers;
16. nucleophilic aromatic substitutions including synthesis of quinolones;
17. oxidation including synthesis of aldehydes and ketones;
18. Pausen-Khand cycloaddition including cyclisation of norbornadiene with pentynol;
19. photochemical cyclisation including synthesis of helicenes;
20. reactions with organo-metallic compounds including derivatisation of aldehydes and acyl chlorides;
21. reduction with complex hydrides and Sn compounds including reduction of carbonyl, carboxylic acids, esters and nitro groups;
22. Soai reaction including reduction of carboxyl groups;
23. Stille reactions including synthesis of biphenyl derivatives;
24. Stork reaction including synthesis of substituted cyclohexanones;
25. reductive amination including synthesis of quinolones;
26. Suzuki reaction including synthesis of phenylacetic acid derivatives; and
27. Wittig, Wittig-Horner reaction including reactions of aldehydes; pheromones and sulfanyl ketones.

Reference may also be made to Patel et al., (April 1996, DDT 1 (4): 134-144) who describe the manufacture or synthesis of N-substituted glycines, polycarbarnates, mercaptoacylprolines, diketopiperazines, HIV protease inhibitors, 1-3 diols, hydroxystilbenes, B-lactams, 1,4-benzodiazepine-2-5-diones, dihydropyridines and dihydropyrimidines. Reference may also be made to synthesis of polyketides as discussed, for example, in Rohr (1995, Angew. Int. Ed. Engl. 34: 881-884).

Chemical or enzymatic synthesis of the compound libraries of the present invention takes place on beads. Thus, those of skill in the art will appreciate that the materials used to construct the beads are limited primarily by their capacity for derivatisation to attach any of a number of chemically reactive groups and compatibility with the chemistry of compound synthesis. Except as otherwise noted, the chemically reactive groups with which such beads may be derivatised are those commonly used for solid state synthesis of the respective compound and thus will be well known to those skilled in the art. For example, these bead materials may be derivatised to contain functionalities or linkers including-$NH_2$, -$NHNH_2$, - $ONH_2$, -COOH, -SH, -SeH, -$SO_3H$, -GeH, or -$SiR_2H$ groups.

It will also be appreciated that compounds prepared with the beads and/or process of the present invention may be screened for an activity of interest by methods well known in the art. For example, such screening can be effected by specialised flow cytometry invented from standard techniques such as described e.g. by Needels et al. (1993, Proc. Natl. Acad. Sci. USA 90: 10700-10704, incorporated herein by reference), Dower et al. (supra), and Kaye and Tracey (WO 97/15390, incorporated herein by reference).

*Synthesis of a combinatorial compound library*

A combinatorial library in accordance with the present invention is a collection of multiple species of chemical compounds comprised of smaller subunits or monomers. Combinatorial libraries come in a variety of sizes, ranging from a few hundred to many hundreds of thousand different species of chemical compounds. There are also a variety of library types, including oligomeric and polymeric libraries comprised of compounds such as peptides, carbohydrates, oligonucleotides, and small organic molecules, etc. Such libraries have a variety of uses, such as immobilisation and chromatographic separation of chemical compounds, as well as uses for identifying and characterising ligands capable of binding an acceptor molecule or mediating a biological activity of interest.

The library compounds may comprise any type of molecule of any type of subunits or monomers, including small molecules and polymers wherein the monomers are chemically connected by any sort of chemical bond such as covalent, ionic, coordination, chelation bonding, etc., which those skilled in the art will recognise can be synthesised on a solid-phase support

Various techniques for synthesising libraries of compounds on solid-phase supports are known in the art. Solid-phase supports are typically polymeric objects with surfaces that are functionalised to bind with subunits or monomers to form the compounds of the library. Synthesis of one library typically involves a large number of solid-phase supports.

To make a combinatorial library, solid-phase supports are reacted with a one or more subunits of the compounds and with one or more numbers of reagents in a carefully controlled, predetermined sequence of chemical reactions. In other words, the library subunits are "grown" on the solid-phase supports. The larger the library, the greater the number of reactions required, complicating the task of keeping track of the chemical composition of the multiple species of compounds that make up the library. Thus, it is important to have methods and apparatuses which facilitate the efficient production of large numbers of chemical compounds, yet allow convenient tracking of the compounds over a number of reaction steps necessary to make the compounds.

Combinatorial libraries represent an important tool for the identification of e.g. small organic molecules that affect specific biological functions. Due to the interaction of the small molecules with particular biological targets and their ability to affect specific biological functions, they may also serve as candidates for the development of therapeutics. Accordingly, small molecules can be useful as drug leads eventually resulting in the development of therapeutic agents.

Because it is difficult to predict which small molecules will interact with a biological target. intense efforts have been directed towards the generation of large numbers, or "libraries", of small organic compounds. These libraries can then be linked to sensitive screens to identify the active molecules.

A number of libraries have been designed to mimic one or more features of natural peptides. Such peptidomimetic libraries include phthalimido libraries (WO 97/22594), thiophene libraries (WO 97/40034), benzodiazopene libraries (U.S. Pat. No. 5,288,514), libraries formed by the sequential reaction of dienes (WO 96/03424), thiazolidinone libraries, libraries of metathiazanones and their derivatives (U.S. Pat. No. 5,549,974), and azatide libraries (WO 97/35199) (for review of peptidomimetic technologies, see Gante, J., Angew. Chem. Int. Ed. Engl. 1994, 33, 1699-1720 and references cited therein).

The present invention also resides in a method of synthesising and deconvoluting a combinatorial library as described herein above. The codes of the plurality of beads are determined preferably before the first reaction step, although codes may be determined at any time before the first pooling step. Preferably, every time the plurality of beads is apportioned into reaction vessels, each one of the vessels is analysed to determine which of the detectably distinct

beads are in each reaction vessel. A database of all the beads (or corresponding gridspaces, supra) can thus be updated to show the synthetic history of the compound synthesised on each bead.

During a reaction step, the beads in each reaction vessel are reacted with a building block required to assemble a particular compound. Assembly of compounds from many types of building blocks requires use of the appropriate coupling chemistry for a given set of building blocks. Any set of building blocks that can be attached to one another in a step-by-step fashion can serve as the building block set. The attachment may be mediated by chemical, enzymatic, or other means, or by a combination of these. The resulting compounds can be linear, cyclic, branched, or assume various other conformations as will be apparent to those skilled in the art. For example, techniques for solid state synthesis of polypeptides are described, for example, in Merrifield (1963, J. Amer. Chem. Soc. 35: 2149-2156). Peptide coupling chemistry is also described in "The Peptides", Vol. 1, (eds. Gross, E., and J. Meienhofer), Academic Press, Orlando (1979), which is incorporated herein by reference.

To synthesise the compounds, a large number of the beads are apportioned among a number of reaction vessels. In each reaction, a different building block is coupled to the growing oligomer chain. The building blocks may be of any type that can be appropriately activated for chemical coupling, or any type that will be accepted for enzymatic coupling. Because the reactions may be contained in separate reaction vessels, even building blocks with different coupling chemistries can be used to assemble the oligomeric compounds (see, The Peptides, op. cit). The coupling time for some of the building block sets may be long. For this reason the preferred arrangement is one in which the building block reactions are carried out in parallel. After each coupling step, the beads on which are synthesised the oligomers or compounds of the library are pooled and mixed prior to re-allocation to the individual vessels for the next coupling step. This shuffling process produces beads with many oligomer sequence combinations. If each synthesis step has high coupling efficiency, substantially all the oligomers on a single bead will have the same sequence. That sequence is determined by the synthesis pathway (building block reactions and the order of reactions experienced by the beads) for any given bead. The maximum length of the oligomers may be about 50, preferably from 3 to 8 building blocks in length, and in some cases a length of 10 to 20 residues is preferred. Protective groups known to those skilled in the art may be used to prevent spurious coupling (see, The Peptides, op cit.).

With enough beads and efficient coupling it is possible to generate complete sets of certain oligomers, if desired. The appropriate size of the beads depends on (1) the number of oligomer synthesis sites desired; (2) the number of different compounds to be synthesised (and the number of beads bearing each oligomer that are needed for screening); (3) the effect of the size of the beads on the specific screening strategies e. g. fluorescence-activated cell sorters (FACS) to be used; and (4) the resolution of the encoding/detection methods employed.

*Further uses of the invention*

As described above a highly preferred use of the compositions of the invention is the use for the synthesis of a combinatorial chemistry library and/or a solid-phase combinatorial library.

Also relevant is the use of the combinatorial chemistry library defined above for the screening of bioactive compounds and/or drug discovery and/or affinity-ligand discovery.

The compositions may further be used in diagnostic method, e.g. as carriers for particular ligands or capture probes.

The compositions may also be used for animal tracking, e.g. by implanting a one or more beads of a composition into each of a plurality of animals so as to keep track of the animals. It should be understood that this is particularly useful for small animals.

*Spherical encoded polymer bead with ultrasound identification chips*

The current inventors have further developed certain polymer beads which are particularly useful for identification when suspended in aqueous liquids, such as water. The present inventors envisage that such polymer beads are particular useful in the processes described in detail above and in connection with the apparatus (possibly suitable modified to include an ultrasound transmitter and a corresponding ultrasound receiver) described above, or more generally the apparatus of the type disclosed in WO 2005/062018 A2.

Thus, the present invention also provides a spherical polymer bead comprising embedded therein an ultrasonic identification chip, said chip comprising one or more resonator cavities, the dimensions of each of the one or more resonator cavities giving rise to a ultrasonic resonance frequency of 20 kHz or more.

The spherical polymer bead can be identified by acoustic waves in the ultrasonic range, i.e. above 20 kHz. One advantage of acoustic waves for use in aqueous environments is the fact that acoustic waves propagate through water at very low losses. Especially the frequency range of 100-10,000 kHz is useful for identification of the above-described beads suspended in water.

The preparation of the ultrasonic identification chip can be accomplished according to the guidelines given in

Rønnekleiv et al. (submission at the 2005 IEEE Int. Ultrasonics Symp., Sept. 18-21, 2005, Rotterdam, The Netherlands).

A large number of such microstructered chips can be manufactured by standard lithographic techniques known to persons skilled in the art. As an example, on the order of 100,000 quadratic chips with side length 0.5 mm can be made from one 200 mm diameter silicon wafer.

The preparation of the spherical beads can be accomplished as described hereinabove for the radiofrequency-encoded beads.

In a preferred embodiment of the present invention, the ultrasonic identification chip comprises a top coating layer (1901), a microstructured layer with at least one through-going hole, each forming the walls of a cavity (1902), and a sealing layer (1903), the top coating layer and the sealing layer forming respective end-walls of said cavities, cf. Figure 19(a). The microstructured layer is placed in-between the top coating layer and the sealing layer such that the cavities are sealed at one end by the top coating layer and at the other end by the sealing layer. All cavities are of same shape but of different size.

In one embodiment of the present invention 13,104 ultrasonic chips are embedded inside spherical beads - one chip in each bead - by methods provided by the present invention. The beads are 1.5-3.0 mm in diameter. All the chips are squares with side length 1 mm. Each chip differs from the others by having a unique combination of number of cavities and cavity side lengths. The number of cavities range from 1 to 6, and independently the side cavity side lengths are chosen from six values in the range from 100-160 micrometers. The resulting set of chips have from 1 to 6 distinct resonance frequencies in the range from 200-600 kHz with each bead having a unique set of resonance frequencies.

In one embodiment of the invention, each of the one or more resonator cavities gives rise to a resonance frequency of in the range of 20-10,000 kHz, such as in the range of 100-10,000 kHz, in particular in the range of 500-8,000 kHz or in the range of 100-2,500 kHz.

The minimum size of the chips depends on the number of different codes needed and the frequency used for reading the code. The number of different codes possible, N, is given by,

$$N = \sum_{n=1}^{L} M! / ((M-n)!\ n!),$$

where L is the number of different resonance frequencies detectable, and M is the maximum number of cavities on each chip.

An approximate correlation between the size of a cavity, d, and its resonance frequency, $f_r$ can be used,

$$f_r = k_1 \exp(-k_2\ d),$$

where $k_1$ and $k_2$ can be determined by fitting to experimental data. The data presented by Rønnekleiv et al. at the 2005 IEEE Int. Ultrasonics Symp., Sept. 18-21, 2005, Rotterdam, The Netherlands, is well approximated by $k_1$ = 280 and $k_2$ = 0.002 in the range 200-400 kHz. Inserting these values of $k_1$ and $k_2$ in the above expression and extrapolating to higher frequencies result in the following set of correlating $f_r$ and d values:

| $f_r$ (kHz) | d (micrometers) |
|---|---|
| 200 | 188 |
| 500 | 103 |
| 1000 | 38 |
| 1500 | 14 |
| 2000 | 5 |

From these values it can be seen that a cavity of about 5 μm has a resonance frequency of in on the order of 2,000 kHz.

In one embodiment, of the present invention 125,673 ultrasonic chips are embedded inside spherical beads - one chip in each bead - by methods provided herein. The beads are 0.7-1.4 mm in diameter. All the chips are squares with side length 0.5 mm. Each chip differs from the others by having a unique combination of number of cavities and cavity side lengths. The number of cavities ranges from 1 to 9, and independently the side cavity side lengths are chosen from 9 values in the range from 60-100 μm. The resulting set of chips have from 1 to 9 distinct resonance frequencies

in the range 100-1,000 kHz with each bead having a unique set of resonance frequencies.

In one embodiment of the present invention, which is illustrated in Figure 19, the ultrasonic chip comprises a silicon nitride top coating layer of 1 micrometer thickness (1901) on a microstructured silicon layer (1902) on a glass sealing layer (1903). The microstructured layer comprises quadratic cavities of various side lengths. In Figure 19(b), the side length in micrometers of each cavity is given by the number indicated for each cavity. Each cavity gives rise to a specific resonance frequency. The chip in Figure 19 gives rise to nine distinct resonance frequencies in the range 500-1,000 kHz.

In yet another embodiment of the present invention, about one million ultrasonic chips are embedded inside spherical beads - one chip in each bead - by methods provided by the present invention. The beads are 0.4-0.6 mm in diameter. All the chips are squares with side length 0.2 mm and thickness 0.1 mm. Each chip differs from the others by having a unique combination of number of cavities and cavity side lengths. The number of cavities ranges from 1 to 10, and independently the cavity side lengths are chosen from 10 values in the range from 5-30 $\mu$m. The resulting set of chips have from 1 to 10 distinct resonance frequencies in the range 1,000-5,000 kHz with each bead having a unique set of resonance frequencies.

The present invention also provides methods for reading ultrasonic encoded beads. In one preferred embodiment the bead sorting apparatus is equipped with at least one ultrasonic transmitter and at least one ultrasonic receiver. By positioning two or more pairs of transmitters and receivers at different positions along the guiding channel of the bead sorting apparatus, it is obtained that the ultrasonic chip can be read by at least one such transmitter-receiver pair regardless of the angular orientation of the ultrasonic chip.

The ultrasonic code of ultrasonic encoded bead is measured with the use of the bead sorting apparatus equipped with ultrasonic transmitter-receiver pairs according to the present invention. When an ultrasonic encoded bead is at rest in front of one of said ultrasonic transmitters in-between the step-wise rotation of the capture disc the ultrasonic transmitter transmits an ultrasonic sweep in the frequency range 100 - 1000 kHz. The corresponding ultrasonic receiver records the ultrasonic signal emitting from the ultrasonic encoded bead. The bead identity is derived from the set of signals recorded of each bead by the full set of receivers of the apparatus.

EXAMPLES

*Example 1: Handling and detection of radiofrequency encoded polymer beads.*

A bead analysis apparatus with auxiliaries for controlling the bead handling is constructed comprising (numbers referring Figure 7):

a rotating vacuum container comprising:

- a 100 mm diameter POM capture disc with 100 equidistant 0.2 mm diameter capture holes, arranged along an 80 mm diameter circular track running 10 mm from the edge of the capture disc, the capture disc being positioned with its planar surfaces vertical,
- a 100 mm outer diameter POM capture disc holder for holding the capture disc and for containing the vacuum inside the vacuum container, and
- a 5 mm outer diameter and 3 mm inner diameter stainless steel shaft with a hole therein for applying a vacuum,

a vacuum container housing comprising:

- a stainless steel cylinder (306) of inner diameter 10.2 mm surrounding the vacuum container,
- a stainless steel circular back plate with a central through-going hole therein for connecting the shaft of the vacuum container to a stepper motor,
- three stainless steel separation plates for separating the dry and wet sections of the interior of the cylinder, each separation plate having one central hole equipped with a sealing bearing for holding the shaft of the vacuum container and ensuring smooth rotation of the vacuum container,
- a through-going inlet in the side of the stainless-steel cylinder equipped with a connecting piece and being connecting to a first gear pump (Ismatech MCP-Z) via a 4 mm inner diameter flexible tube for applying a vacuum to the vacuum container,

a PMMA circular front plate comprising:

- a 3 mm wide and 1 mm deep guiding channel centered above the capture holes of the capture disc for guiding the beads,
- three detection sections at the 10, 11, and 12 o'clock position of the guiding channel each comprising a through-going cylindrical holes of 2 mm diameter in the guiding plate with radiofrequency antenna of diameter 2 mm and length 2 mm inserted therein at respective angles 90˚, 45˚, and 45˚ to the plane of the capture disk and at respective angles 0˚, 0˚, and 45˚ to the horizontal plane (see figure 15), whereby it is obtained that the three antenna will point at passing beads from different directions and it is ensured that all radiofrequency encoded beads passing the radiofrequency antenna will be successfully identified regardless of the orientation of the radiofrequency chip within the beads,
- three water-feeding holes in the guiding plate at the respective positions 2.30, 3, and 6 o'clock of the guiding channel equipped with connecting pieces and connected via 2 mm inner diameter silicone tubes to a water reservoir with a free surface for maintaining 1 bar pressure inside the main volume of the guiding channel,
- a bead feeding hole in the guiding plate at the 4.30 o'clock position of the guiding channel equipped with a connecting piece and connected to a 5 mL manually operated bead feeding syringe containing an aqueous dispersion of beads,

an unloading section comprising:

- a bead removal hole in the guiding plate at the 7.30 o'clock position of the guiding channel equipped with a connecting piece and connected to the one end of a cylindrical unloading bead container, the other end of the unloading bead container being connected to a gear pump (Ismatech Reglo-z) for supplying a vacuum at the removal hole, the unloading bead container further being equipped with a filter for retaining unloaded beads, and/or
- a bead stopper inserted in the guiding channel and arranged such that beads are forced away from the capture disc when entering the unloading section,

means for rotating the vacuum container comprising:

- a stepper motor (VEXTA PH265-01) (313) mounted on the outside of the back plate and being connected to the shaft of the vacuum container through the hole in the back plate,

bead handling apparatus auxiliaries comprising:

- a stepper motor controller (702) that causes the stepper motor to rotate anticlockwise in steps of 3.6˚, i.e., 100 steps per round, corresponding to one step per capture hole,
- a pulse generator (TTi TGP110) (703) with its main output terminal connected to the input of the stepper motor controller whereby it is obtained that the stepper motor rotates 3,6˚ for every electric pulse generated by the pulse generator,
- a water reservoir, which can be raised and lowered,

means for reading the radiofrequency chip of the beads comprising

- three radiofrequency antenna being arranged such that radiofrequency chips of the beads can be probed from three directions in the detection section,
- a radiofrequency antenna controller with its input terminal connected to the AUX output terminal of the pulse generator such that the beads positioned at the 10, 11, and 2 o'clock positions are probed by the radiofrequency antenna when the capture disc is at rest in-between every step of the capture disc.

The bead sorting apparatus and auxiliaries described above are operated in the following way:

The first gear pump is started at 2500 rpm whereby a vacuum is generated inside the vacuum container whereby water is drawn from the guiding channel into the capture holes whereby the pressure inside the guiding channel is lowered and whereby water is drawn from the water reservoir into the water-feeding holes.

The second gear pump is started at 20% of maximum rotational speed whereby water is drawn from the unloading section of the guiding channel through the unloading bead container towards the second gear pump.

The pulse generator is started in continuous single pulse mode at 0.5 seconds between pulses and a pulse width of 0.5 milliseconds whereby the axis of the stepper motor is caused to rotate 3.6˚ every 0.5 seconds.

The bead feeding syringe is gently shaken in order to evenly disperse the beads in the water whereafter approximately 0.1 mL of the bead dispersion is infused into the guiding channel through the feeding hole.

The radiofrequency antenna are operated in automatic gain control mode, whereby the highest obtainable signal-to-noise ratio is obtained. The signals from the three antenna are sampled such that the triple measurements on each bead are sampled and identified on the basis of the three measurements.

The operation of the bead sorting apparatus described above results in a portion of the beads being transported from the bead feeding syringe to the unloading bead container, and in a sequence of identifications of radiofrequency-encoded beads.

Once the majority of capture holes have become occupied with beads the water level inside the bead sorting apparatus is lowered, such that the upper half of the capture surface is above water, whereby it is obtained that beads positioned inside the analysis section are surrounded by air instead of water. This is advantageous because air does not absorb the radiofrequency electromagnetic radiation used for identifying the beads.

The present method is easily up-scaled in terms of total number of beads measured by keeping the pulse generator running and by repeating the infusion of suspended beads at suitable time intervals such as every 140 seconds. Furthermore, the throughput of the current method can be increased by lowering the time between pulses generated by the pulse generator and reducing the time interval between infusion of suspended beads.

*Example* 2: *Upscaled handling and identification of radiofrequency encoded polymer beads.*

The bead handling apparatus and auxiliaries described in Example 1 were operated with the following operation parameters:

The first gear pump was running at 2500 rpm.

The second gear pump was running at 40% of maximum rotational speed.

The pulse generator was running in continuous single pulse mode with 0.25 seconds between pulses and a pulse width 0.5 milliseconds.

The bead feeding syringe was mounted on a syringe pump set to run in continuous withdrawal/infusion mode with volume setting 0.1 mL and rate setting 1.0 mL/min. It was noted that the actual volume of infused bead dispersion per withdrawal/infusion cycle was substantially less than the nominal value of 0.1 mL due to the combined mechanical bias of the syringe mounting and of the flexible plastic syringe itself.

The operation of the bead handling apparatus described above results in a portion of the beads being transported from the bead feeding syringe to the unloading bead container, and in a sequence of identifications of radiofrequency encoded beads.

The problem with more than one bead captured at a capture hole can be overcome by sorting away the more than one captured beads by methods described elsewhere in the present invention and run them through the apparatus a second time.

*Example* 3. *Total-fluorescence-based bead sorting*

In order to develop novel ligands for use in chromatographic purification of proteins, a ligand library is prepared by the following method:

<u>Compound synthesis</u>

200,000 PEGA-type polymer beads with diameters in the range 0.5 - 0.7 mm are subjected to a four step solid phase split-process-recombine combinatorial synthesis route involving ten different building blocks per step, whereby approximately 10,000 compounds, here ligands, are generated, each bead carrying one ligand, and each ligand being

carried by 20 beads on the average.

In order to evaluate the affinity of the ligands towards a specific protein, the beads are exposed to an aqueous solution of a fluorescence labelled modification of the protein and subsequently weakly adhering fluorescence labelled protein is removed by washing. Now the beads that carry a ligand with high affinity towards the fluorescence labelled protein are strongly fluorescent, whereas beads carrying low affinity ligands are weakly fluorescent or non-fluorescent.

The bead handling apparatus with auxiliaries described in example 1 is modified in the following way: The radiofrequency antenna are replaced by an optical fibre connected at one end to a imaging window of the detection section at the 12.30 o'clock position of the front plate and at the other end to a photo-multiplier tube (PMT) equipped with a fluorescence emission filter for blocking the laser light and transmitting the fluorescence emission and further equipped with an electronic amplifier for amplifying the electronic output from the PMT and an A/D-converter for converting the analogues signal from the amplifier into a digital signal (measuring result).

The bead handling apparatus from example 1 is further equipped with a sorting section at the 10.30 o'clock position comprising a

- a first cylindrical through-going hole in the guiding plate with a cylindrical high pressure 2 mm inner diameter connecting piece (1003) therein comprising

- a first end extending 5 mm above the surface of the guiding plate (408) and connected to the outlet of a sorting valve, such as a 2/2-way mini Flipper Solenoid Valve supplied by bürkert, via a high pressure tube, the state (open/closed) of said valve being controlled by a computer, and the inlet of said valve being connected to a pressurised water source, said pressure being generated by a water pump,

- a second end positioned 0.1 mm from the surface of the capture body (416),

- an interior high pressure volume (1004),

- a circular 0.5 mm diameter high pressure outlet (1005) near the surface of the capture body and positioned such that the distance between the high pressure outlet and a passing capture hole be at its minimum in the time interval between the steps-wise motion of the capture holes,

- a second cylindrical through-going hole in the guiding plate with a 3 mm inner diameter cylindrical vacuum connecting piece (1006) therein comprising

- a first end extending from the surface of the guiding plate (408) connected via a tube to a bead filter, said filter being connected to a vacuum via a tube, said vacuum being generated by a water pump,

- a second end positioned 0.1 mm from the surface of the capture body,

- an interior vacuum volume (1001) with a 3 mm inner diameter,

- a circular 1 mm diameter vacuum outlet (1002) near the surface of the capture body and positioned opposite the high pressure outlet of the high pressure connecting piece, said vacuum outlet connecting the vacuum volume to the guiding channel.

The bead handling apparatus described in example 1 and the modified auxiliaries are operated in the same way as described in example 1 with the exception that instead of radiofrequency identifying the beads in the detection section, their total fluorescence is measured by the photo-multiplier tube. The measuring result is fed to a computer that generates an analysis result, in this case a sorting result, for each bead being measured by the following scheme: if the measuring result is greater than a pre-set value the sorting result = 1, whereas, if the measuring result is less than or equal to the value, the sorting result = 0.

Each bead, its associated sorting result, and its position on the capture disc from the detection section and forward is recorded by a computer.

At the sorting section each bead is removed from its capture hole, by briefly (50 milliseconds) opening the sorting valve, and transferred to the second bead filter (309) if its associated sorting result = 1, whereas the bead is left on the capture disc if its analysis result = 0.

At the unloading section all beads that were not removed at the sorting section are removed from the capture disc and transferred to the first bead filter (312),

In this way, two fractions of beads are generated, one fraction containing beads with a total fluorescence above

the specified value, i.e. a fraction of beads carrying ligands with high affinity towards the fluorescence labelled protein and one fraction containing beads with a total fluorescence below the specified value, i.e. a fraction of beads carrying ligands with low affinity towards the fluorescence labelled protein.

Now, the chemical structure of the ligands carried by the fraction of strongly fluorescent beads can be analysed and determined to some degree of certainty by methods known by those skilled in the art. Prior art instrumentation and methods for total fluorescence based bead sorting exist, however, the performance of the apparatus and method of the present invention to our best knowledge supersedes prior art disclosures in terms of accuracy, i.e., fraction of correctly sorted beads, due to the precise spatial control of beads of the present invention.

The pre-set value involved in the generation of the sorting result must be sufficiently high for generating only a small fraction of beads with sorting result = 1, such as 1% or less, such as 0.1% or less, whereby it is obtained that only beads carrying very high affinity ligands are separated. A proper pre-set value can be found by a trial and error method: After exposure to fluorescence labelled protein and washing a random fraction of the beads are run through the bead handling apparatus with a random pre-set value. If the fraction of beads with sorting result = 1 is too low the experiment is repeated with a lower pre-set value, whereas, if the fraction of beads with sorting result = 1 is too high the experiment is repeated with a higher pre-set value. This procedure is repeated until a proper pre-set value has been found.

The above method can also be used within drug discovery for synthesis and screening of drug candidates. In the case of drug discovery the compounds synthesised on the beads can be drug candidates, and can be screened against a relevant biological compound, such as e.g. an antibody.

The above method can further be used within catalyst development for synthesis and screening of catalyst candidates, in which case the compounds synthesised on the beads can be catalyst candidates, and can be screened against a relevant set of reactants. Furthermore, the above method or the bead sorting by itself finds use within diagnostics, e.g. for screening biological fluids with regards to the presence of specific DNA or DNA-analogue (e.g. RNA, m-RNA, LNA) sequences. In the case of diagnostics the beads can carry single stranded DNA or DNA-analogue sequences, and can be screened against a biological compound comprising single stranded DNA or DNA-analogue sequences.

*Example 4. Combined radiofrequency bead identification and total fluorescence bead sorting*

The method for ligand development described in example 3 involves the difficult step of determining the chemical structure of the high-affinity ligands. This step is by far the most time consuming, and often leads to ambiguous results. However, the need for this step can be eliminated by keeping track of each bead through its combinatorial synthesis route, i.e. its individual reaction vessel sequence, and after bead sorting, identifying the beads carrying high affinity ligands. In this way the chemical structures of the high affinity ligands are derived from the track of its host bead.

The method for compound synthesis described in example 3 is repeated but in this example with spatially encoded PEGA-type beads and with the added steps of

- radiofrequency identification of all beads entering each reaction vessel in each synthesis step by the method, apparatus, and auxiliaries described in example 2,

- storing the resulting identification data sequences, each such sequence corresponding to a unique combination of synthesis step number and reaction vessel number, on a storage medium in separate files, each such file being named according to synthesis step number and reaction vessel number,

- identifying the majority, such as more than 90%, such as more than 99%, of all beads of all resulting radiofrequency identification sequences by the methods for identification of radiofrequency encoded beads described elsewhere,

- radiofrequency identification of the high total fluorescence beads by the method, apparatus, and auxiliaries described in example 2,

- identifying each bead of the high total fluorescence bead fraction resulting from the total fluorescence based sorting procedure, on the basis of its associated radiofrequency identification by the methods for radiofrequency identification of radiofrequency encoded beads described elsewhere,

- tracking each bead of the high total fluorescence bead fraction resulting from the total fluorescence based sorting procedure through the combinatorial synthesis.

By this method the combinatorial synthesis route of each bead carrying a high affinity ligand is determined, on which basis the chemical structure of its ligand can be derived, whereby the undesired ligand analysis is avoided.

*Example 5. Batch-wise preparation of radiofrequency tagged polymer beads (glass coated chips)*

27 mL oil (Isopar M) is transferred to a glass reactor equipped with a stirring rod connected to a motor. The glass reactor is heated to 50˚C. The oil is purged with argon in order to remove oxygen ($O_2$). A monomer mixture is prepared by dissolving 0.8 g difunctional monomer (polyethyleneglycol-di-acrylamide, ca. 1900 g/mole), 0.8 g monomer (polyethyleneglycol-acrylamide, ca. 1900 g/mole), 0.08 g co-monomer (acrylamide), and 0.05 g surfactant (SORBITAIN MONOLAURATE) in 5 mL of demineralised water in a glass flask by stirring at room temperature for 30 minutes. While stirring, argon is bobbled through the monomer mixture in order to remove oxygen ($O_2$). 0.07 g initiator (ammoniumperoxo-disulfate) is added to the monomer mixture, which is stirred for 5 more minutes. The stirring of the oil in the reactor is started by switching on the motor connected to the stirring rod. 1000 glass coated radiofrequency chips (ca. 0.5 mm x 0.5 mm x 0.2 mm) are added to the glass reactor. The monomer mixture is added to the glass reactor. 0.34 g co-initiator (tetra-methyl-ethyl-diamine) is added to the glass reactor. The mixture is stirred in the glass reactor at 50˚C for one hour.
The glass reactor is opened, the contents is poured into a filter funnel and washed in the funnel with solvents in the following order: dichloromethane, tetrahydrofuran, methanol, water. The resulting wet beads are sieved through a 0.7 mm mesh-size sieve and then through a 0.5 mm mesh-size sieve. The resulting 0.5 - 0.7 mm diameter fraction of beads is the product.

*Example 6. Separation of beads by flow*

The product from example 5 is transferred to a column comprising a vertical glass cylinder equipped with a 0.3 mm mesh-size filter at the bottom. Demineralised water is poured upwards through the column at a low flow rate. The flow rate is carefully increased until the beads containing no radiofrequency chips start to float. These beads are removed from the top of the column. The flow rate is further increased whereby the beads containing one chip start to float. These beads (the product) are then removed from the top of the column.

*Example 7. Separation of beads by bead sorting*

The product from example 5 is separated into fractions of beads according to number of radiofrequency chips per bead with the use of a bead sorter (COPAS, Harvard Bioscience) on the basis of total light extinction. The fraction of beads with one radiofrequency chip is the product.

*Example 8. Batch-wise preparation of radiofrequency tagged polymer beads (glass and polyethyleneglycol coated chips)*

1000 glass coated radiofrequency chips (ca. 0.5 mm x 0.5 mm x 0.2 mm) are coated with polyethyleneglycol-silane and then immersed in a saturated aqueous solution of initiator (ammoniumperoxo-disulfate). The radiofrequency chips are removed from the solution and left to dry at room temperature.
27 mL oil (Isopar M) is transferred to a glass reactor equipped with a stirring rod connected to a motor. The glass reactor is heated to 50˚C. The oil is purged with argon in order to remove oxygen ($O_2$). A monomer mixture is prepared by dissolving 0.8 g difunctional monomer (polyethyleneglycol-di-acrylamide, ca. 1900 g/mole), 0.8 g monomer (polyethyleneglycol-acrylamide, ca. 1900 g/mole), 0.08 g co-monomer (acrylamide), and 0.05 g surfactant (SORBITAIN MONOLAURATE) in 5 mL of demineralised water in a glass flask by stirring at room temperature for 30 minutes. While stirring, argon is bobbled through the monomer mixture in order to remove oxygen ($O_2$). The stirring of the oil in the reactor is started by switching on the motor connected to the stirring rod. The coated radiofrequency chips are added to the reactor. The monomer mixture is added to the glass reactor. 0.34 g co-initiator (tetra-methyl-ethyl-diamine) is added to the glass reactor. The mixture is stirred in the glass reactor at 50˚C for one hour.
The glass reactor is opened, and the product is washed as described in example 5.

*Example 9. Continuous preparation of radiofrequency tagged polymer beads (restricted flow).*

1000 glass coated radiofrequency chips (ca. 0.5 mm x 0.5 mm x 0.2 mm) are coated with polyethyleneglycol-silane and then immersed in a saturated aqueous solution of initiator (ammoniumperoxo-disulfate). The radiofrequency chips are removed from the solution and left to dry at room temperature.
50 mL oil (Isopar M) is transferred to a glass flask and stirred with a magnetic stirring bar at room temperature. The oil is purged with argon in order to remove oxygen ($O_2$). A monomer mixture is prepared by dissolving 0.8 g difunctional monomer (polyethyleneglycol-di-acrylamide, ca. 1900 g/mole), 0.8 g monomer (polyethyleneglycol-acrylamide, ca. 1900 g/mole), 0.08 g co-monomer (acrylamide), and 0.05 g surfactant (SORBITAIN MONOLAURATE) in 5 mL of demineralised water in a glass flask by stirring at room temperature for 30 minutes. While stirring, argon is bobbled

through the monomer mixture in order to remove oxygen ($O_2$). The coated radiofrequency chips are added to the monomer mixture, which is then transferred to a syringe pump. The oil is pumped from the glass flask with the use of a stepper motor to a first inlet of a first T-piece through a 1.0 mm inner diameter tube at a flow rate of 100 mL per hour. The monomer mixture is pumped to the second inlet of the first T-piece at a flow rate of 10 mL per hour through a 0.3 mm inner diameter tube inserted in the exit tube from the T-piece such that the monomer mixture is infused into the oil stream 5 mm downstream from the T-piece at which point 1.0 mm diameter monomer droplets are generated inside the exit tube from the first T-piece. From the first T-piece the monomer-phase/oil-phase mixture is led to a first inlet of a second T-piece. A (10:1) mixture of oil and co-initiator (tetra-methyl-ethyl-diamine) is fed to the second inlet of the second T-piece. From the second T-piece the mixture is led through a 0.5 m long 1 mm inner diameter tube through an oil bath at 50 C where the monomer droplets polymerise. The resulting beads and the oil are gathered in a glass flask at 50˚C and stirred. The beads are washed as described in example 5.

*Example 10. Continuous preparation of radiofrequency tagged polymer beads (capillary break-up).*

1000 glass coated radiofrequency chips (ca. 0.5 mm x 0.5 mm x 0.2 mm) are coated with polyethyleneglycol-silane and then immersed in a saturated aqueous solution of initiator (ammoniumperoxo-disulfate). The radiofrequency chips are removed from the solution and left to dry at room temperature.

500 mL oil (Isopar M) is transferred to a glass flask and stirred with a magnetic stirring bar at room temperature. The oil is purged with argon in order to remove oxygen ($O_2$). A monomer mixture is prepared by dissolving 0.8 g difunctional monomer (polyethyleneglycol-di-acrylamide, ca. 1900 g/mole), 0.8 g monomer (polyethyleneglycol-acrylamide, ca. 1900 g/mole), 0.08 g co-monomer (acrylamide), and 0.05 g surfactant (SORBITAIN MONOLAURATE) in 5 mL of demineralised water in a glass flask by stirring at room temperature for 30 minutes. While stirring, argon is bobbled through the monomer mixture in order to remove oxygen ($O_2$). The coated radiofrequency chips are added to the monomer mixture, which is then transferred to a syringe pump. The oil is pumped from the glass flask with the use of a stepper motor to a first inlet of a first T-piece through a 3.0 mm inner diameter tube at a flow rate of 1000 mL per hour. The monomer mixture is pumped to the second inlet of the first T-piece at a flow rate of 10 mL per hour through a 0.3 mm inner diameter tube inserted in the exit tube from the T-piece such that the monomer mixture is infused into the oil stream 5 mm downstream from the T-piece at which point ca. 1.0 mm diameter monomer droplets are generated inside the exit tube from the first T-piece. From the first T-piece the monomer-phase/oil-phase mixture is led to a first inlet of a second T-piece. A (10:1) mixture of oil and co-initiator (tetra-methyl-ethyl-diamine) is fed to the second inlet of the second T-piece. From the second T-piece the mixture is led through a 0.5 m long 3 mm inner diameter tube through an oil bath at 50˚C where the monomer droplets polymerise. The resulting beads and the oil are gathered in a glass flask at 50˚C and stirred. The beads are washed as described in example 5.

*Example 11. Batch-wise preparation of radiofrequency tagged polymer beads*

1000 radiofrequency chips (ca. 0.5 mm x 0.5 mm x 0.2 mm, produced by Hitachi, Japan) with external antennas operating at 2.45 GHz were purchased from Fine Technologies a.s., Oslo, Norway. 140 of the chips were removed from their external antennas. Thus the resulting chips had no antennas and therefore their radiofrequency codes could not be read. However, the chips are useful for demonstrating the preparation of spherical radiofrequency tagged beads. Readable radiofrequency tagged beads can be prepared by the method described in the present example by using radiofrequency microchips with internal antenna, such as the mu-chips produced by Hitachi.

140 radiofrequency chips were removed from their antennas. 5 mL concentrated sulphuric acid was added to 5 mL 35% hydrogen peroxide, and the radiofrequency chips were added to the resulting hot solution. The chips were left in the solution for 30 minutes. The chips were then removed from the solution and transferred to warm (50˚C) demineralised water. After 2 hours in the warm water the chips were removed from the water.

5000 mL mineral oil was transferred to a cylindrical 8 L stainless steel reactor equipped with a stirring rod connected to a motor. The oil was heated to 70˚C. 1.25 g of surfactant was added to the oil phase. The oil-surfactant mixture was purged with argon in order to remove oxygen ($O_2$), 125 g of a macro-monomer mixture comprising ca. 50% polyethyleneglycol-di-acrylamide (molar mass ca. 1900 g/mole) and ca. 50% polyethyleneglycol-acrylamide (molar mass ca. 1900 g/mole) was dissolved in 375 mL demineralised water in a glass flask. 6 g acrylamide was added to the flask. 1.4 g ammonium persulfate was added to the flask. The radiofrequency chips were added to the flask. The aqueous monomer-radiofrequency chip mixture was stirred while argon was bobbled through it. The stirring of the oil in the reactor was started by switching on the motor connected to the stirring rod. The monomer-radiofrequency chip mixture was added to the steel reactor. After one minute 6.25 mL tetra-methyl-ethyl-diamine was added to the reactor. The mixture was stirred in the reactor at 70˚C for 45 minutes.

The resulting polymer beads were separated from the oil by filtering and then washed sequentially with dichloromethane, tetrahydrofuran, methanol, and demineralised water. The washed beads were sieved. Direct visual inspection

of the size fraction larger than 1 mm diameter revealed that the radiofrequency chips had become fully encapsulated in polymer. Figure 16 shows one of the resulting encapsulated radiofrequency chips. Figure 17 shows a plurality of such encapsulated radiofrequency chips.

The density of primary amine (-$NH_2$) groups in the polymer was measured by standard Fmoc method. The density was found to be approx. 0.2 mmol primary amine per gram of dry polymer.

*Example 12. Batch-wise preparation of radiofrequency tagged polymer beads (silane treated chips)*

20 radiofrequency chips of the same type as used in example 11 are treated with aqueous sodium hydroxide, washed with demineralized water, and submerged in (3-acryloxypropyl)-methyldimethoxysilane for 1 hour. The encapsulation of the radiofrequency chips in polymer is performed as described in example 11.

*Example 13. Up-scaled preparation of radiofrequency tagged polymer beads*

10,000 (ten thousand) radiofrequency chips with internal antenna (mu-chip, 0.4 mm x 0.4 mm, by Hitachi) are surface treated and embedded in polymer as described in example 11.

The concentration of primary amine in the resulting polymer gel is ca. 0.2 mmol per gram of dry polymer, which corresponds to ca. 0.02 mmol per mL of water-swollen resin. A spherical bead of 2 mm diameter when swollen in water has a volume of ca. 0.004 mL and a total amount of primary amine of ca. 80 pmole.

The primary amine groups serve as starting points for solid phase combinatorial synthesis.

The present invention also relates to the following embodiments:

Embodiment 1. An apparatus for analysing a plurality of spherical radiofrequency-identifiable beads, said apparatus comprising

i) a vacuum container comprising at least one planar capture body capable of rotating around a central axis, wherein said capture body comprises a plurality of through-going inlets arranged substantially concentrically around the central axis of the capture body,
wherein the diameter of each inlet is smaller than the average diameter of the beads to be detected,

ii) a pressure-controlling device capable of controlling the pressure in the vacuum container,

iii) a guiding channel enclosing said plurality of inlets;

iv) a device for rotating the vacuum container around the axis of the capture body, and

v) a detection device for determining the radiofrequency code of said bead; and
wherein the planar capture body is arranged in a tilted manner at least 15° off a horizontal arrangement and so that the detection device is positioned in or in close proximity of the upper half of the guiding channel.

Embodiment 2. An apparatus for analysing a plurality of spherical radiofrequency-identifiable beads, said apparatus comprising

i) a vacuum container comprising at least one planar capture body capable of rotating around a central axis, wherein said capture body comprises a plurality of through-going inlets arranged substantially concentrically around the central axis of the capture body,
wherein the diameter of each inlet is smaller than the average diameter of the beads to be detected,

ii) a pressure-controlling device capable of controlling the pressure in the vacuum container,

iii) a guiding channel enclosing said plurality of inlets;

iv) a device for rotating the vacuum container around the axis of the capture body, and

v) a detection device comprising at plurality of antennas for emitting and receiving radiofrequency electromagnetic irradiation for determining the radiofrequency code of said beads, at least some of said antennas being positioned at each of said through-going inlets of said capture body.

Embodiment 3. An apparatus for analysing a plurality of spherical radiofrequency-identifiable beads, said apparatus comprising

i) a vacuum container comprising at least one planar capture body capable of rotating around a central axis, wherein said capture body comprises a plurality of through-going inlets arranged substantially concentrically around the central axis of the capture body,
wherein the diameter of each inlet is smaller than the average diameter of the beads to be detected,

ii) a pressure-controlling device capable of controlling the pressure in the vacuum container,

iii) a guiding channel enclosing said plurality of inlets;

iv) a device for rotating the vacuum container around the axis of the capture body, and

v) a detection device comprising at least one antenna for emitting and receiving radiofrequency electromagnetic irradiation operating at a frequency of in the range of 2.2-2.7 GHz for determining the radiofrequency code of said beads.

Embodiment 4. The apparatus according any one of the embodiments 1-16, wherein the ratio R between a) the average diameter of the beads being manipulated, and b) the diameter of the through-going inlets, R=a/b, is more than 2 and less than 100.

Embodiment 5. The apparatus according to any one of the embodiments 1-Embodiment 4, wherein the capture body is a planar disc.

Embodiment 6. The apparatus according to any one of the embodiments 1-Embodiment 5, wherein the distance between the axis of rotation of the capture body and each of the through-going inlets of the capture body is the same for each of the through-going inlets of the capture body.

Embodiment 7. The apparatus according to embodiment Embodiment 6, wherein the distance between neighbouring through-going inlets is the same for all pairs of neighbouring through-going inlets.

Embodiment 8. The apparatus according to any one of the embodiments 1-Embodiment 7, further comprising a circular capture body support supporting the capture body at a distal end and being connected at a proximal end to a hollow shaft, wherein the hollow shaft is fitted with a shaft opening so that a vacuum can be applied to the interior of the vacuum container.

Embodiment 9. The apparatus according to embodiment Embodiment 8, further comprising a vacuum container housing comprising an outer cylinder comprising an opening for connecting the shaft hole with the pressure-controlling device, and a guiding plate comprising at least one opening allowing the through-going inlets to be accessible to beads to be loaded onto the capture body, said guiding plate being attached to the top part of the outer cylinder, thereby defining in the space between the guiding plate and the capture disc a guiding channel for harbouring beads, said guiding plate confining the vacuum container to the interior of the vacuum container housing.

Embodiment 10. The apparatus according to any one of the embodiments 1-Embodiment 9, wherein the vacuum container is connected to a device for rotating the vacuum container, such as a stepper motor, operably linked to a momentum transfer split for transferring the momentum from the stepper motor to the vacuum container thereby causing the vacuum container to rotate in a controlled step-wise fashion.

Embodiment 11. The apparatus according to any one of the embodiments 1-Embodiment 10, wherein the pressure-controlling device comprises a pump.

Embodiment 12. The apparatus according to any one of the embodiments 1-Embodiment 11, wherein the detection device comprises at least one antenna for emitting and receiving radiofrequency electromagnetic irradiation.

Embodiment 13. The apparatus according to embodiment Embodiment 12, wherein the detection device comprises a plurality of antennae for emitting and receiving radiofrequency electromagnetic irradiation, each of said antennae being fixed such that its axis points towards a through-going inlet position and is tilted at an angle of 45° - 90° to the

plane of said capture body.

Embodiment 14. The apparatus according to embodiment Embodiment 13, wherein said plurality is a number selected from the group consisting of 3, 4 and 5, and wherein the orientation of said antennae allows a bead positioned on the through-going inlet to be analysed from multiple different angles.

Embodiment 15. The apparatus according to any one of the embodiments Embodiment 12 to Embodiment 14, wherein said antenna is/are located at a distance to the through-going inlet of between 0.5 and 5 mm.

Embodiment 16. The apparatus according to any one of the embodiments 1-Embodiment 15, further comprising an analysing device for analysing results being generated from the determination of the radiofrequency code of the beads, wherein said analysis enables individual beads to be identified and optionally also sorted.

Embodiment 17. The apparatus according to embodiment Embodiment 16, wherein the analysing device comprises a computer capable of executing a data analysis program and/or a data storage medium for storing data generated by the detection device and/or the analysing device.

Embodiment 18. The apparatus according to any one of embodiments Embodiment 16 and Embodiment 17, further comprising at least one device for sorting a plurality of beads on the basis of the result generated by the analysing device.

Embodiment 19. The apparatus according to embodiment Embodiment 18, wherein the sorting device comprises a plurality of sorting channels for separating the plurality of beads into fractions thereof and at least one bead-displacement device for displacing at least one bead of the plurality of beads from the capture body in accordance to the result generated by the analysing device.

Embodiment 20. The apparatus according to embodiment Embodiment 19, wherein the at least one bead-displacing device comprises a cylinder for physically removing at least one bead from its capture hole by suction and a valve for connecting and disconnecting a vacuum to the inside of the cylinder.

Embodiment 21. The apparatus according to embodiment Embodiment 19, wherein the at least one bead-displacing device comprises a bead-displacing body for physically removing at least one bead from its capture hole, and a device for spatially manipulating the bead-displacing body.

Embodiment 22. The apparatus according to embodiment Embodiment 21, wherein the bead-displacing body comprises a magnetic material, and wherein the device for spatially manipulating the bead-displacement body comprises an electromagnet.

Embodiment 23. The apparatus according to embodiment Embodiment 19, wherein the at least one bead-displacing device comprises a cylinder for blowing away at least one bead from its capture hole, a high-pressure fluid source for generating the flow for blowing away a bead from its through-going inlet, and a valve for connecting said cylinder to said high-pressure fluid source.

Embodiment 24. The apparatus according to any one of the embodiments 1-Embodiment 23, further comprising a treating device for treating at least one bead optionally having been subjected to detection or analysis.

Embodiment 25. The apparatus according to embodiment Embodiment 24, wherein the treating device comprises a plurality of compartments comprising chemical building blocks said compartments being connected to the treating section by at least one tube for diverting individual chemical building blocks to the treating section.

Embodiment 26. The apparatus according to any one of the embodiments 1-Embodiment 25, further comprising a bead-loading device for loading beads onto the capture disc.

Embodiment 27. The apparatus according to embodiment Embodiment 26, where the bead-loading device comprises a syringe pump comprising a dispersion of beads to be loaded onto the capture disc.

Embodiment 28. The apparatus according to any one of the embodiments 1-Embodiment 27, further comprising a bead-unloading device for unloading beads from the capture disc.

Embodiment 29. The apparatus according to embodiment Embodiment 28, wherein the bead-unloading device comprises a blocking device positioned in the track defined by the rotating through-going inlets of the capture body and at a distance less than half the average bead diameter from the surface of the capture disk for physically removing the beads from the through-going inlets.

Embodiment 30. The apparatus according to embodiment Embodiment 28, wherein the bead-unloading device comprises a suction device for physically removing the beads from the through-going inlets and subsequently from the capture body.

Embodiment 31. The apparatus according to embodiment Embodiment 28, wherein the bead-unloading device comprises a blocking device for physically removing the beads from the through-going inlets and a suction device for removing the beads from the capture body.

Embodiment 32. The apparatus according to any one of the embodiments Embodiment 30 and Embodiment 31, where the suction device comprises a pump and a filter for retaining beads removed from the capture body.

Embodiment 33. The apparatus according to any one of the embodiments 1-Embodiment 32, further comprising an excess-bead flushing device for flushing away non-captured beads from captured beads.

Embodiment 34. The apparatus according to embodiment Embodiment 33, where the excess-bead flushing device comprises a pump and a dispersion liquid outlet positioned adjacent to the track defined by the rotating through-going inlets in the capture disc at a distance greater than the average bead diameter from the surface of the capture body.

Embodiment 35. The apparatus according to any one of the embodiments Embodiment 9-Embodiment 34, wherein the guiding plate comprises a plurality of openings each such opening defining a section selected from the group consisting of loading section for loading beads onto the capture body and unloading section for removing beads from the capture body.

Embodiment 36. The apparatus according to embodiment Embodiment 35, further comprising guiding plate openings selected from the group consisting of: excess-bead unloading section for unloading excess beads, flushing section for flushing away non-captured beads from captured beads, and sorting section for separating at least one bead from the plurality of beads.

Embodiment 37. The apparatus according to any one of embodiments Embodiment 35 and Embodiment 36, wherein the orientation of sections with respect to each other, in the direction of the rotation of the capture disc, is defined by the following order: excess-bead unloading section, when present, bead-loading section, excess-bead flushing section, when present, sorting section, when present, and bead-unloading section.

Embodiment 38. A method for the production of a composition comprising a plurality of spherical radiofrequency-identifiable polymeric beads comprising the steps of:

i) providing a first liquid,

ii) providing a second liquid comprising monomers to be polymerised and, optionally, a surfactant, wherein said first and second liquid are immiscible,

iii) providing a plurality of radiofrequency chips operating at a frequency of in the range of 2.2-2.7 GHz, optionally coated with an initiator of polymerisation, wherein said optionally coated radiofrequency chips are capable of dispersing into the second liquid,

iv) mixing said first liquid, said second liquid and said plurality of radiofrequency chips, in any order, such that an emulsion is formed wherein said radiofrequency chips disperse into droplets of said second liquid,

v) optionally introducing an initiator if not provided in step iii), and

vi) allowing the formation of spherical polymeric beads having an embedded radiofrequency chip.

Embodiment 39. A method for the production of a composition comprising a plurality of spherical radiofrequency-identifiable polymeric beads comprising the steps of:

i) providing a first stream of a first liquid material,

ii) introducing into said first stream of liquid material, a second stream of monomers for the formation of a polymer, said stream further comprising a plurality of radiofrequency chips operating at a frequency of in the range of 2.2-2.7 GHz, and, optionally a surfactant,
wherein the first liquid material and the monomers of the second stream are immiscible,

iii) regulating said second stream such that spherical droplets having embedded a radiofrequency chip are formed, and

iv) allowing the formation of spherical polymeric beads having embedded a radiofrequency chip from said droplets,
said method further comprising, during one of the above steps, addition of an initiator of polymerisation, wherein addition of the initiator or activation of the initiator is timed in such a way that polymerisation is initiated simultaneously with, or after, the formation of droplets.

Embodiment 40. A composition comprising a plurality of spherical beads, wherein a radiofrequency chip operating at a frequency of in the range of 2.2-2.7 GHz is embedded within each of said beads and wherein essentially each of said beads is individually identifiable on the basis of radiofrequency identification.

Embodiment 41. The composition according to embodiment Embodiment 40, wherein the surface of said beads comprises hydrophilic moieties.

Embodiment 42. The composition according to any one of embodiments Embodiment 40-Embodiment 41, wherein the core and/or the surface of said beads comprises polymeric material selected from the group consisting of polyethers, polyvinyls, polyacrylates, polyacylamides polyacrylamides, polystyrenes, polycarbonates, polyesters and polyamides.

Embodiment 43. The composition according to any one of embodiments Embodiment 40-Embodiment 42, wherein the bead comprise a polymer selected from the group consisting of SPOCC, PEGA, HYDRA, POEPOP, PEG-polyacrylate copolymers, polyether-polyamine copolymers, and cross-linked polyethylene diamines.

Embodiment 44. The composition according to any one of embodiments Embodiment 40-Embodiment 43, wherein the radio-frequency chip is embedded within the bead through an interphase.

Embodiment 45. The composition according to any one of embodiments Embodiment 40-Embodiment 44, wherein the spherical shape of said beads is such that the aspect ratio is between 0.8 and 1.2.

Embodiment 46. The composition according to any one of embodiments Embodiment 40-Embodiment 45, wherein essentially each of said beads has a volume of between 0.04 $mm^3$ and 4 $mm^3$.

Embodiment 47. A composition comprising a plurality of radiofrequency-identifiable polymeric beads obtainable by the method of any one of the embodiments Embodiment 38 and Embodiment 39.

Embodiment 48. Use of the composition of any one of the embodiments Embodiment 40-Embodiment 46 or the composition of embodiment Embodiment 47 for synthesis of a combinatorial chemistry library and/or a solid-phase combinatorial library

Embodiment 49. Use of the composition of any one of the embodiments Embodiment 40-Embodiment 46 or the composition of embodiment Embodiment 47 for diagnostics.

Embodiment 50. Use of the composition of any one of the embodiments Embodiment 40-Embodiment 46 or the composition of embodiment Embodiment 47 for animal tracking.

Embodiment 51. A method for detecting a radiofrequency code of at least one bead of a plurality of beads, said

method comprising the steps of

i) providing a plurality of beads each comprising a radiofrequency code,

ii) providing an apparatus according to any one of the embodiments 1-Embodiment 37 for analysing a plurality of spherical radiofrequency-identifiable beads,

iii) contacting at least one bead of the plurality of beads provided in step i) with the vacuum container capture body of the apparatus provided in step ii),

iv) rotating the capture body to transfer at least one bead from the loading section of the vacuum container to the detection section of the vacuum container, and

v) using the detection device of the apparatus for determining the radiofrequency code of the at least one bead.

Embodiment 52. A method for identifying at least one bead of a plurality of beads, said method comprising the steps of

i) providing a plurality of beads each comprising a radiofrequency code,

ii) providing an apparatus according to any one of the embodiments Embodiment 16-Embodiment 37 for analysing a plurality of spherical radiofrequency-identifiable beads,

iii) contacting at least one bead of the plurality of beads provided in step i) with the vacuum container capture body of the apparatus provided in step ii),

iv) rotating the capture body to transfer at least one bead from the loading section of the vacuum container to the detection section of the vacuum container,

v) using the detection device of the apparatus for detecting the radiofrequency code of the at least one bead,

vi) using the analysing device for analysing data generated by the detection device, and

vii) identifying at least one bead of a plurality of beads by analysing the data generated by the detection device.

Embodiment 53. A method for sorting at least one bead of a plurality of beads, said method comprising the steps of

i) providing a plurality of beads each comprising a radiofrequency code,

ii) providing an apparatus according to any one of the embodiments Embodiment 18-Embodiment 37 for sorting a plurality of beads,

iii) contacting at least one bead of the plurality of beads provided in step i) with the vacuum container capture body of the apparatus provided in step ii),

iv) rotating the capture body to transfer at least one bead from the loading section of the vacuum container to the detection section of the vacuum container,

v) using the detection device of the apparatus for detection the radiofrequency code of said at least one bead,

vi) using the analysing device for analysing data generated by the detection device, and

vii) sorting the at least one bead of a plurality of beads based on the result of the analysis performed in step vi).

Embodiment 54. A method according to embodiment Embodiment 53 for sorting at least one bead of a plurality of beads using an apparatus as defined in any one of the embodiments Embodiment 18-Embodiment 37, said method comprising the further step of sorting the at least one bead of a plurality of beads based on the identification.

Embodiment 55. The method according to any one of the embodiments 51-54, wherein the detection device operates

at a frequency of in the range of 2.2-2.7 GHz, and wherein said plurality of beads are suspended in a liquid having not or substantially no absorbance of electromagnetic radiation at said frequency.

Embodiment 56. A method for treating at least one bead of a plurality of beads, such as polymer beads, said method comprising the steps of

i) providing a plurality of beads each comprising a radiofrequency code,

ii) providing an apparatus according to any one of the embodiments Embodiment 24-Embodiment 37 for treating at least one bead,

iii) contacting at least one bead of the plurality of beads provided in step i) with the vacuum container capture body of the apparatus provided in step ii),

iv) rotating the capture body to transfer at least one bead from the loading section of the vacuum container to the detection section of the vacuum container,

v) using the detection device of the apparatus for detection the radiofrequency code of at least one bead,

vi) analysing data generated by the detection device, and

vii) treating at least one bead of a plurality of beads based on the result of the analysis performed in step vi).

Embodiment 57. The method according to any one of the embodiments 51-56, wherein the detection device operates at a frequency of in the range of 2.2-2.7 GHz, and wherein said plurality of beads are suspended in a liquid having not or substantially no absorbance of electromagnetic radiation at said frequency.

Embodiment 58. The method of any one of the embodiments Embodiment 38-Embodiment 56, wherein the radiofrequency code of the at least one bead is determined within a time period of between 1 millisecond and 1 second.

Embodiment 59. The method of any one of the embodiments Embodiment 38-Embodiment 58, wherein a total of more than 10,000 beads per hour.

Embodiment 60. The method according to embodiment Embodiment 56, wherein the step of treating at least one bead of a plurality of beads comprises exposing the at least one bead to at least one chemical building block under reaction conditions suitable for the reaction of said building block.

Embodiment 61. A method for recording individual reaction steps involved in the step-wise synthesis of a chemical compound on a radiofrequency-detectable bead, said method comprising the steps of

i) immobilising a radiofrequency chip in each of a plurality of beads,

ii) isolating, preferably by automated selection, at least a subset of the beads provided in step a),

iii) recording and storing a radiofrequency identification number for each bead,

iv) step-wise synthesising chemical compounds on functional groups present on the beads, wherein the identity of each bead is recorded and stored for each reaction step, and

v) obtaining for each bead a record of the individual reaction steps.

Embodiment 62. A method for identifying a chemical compound having been synthesised on a radiofrequency-detectable bead, said method comprising the steps of

i) performing the recording method of embodiment Embodiment 61,

ii) selecting beads of interest by using an assay or a diagnostic screen selective for the chemical compound having been synthesised on the bead,

iii) recording the radiofrequency code for each of the beads selected in step ii),

iv) comparing the radiofrequency code recorded in step iii) with all of the radiofrequency codes recorded and stored in step iii) of embodiment 61, thereby obtaining information about the identity of the selected bead,

v) identifying for each selected bead the sequence of individual steps having lead to the synthesis of the chemical compound, and

vi) identifying, based the sequence of individual steps, the chemical structure of the compound.

## Claims

**1.** A spherical polymer bead comprising embedded therein an ultrasonic identification chip, said chip comprising one or more resonator cavities, the dimensions of each of the one or more resonator cavities giving rise to an ultrasonic resonance frequency of 20 kHz or more.

**2.** The bead according to claim 2, wherein each of the one or more resonator cavities gives rise to a resonance frequency of in the range of 20-10,000 kHz, such as in the range of 100-10,000 kHz, in particular in the range of 500-8,000 kHz or in the range of 100-2,500 kHz.

**3.** The bead according to any one of the claims 1-2, wherein ultrasonic identification chip comprises a top coating layer (1901), a microstructured layer with at least one through-going hole, each forming the walls of a cavity (1902), and a sealing layer (1903), the top coating layer and the sealing layer forming respective end-walls of said cavities.

**4.** A bead sorting apparatus equipped with at least one ultrasonic transmitter and at least one ultrasonic receiver.

**5.** A method of measuring the ultrasonic code of an ultrasonic encoded bead according to any one of claim 1-3 using a bead sorting apparatus according to claim 4.

Fig. 1

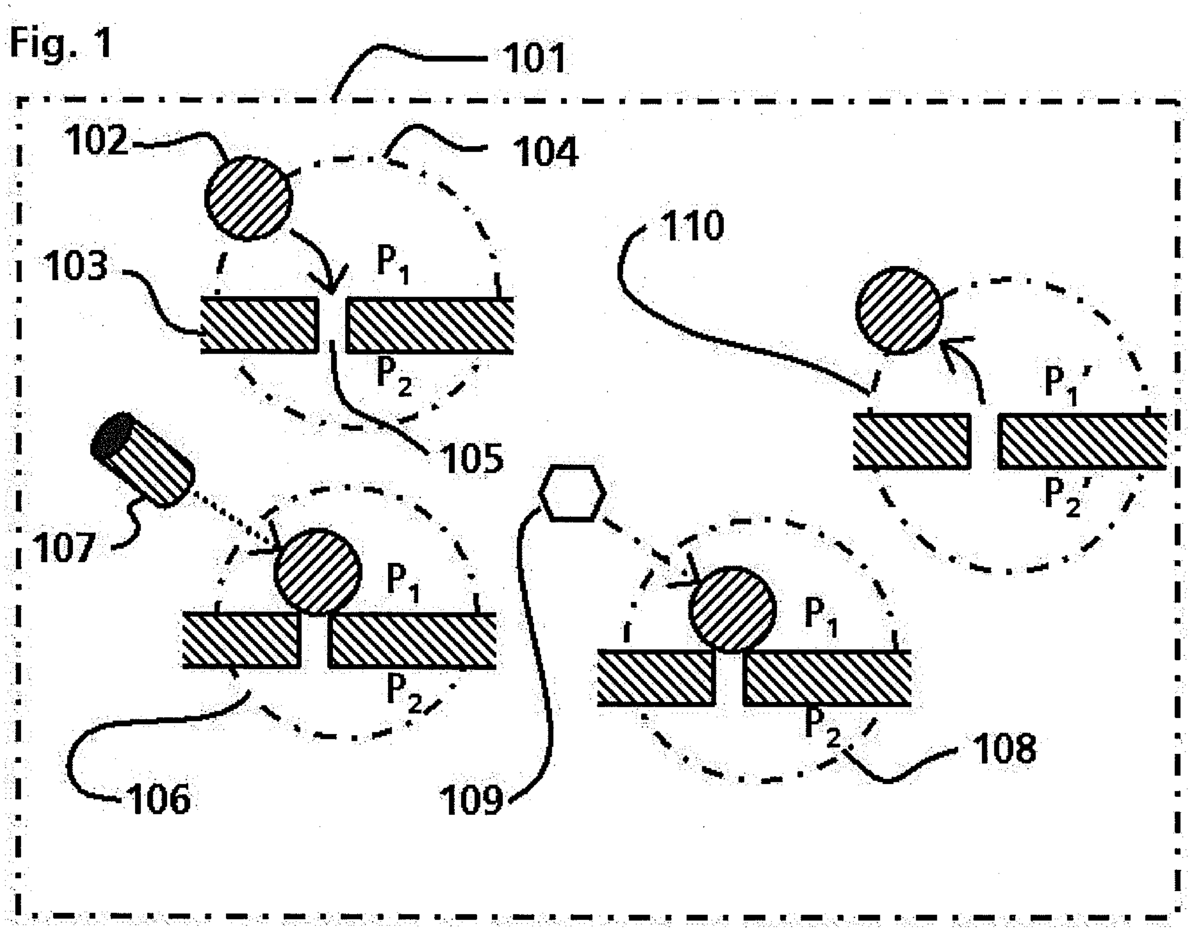

Fig. 2

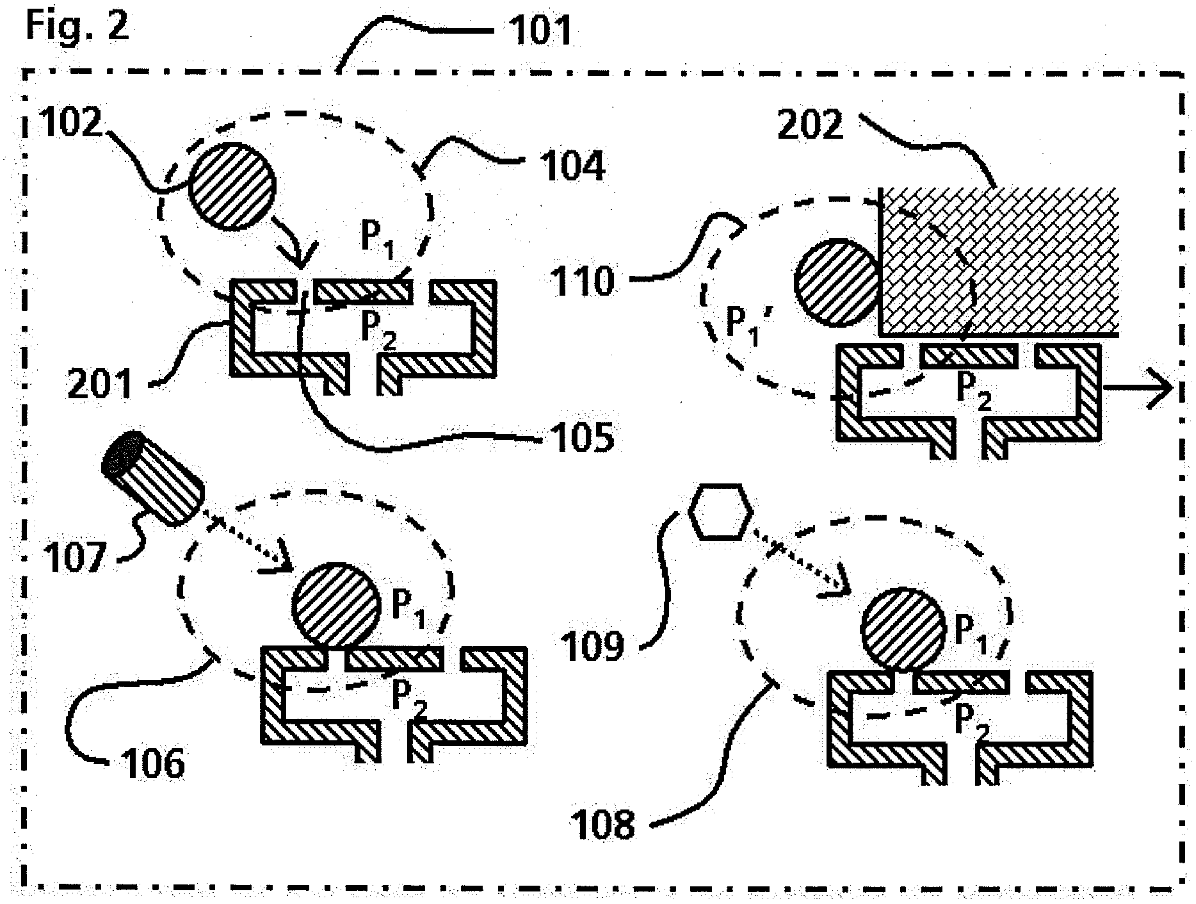

Fig. 3

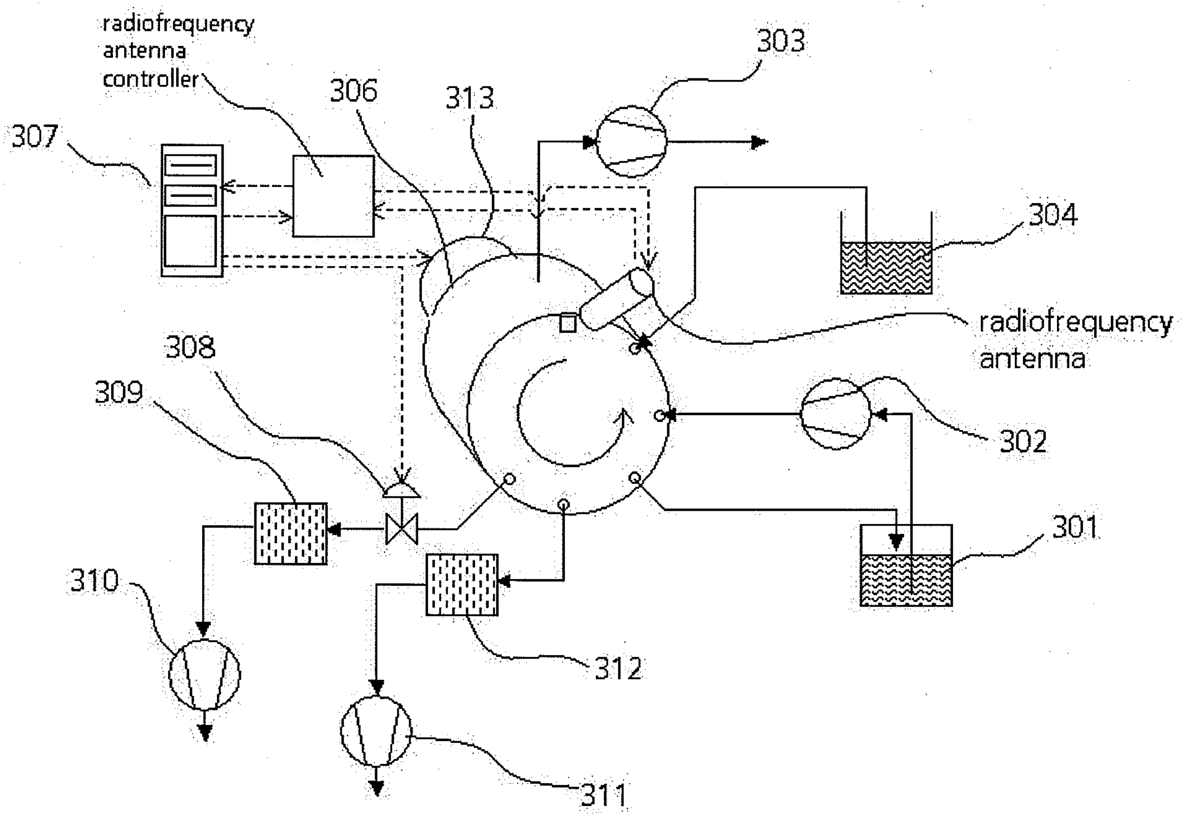
radiofrequency
antenna
controller
306
313
303
307
304
radiofrequency
antenna
308
309
302
301
310
312
311

Fig. 4

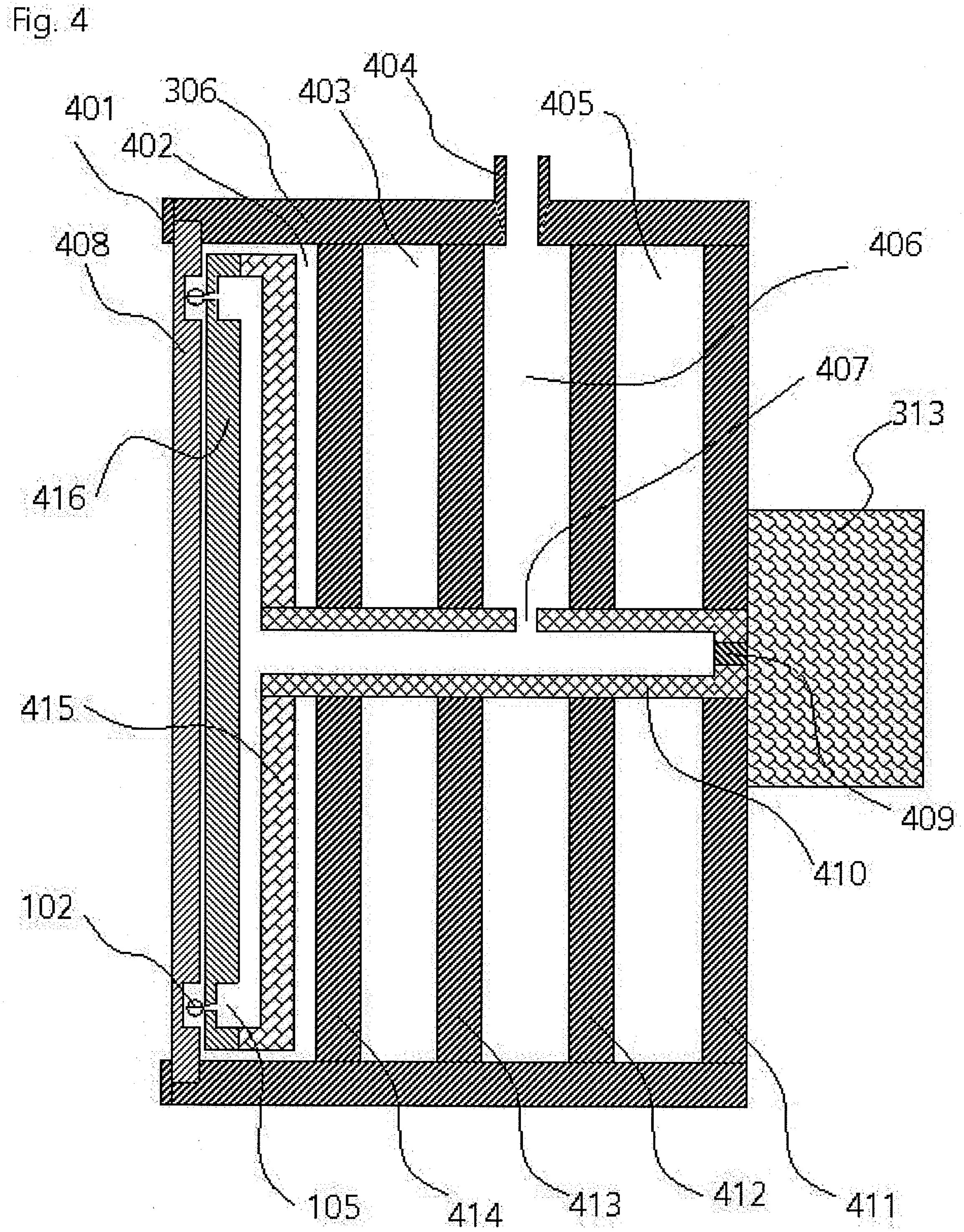
404
306
403
405
401
402
408
406
407
313
416
415
409
410
102
105
414
413
412
411

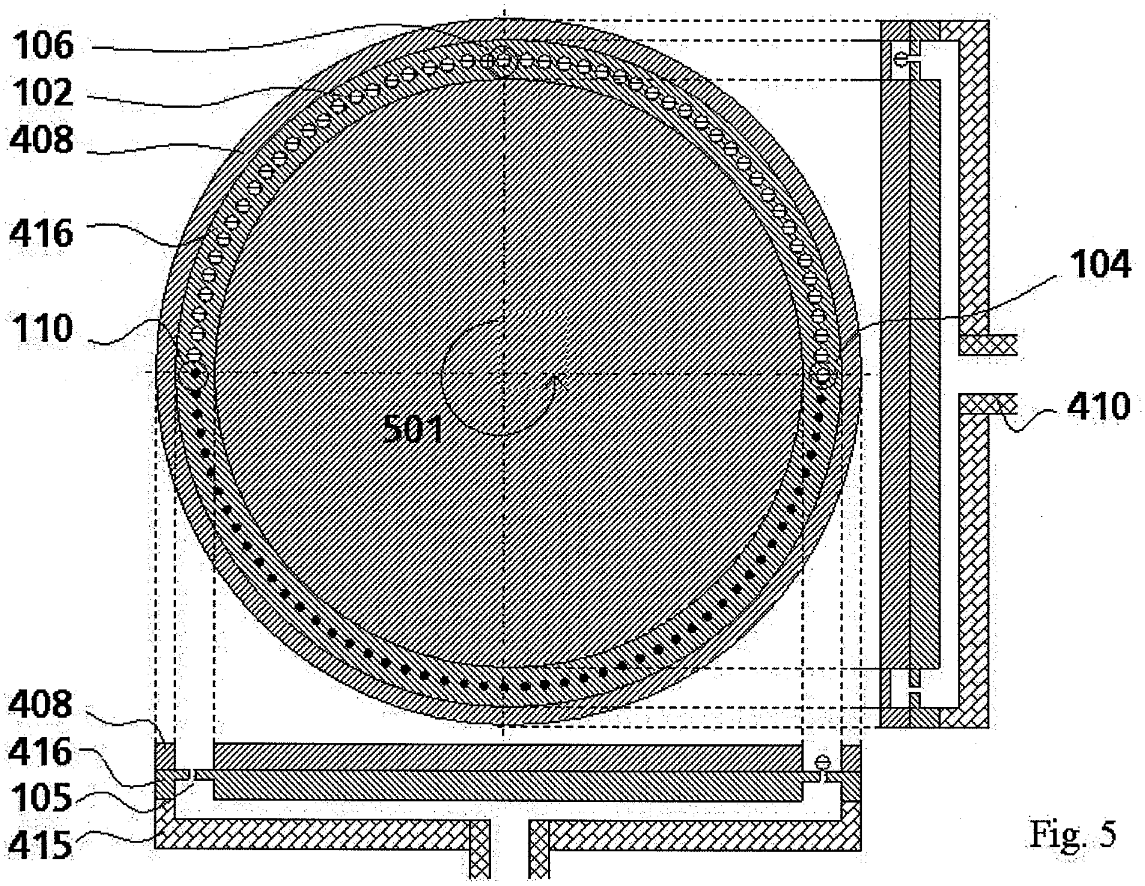


Fig. 5

Fig. 6

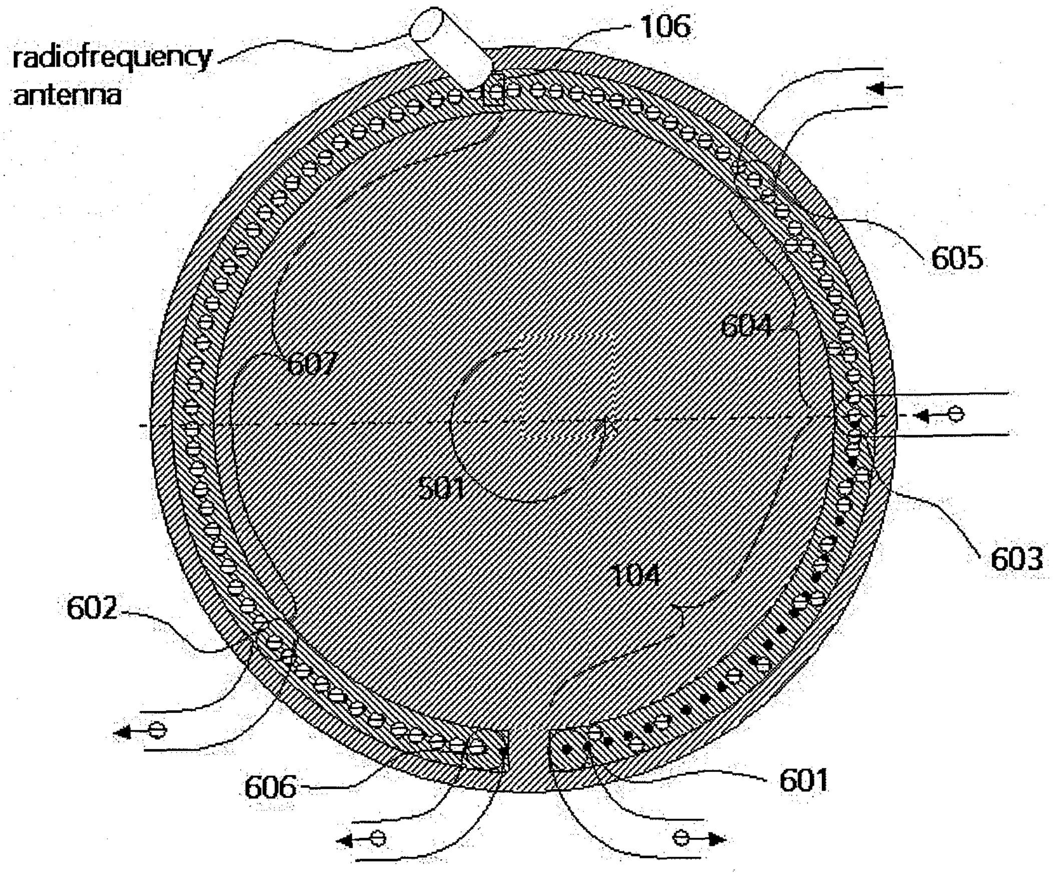
radiofrequency
antenna
106
605
604
607
501
603
104
602
606
601

Fig. 7

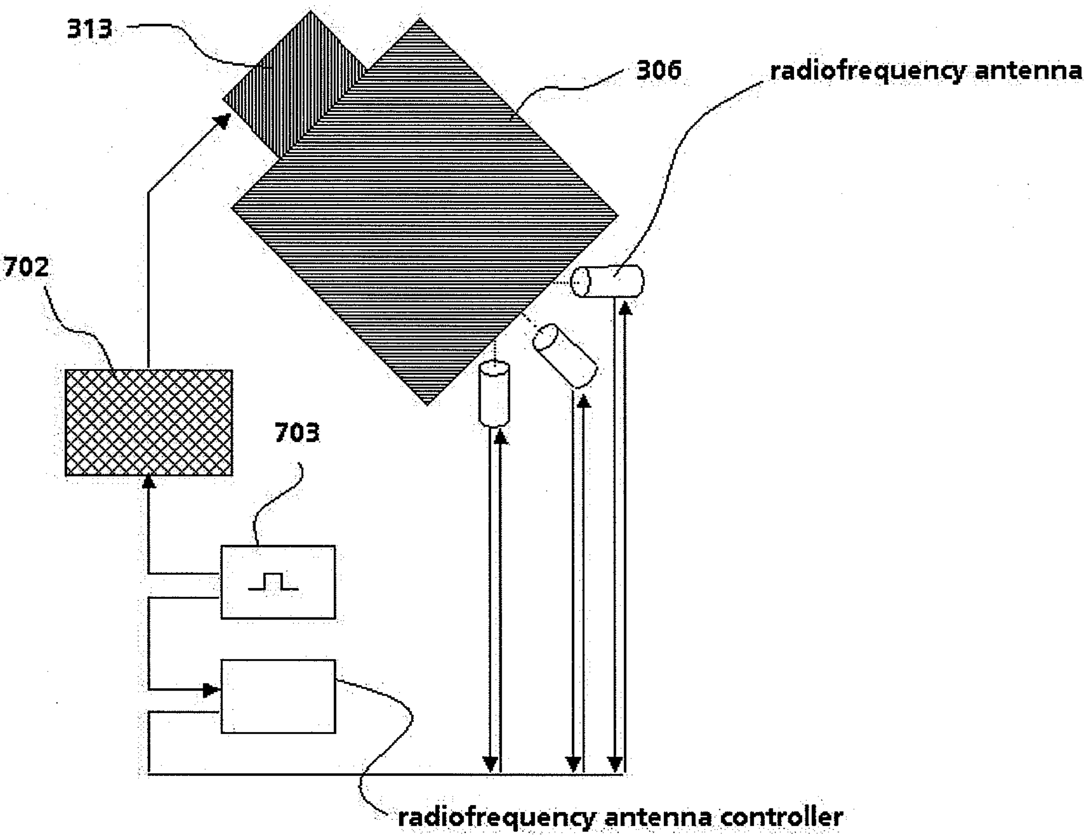
313
306
radiofrequency antenna
702
703
radiofrequency antenna controller

Fig. 8

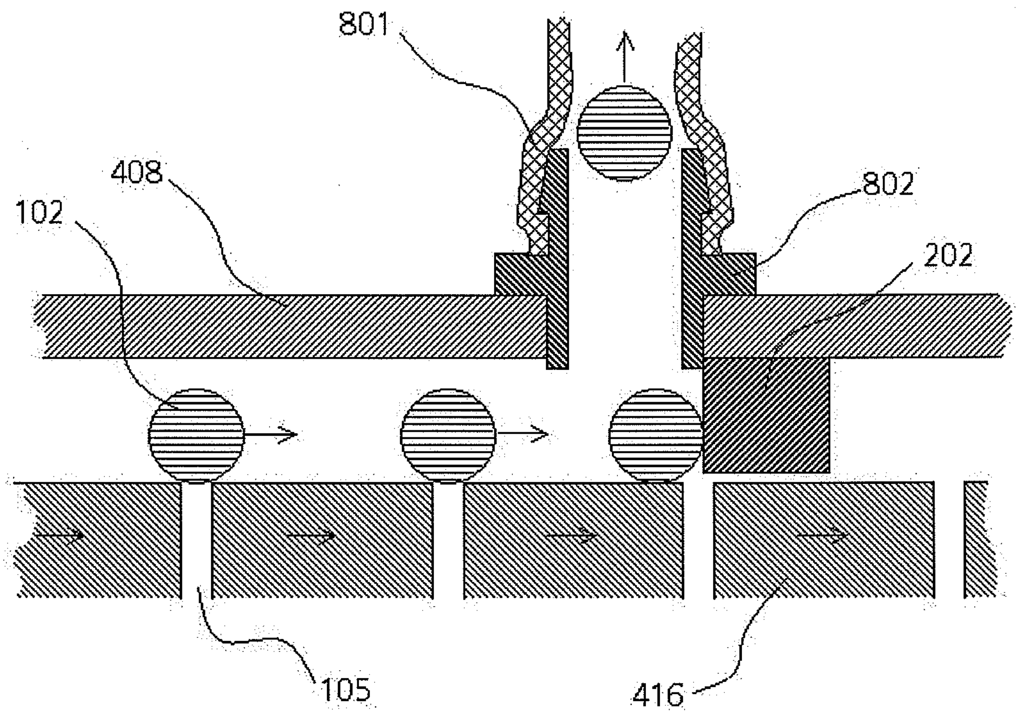

Fig.9

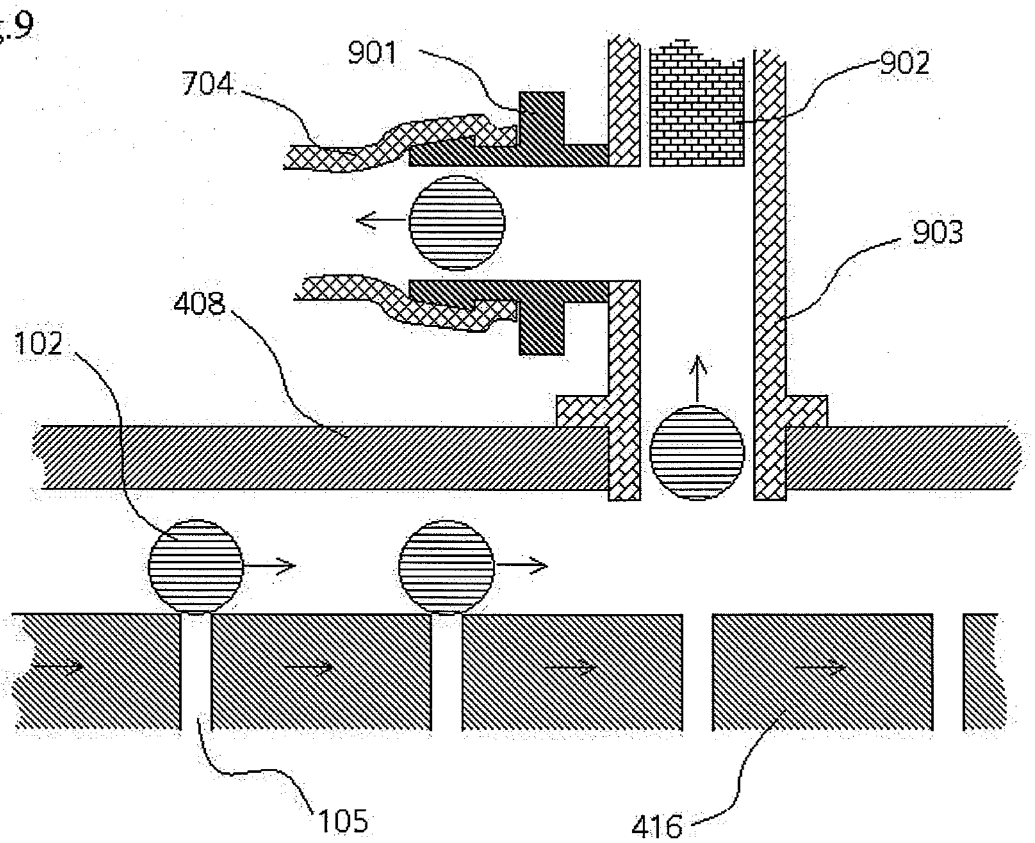

Fig. 10

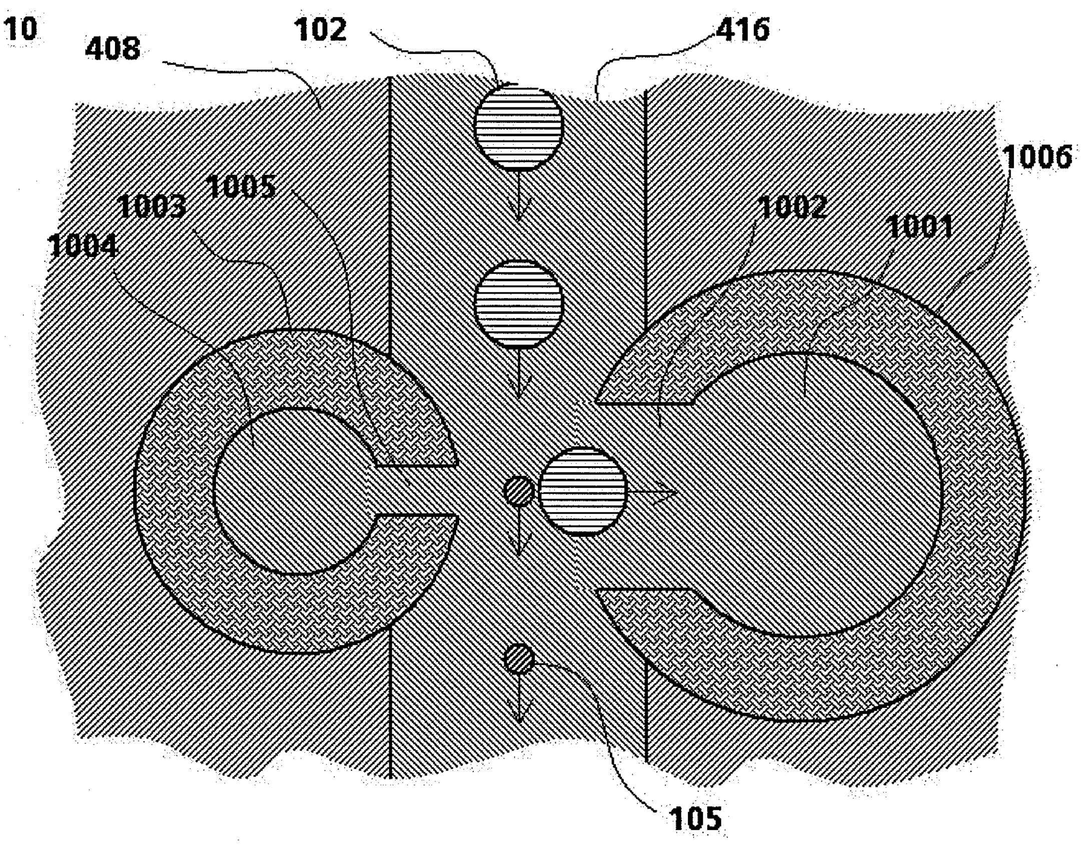

Fig. 11

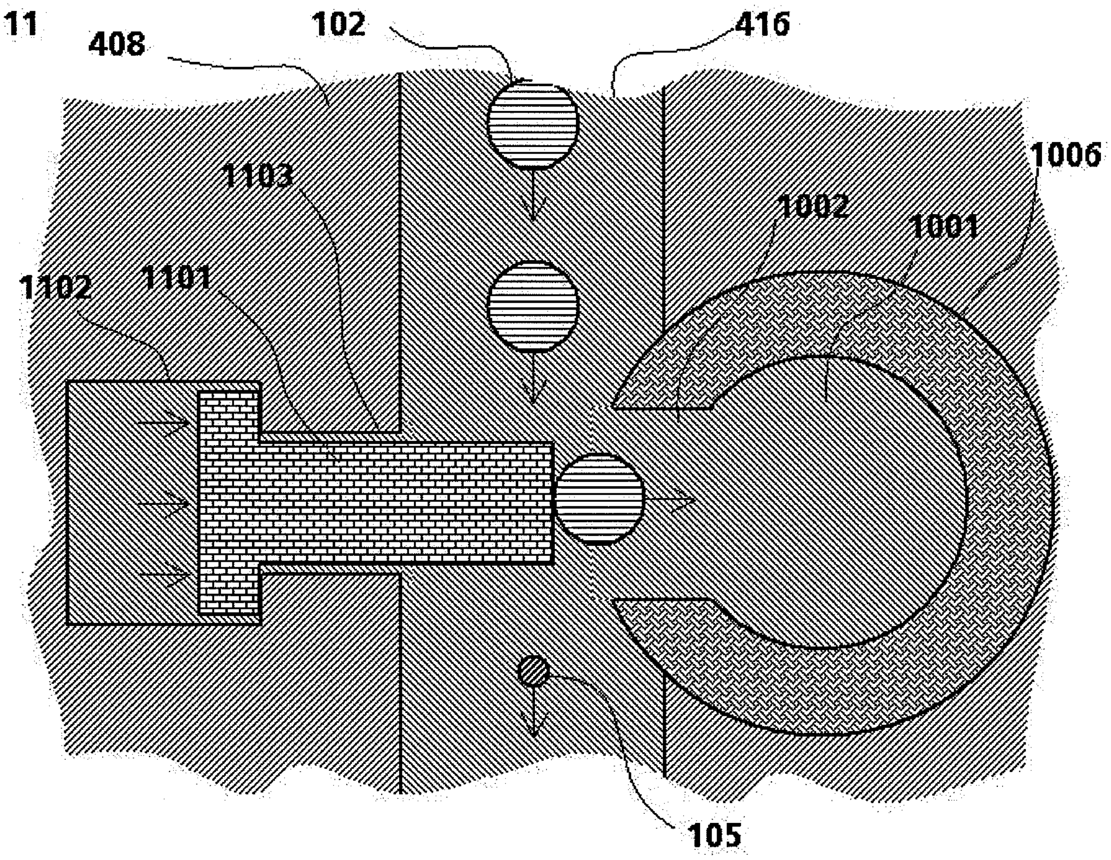

Fig. 12

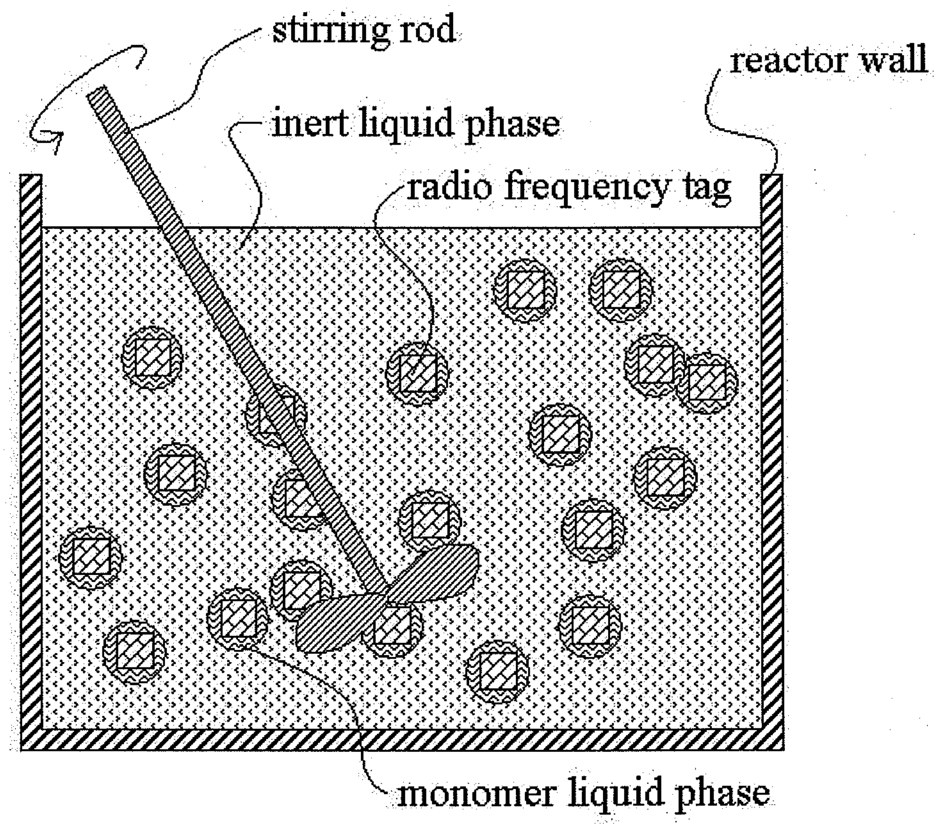
stirring rod
reactor wall
inert liquid phase
radio frequency tag
monomer liquid phase

Fig. 13

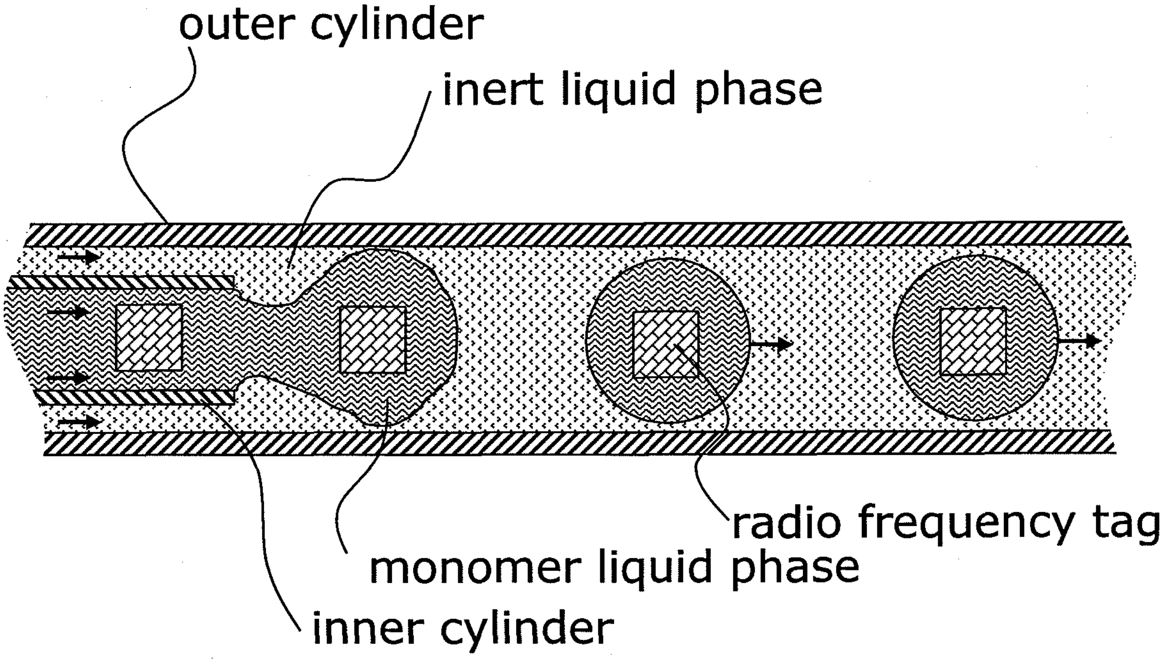
outer cylinder
inert liquid phase
radio frequency tag
monomer liquid phase
inner cylinder

Fig. 14

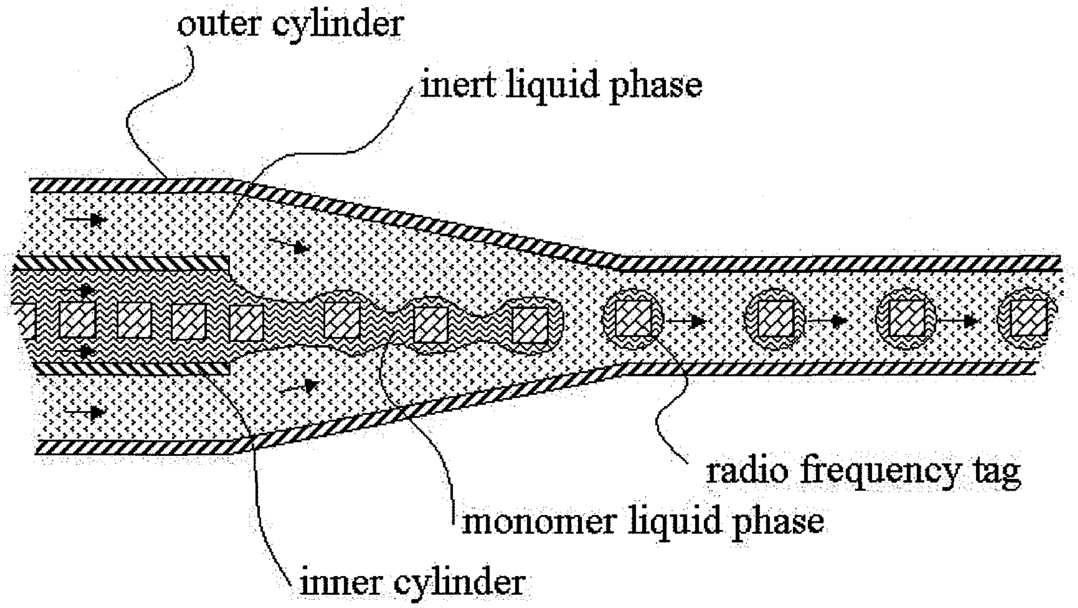
outer cylinder
inert liquid phase
radio frequency tag
monomer liquid phase
inner cylinder

Fig. 15

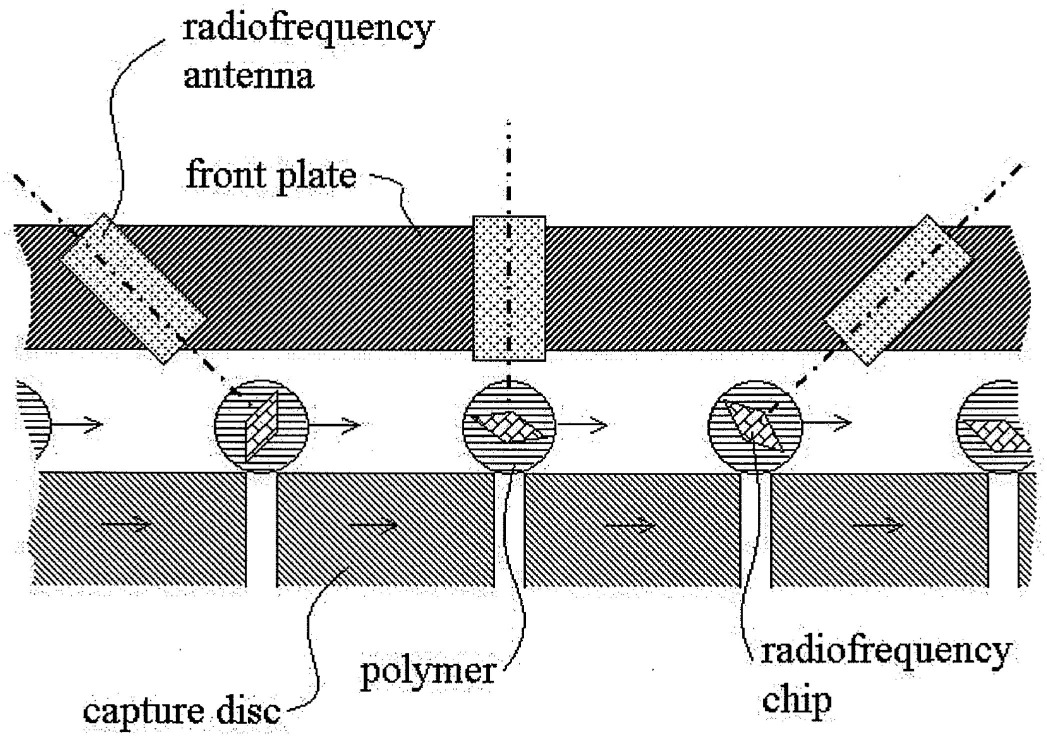
radiofrequency
antenna
front plate
polymer
capture disc
radiofrequency
chip

Fig. 16

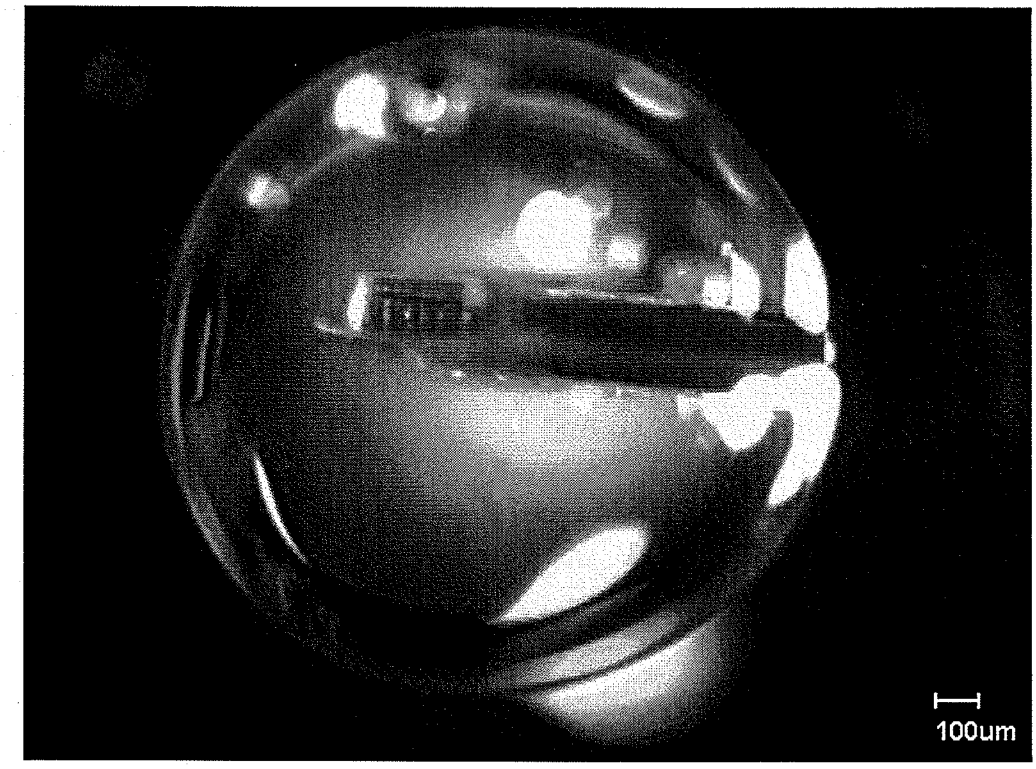

Fig. 17

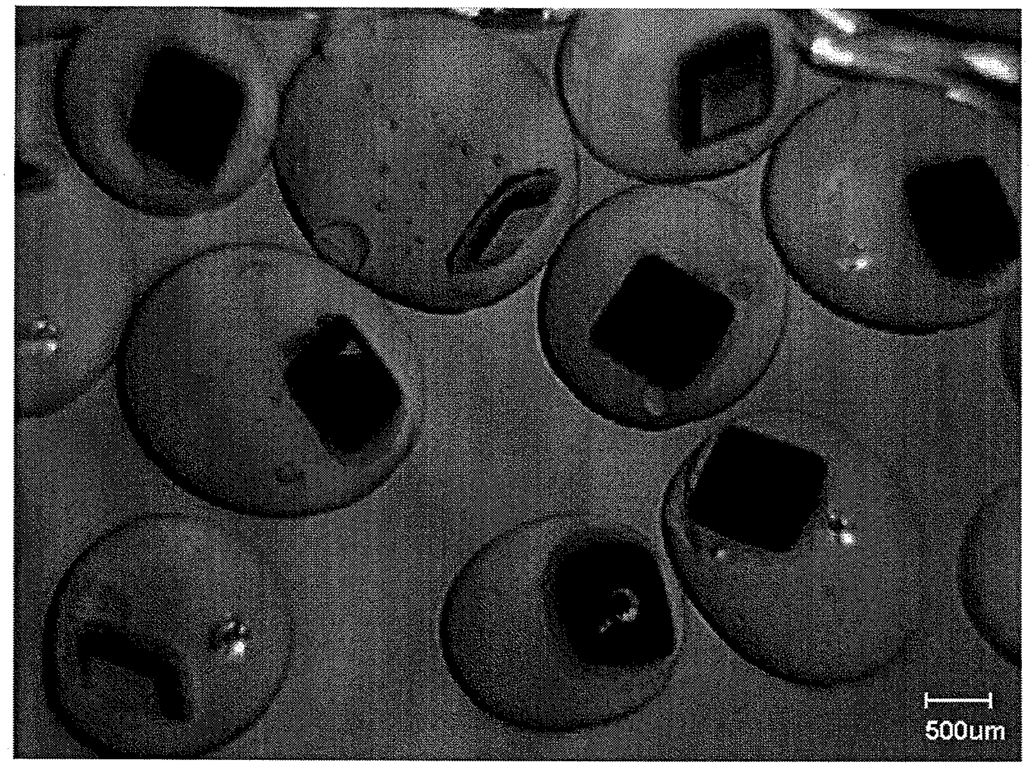

Fig. 18

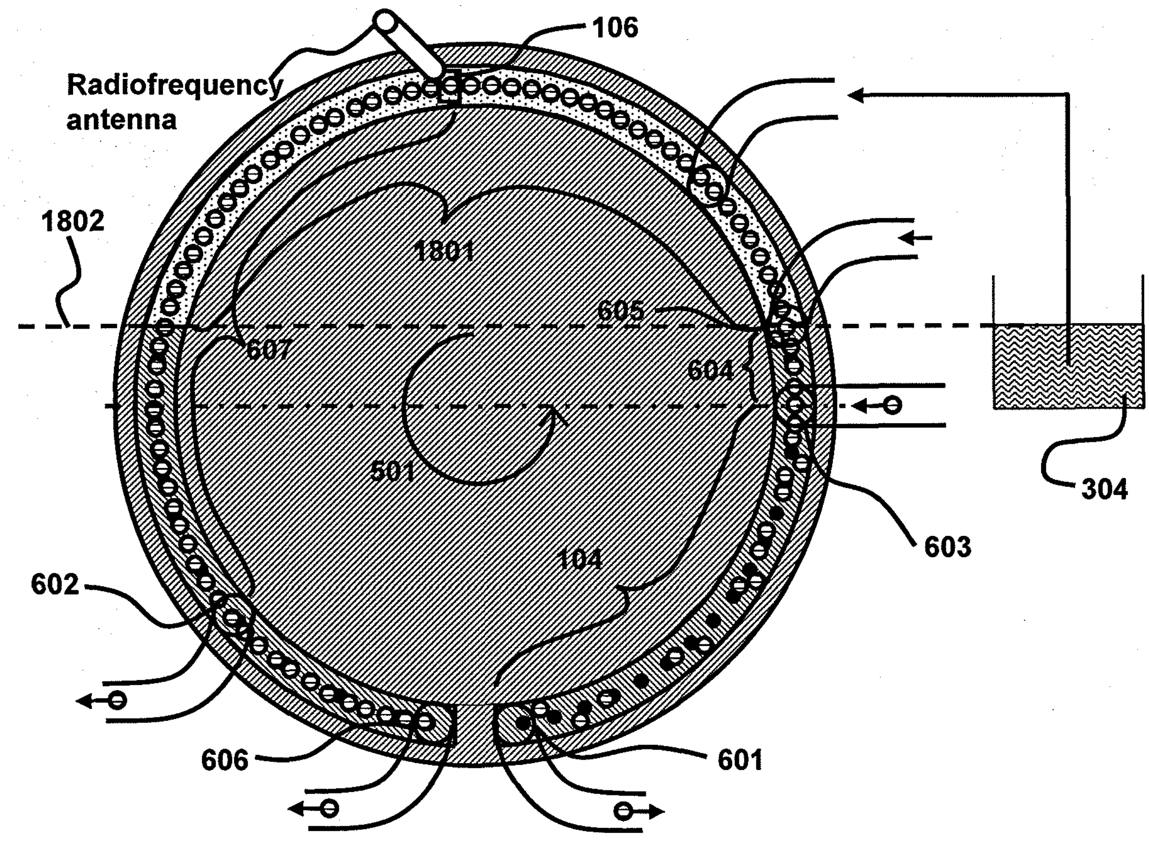
106
Radiofrequency antenna
1802
1801
605
607
604
501
304
603
104
602
606
601

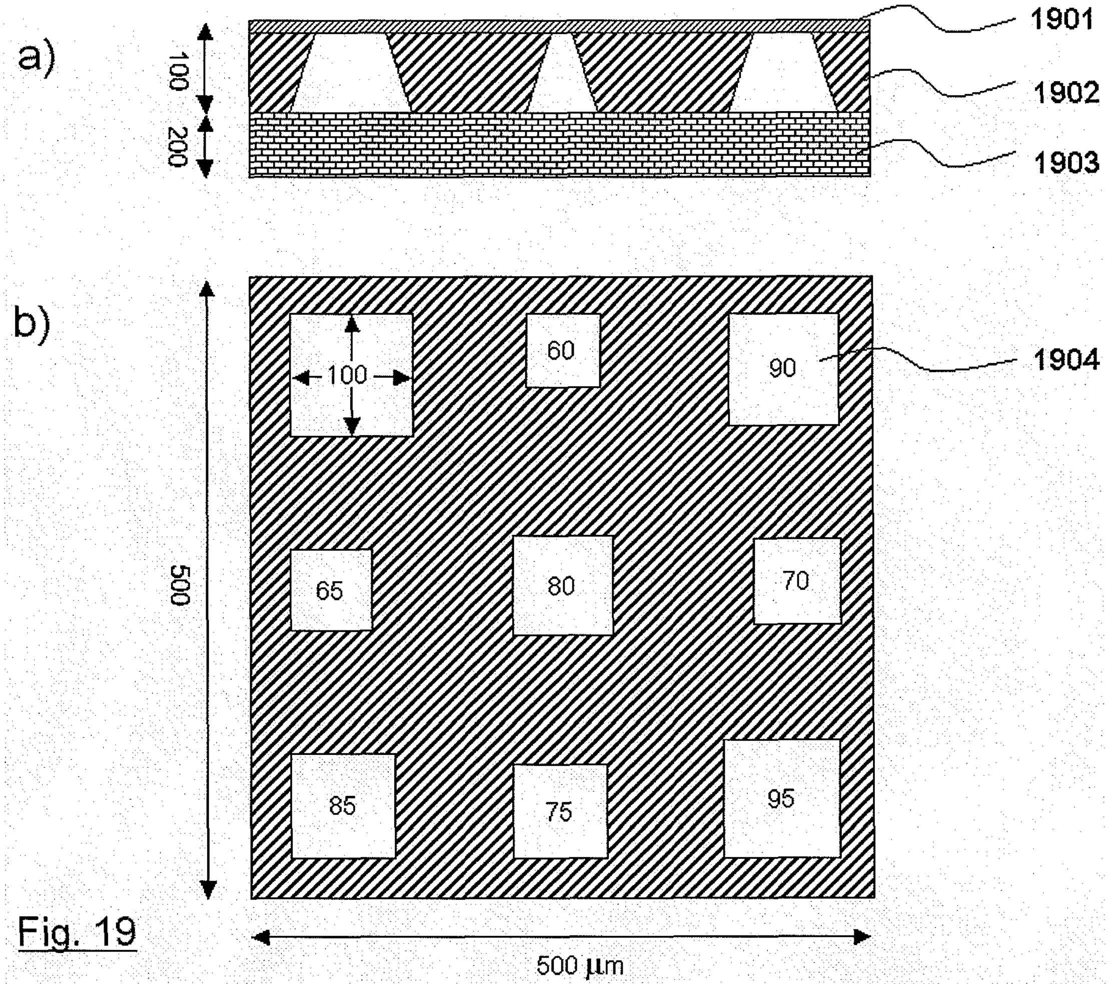
a)
100
200
1901
1902
1903
b)
100
60
90
1904
500
65
80
70
85
75
95
500 µm

Fig. 19

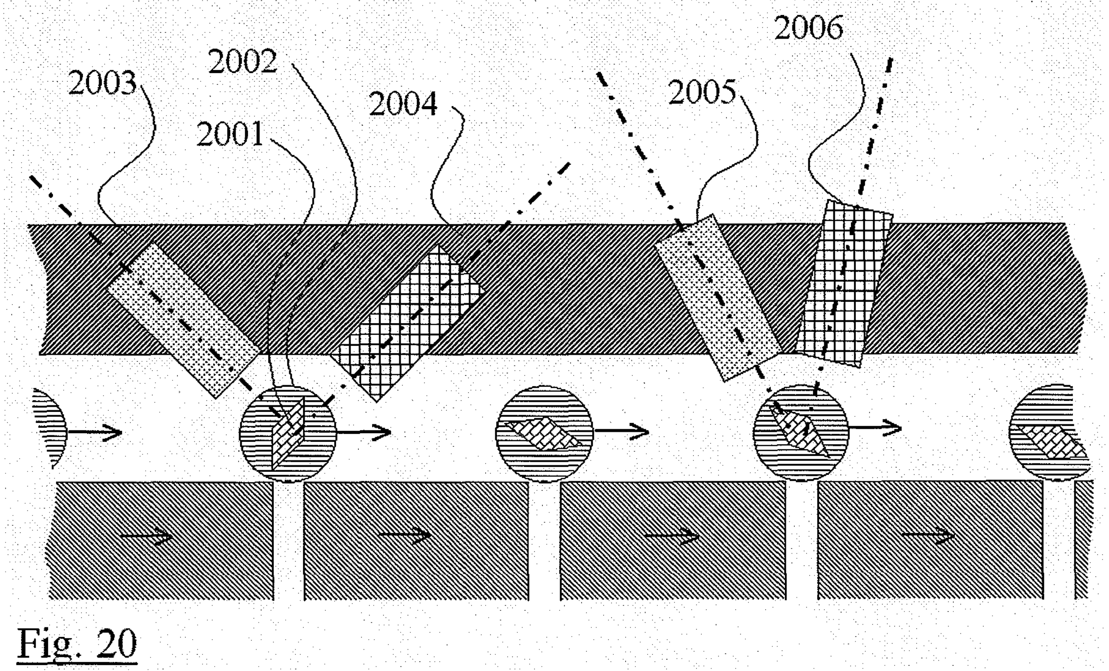
2006
2002
2003
2005
2004
2001

Fig. 20

Europäisches Patentamt
European Patent Office
Office européen des brevets

# EUROPEAN SEARCH REPORT

Application Number
EP 11 17 3879

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br>Y | WO 03/046801 A (VIVID AS [NO]; BRUNGOT JOHN [NO]; HOFF LARS [NO]; HOLM SVERRE [NO]; RO) 5 June 2003 (2003-06-05)<br>* abstract *<br>* page 3, line 18 - page 4, line 17 *<br>* page 6, line 6 - page 7, line 35 *<br>* claims; figures *<br>----- | 4<br><br><br>1-3,5 | INV.<br>B01J19/00<br>C40B60/02<br>G01N35/00 |
| X<br><br>Y | US 5 464 973 A (DESPRES JEAN-ALBERT [FR]) 7 November 1995 (1995-11-07)<br>* abstract *<br>* column 2, line 8 - line 39 *<br>* figures *<br>----- | 4<br><br>1-3,5 | |
| A | DE 40 20 752 A1 (SCHICKEDANZ WILLI [DE]) 2 October 1991 (1991-10-02)<br>* abstract *<br>* column 4, line 15 - line 51; claims *<br>----- | 1-5 | |
| A | WO 2005/062018 A (VERSAMATRIX AS [DK]; CHRISTENSEN SOEREN FLYGENRING [DK]; JOHANNSEN IB) 7 July 2005 (2005-07-07)<br>* abstract *<br>* page 4, line 27 - page 18, line 10 *<br>* page 21, line 4 - page 23, line 2 *<br>* page 29, line 6 - page 53, line 23 *<br>* page 60, line 28 - page 66, line 27 *<br>* page 75, line 30 - page 88, line 21; claims; figures; examples *<br>-----<br>-/-- | 1-5 | TECHNICAL FIELDS SEARCHED (IPC)<br>B01J<br>C40B<br>G01N<br>B06B<br>G06K |

The present search report has been drawn up for all claims

| Place of search | Date of completion of the search | Examiner |
|---|---|---|
| Munich | 29 September 2011 | Nazario, Luis |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 11 17 3879

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 874 214 A (NOVA MICHAEL P [US] ET AL) 23 February 1999 (1999-02-23)<br>* abstract *<br>* column 4, line 55 - column 5, line 67 *<br>* column 12, line 47 - column 13, line 15 *<br>* column 14, line 20 - line 57 *<br>* column 18, line 32 - column 28, line 25 *<br>* column 39, line 36 - column 40, line 58 *<br>* claims; figures; examples *<br>----- | 1-5 | |
| A | US 6 387 623 B1 (MANDECKI WLODEK [US]) 14 May 2002 (2002-05-14)<br>* abstract *<br>* column 5, line 61 - column 7, line 45 *<br>* column 12, line 30 - line 46 *<br>* column 18, line 30 - line 59 *<br>* column 27, line 28 - column 28, line 64 *<br>* column 47, line 50 - column 50, line 8 *<br>* column 51, line 18 - line 64; figure 5 *<br>----- | 1-5 | TECHNICAL FIELDS SEARCHED (IPC) |
| A | US 6 319 668 B1 (NOVA MICHAEL P [US] ET AL) 20 November 2001 (2001-11-20)<br>* abstract *<br>* column 2, line 53 - column 3, line 13 *<br>* column 3, line 28 - column 4, line 53 *<br>* column 6, line 30 - line 61; claims; figures 1-3,7,8 *<br>-----<br>-/-- | 1-5 | |

The present search report has been drawn up for all claims

| Place of search | Date of completion of the search | Examiner |
|---|---|---|
| Munich | 29 September 2011 | Nazario, Luis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

2

EPO FORM 1503 03.82 (P04C01)

Europäisches Patentamt
European Patent Office
Office européen des brevets

# EUROPEAN SEARCH REPORT

Application Number
EP 11 17 3879

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 98/46548 A (ZENECA LTD [GB]; CORLESS ANTHONY ROBERT [GB]; WENN DAVID ANDREW [GB]) 22 October 1998 (1998-10-22)<br>* abstract *<br>* page 3, line 15 - page 4, line 22; claims; figures *<br>* page 6, line 21 - page 7, line 8; claims 1-7 *<br>----- | 1-5 | |
| A | WO 99/24822 A (FUNCTIONAL GENETICS INC [US]) 20 May 1999 (1999-05-20)<br>* abstract *<br>* claims; figures *<br>----- | 1-5 | |
| A | WO 97/37803 A (SARNOFF CORP [US]) 16 October 1997 (1997-10-16)<br>* abstract *<br>* page 10, line 4 - page 12, line 21; figure 1 *<br>----- | 1-5 | |
| A | PETER CLARKE: "Hitachi adds antenna to RFID 'mu-chip'",<br>EETIMES ONLINE<br>,<br>2 September 2003 (2003-09-02), XP002433020,<br>Retrieved from the Internet:<br>URL:http://www.eetimes.com/showArticle.jhtml?articleID=18309542<br>[retrieved on 2007-05-04]<br>* paragraph [0004] *<br>-----<br>-/-- | 1-5 | TECHNICAL FIELDS SEARCHED (IPC) |

The present search report has been drawn up for all claims

| Place of search | Date of completion of the search | Examiner |
|---|---|---|
| Munich | 29 September 2011 | Nazario, Luis |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 11 17 3879

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,P | WO 2006/002641 A (VERSAMATRIX AS [DK]; CHRISTENSEN SOEREN FLYGENRING [DK]; JENSEN OLE ST) 12 January 2006 (2006-01-12)<br>* abstract *<br>* page 4, line 24 - page 7, line 16 *<br>* page 8, line 10 - page 9, line 12 *<br>* page 12, line 15 - page 22, line 10 *<br>* page 24, line 1 - page 56, line 23 *<br>* claims; figures; examples *<br>----- | 1-5 | |
| | | | TECHNICAL FIELDS SEARCHED (IPC) |

The present search report has been drawn up for all claims

2

| Place of search | Date of completion of the search | Examiner |
|---|---|---|
| Munich | 29 September 2011 | Nazario, Luis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 11 17 3879

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2011

| Patent document cited in search report | | Publication date | Patent family member(s) | | | Publication date |
|---|---|---|---|---|---|---|
| WO 03046801 | A | 05-06-2003 | AT | 304194 | T | 15-09-2005 |
| | | | AU | 2002365534 | A1 | 10-06-2003 |
| | | | CA | 2468486 | A1 | 05-06-2003 |
| | | | CN | 1618078 | A | 18-05-2005 |
| | | | DE | 60206073 | D1 | 13-10-2005 |
| | | | DE | 60206073 | T2 | 13-07-2006 |
| | | | DK | 1461761 | T3 | 16-01-2006 |
| | | | EP | 1461761 | A1 | 29-09-2004 |
| | | | JP | 4402459 | B2 | 20-01-2010 |
| | | | JP | 2005510743 | A | 21-04-2005 |
| | | | NO | 20015792 | A | 28-05-2003 |
| | | | US | 2007063852 | A1 | 22-03-2007 |
| US 5464973 | A | 07-11-1995 | EP | 0602220 | A1 | 22-06-1994 |
| | | | FR | 2693303 | A1 | 07-01-1994 |
| | | | WO | 9401836 | A1 | 20-01-1994 |
| | | | JP | 6510618 | T | 24-11-1994 |
| DE 4020752 | A1 | 02-10-1991 | NONE | | | |
| WO 2005062018 | A | 07-07-2005 | CA | 2550902 | A1 | 07-07-2005 |
| | | | EP | 1699553 | A2 | 13-09-2006 |
| | | | US | 2009025489 | A1 | 29-01-2009 |
| US 5874214 | A | 23-02-1999 | NONE | | | |
| US 6387623 | B1 | 14-05-2002 | NONE | | | |
| US 6319668 | B1 | 20-11-2001 | NONE | | | |
| WO 9846548 | A | 22-10-1998 | AU | 7058398 | A | 11-11-1998 |
| WO 9924822 | A | 20-05-1999 | AU | 1387699 | A | 31-05-1999 |
| | | | CA | 2310267 | A1 | 20-05-1999 |
| | | | EP | 1031030 | A1 | 30-08-2000 |
| | | | JP | 2001522998 | A | 20-11-2001 |
| | | | US | 5922617 | A | 13-07-1999 |
| WO 9737803 | A | 16-10-1997 | AT | 410271 | B | 25-03-2003 |
| | | | AU | 717968 | B2 | 06-04-2000 |
| | | | AU | 2431697 | A | 29-10-1997 |
| | | | CA | 2251330 | A1 | 16-10-1997 |
| | | | CH | 694038 | A5 | 30-06-2004 |
| | | | CN | 1221364 | A | 30-06-1999 |
| | | | DE | 19782131 | B4 | 19-08-2004 |
| | | | DE | 19782131 | T1 | 23-12-1999 |

EPO FORM P0459

For more details about this annex : see Official Journal of the European Patent Office, No. 12/82

**ANNEX TO THE EUROPEAN SEARCH REPORT ON EUROPEAN PATENT APPLICATION NO.** EP 11 17 3879

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2011

| Patent document cited in search report | Publication date | Patent family member(s) | Publication date |
|---|---|---|---|
| WO 9737803 A | | DK 73699 A | 25-05-1999 |
| | | FI 991163 A | 21-05-1999 |
| | | GB 2334462 A | 25-08-1999 |
| | | HK 1020028 A1 | 06-06-2003 |
| | | IL 126500 A | 24-06-2003 |
| | | NZ 332223 A | 27-03-2000 |
| | | SE 521698 C2 | 25-11-2003 |
| | | US 6399143 B1 | 04-06-2002 |
| | | US 5788814 A | 04-08-1998 |
| WO 2006002641 A | 12-01-2006 | EP 1796828 A1 | 20-06-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6265219 B, Chiron
- US 6319668 B
- US 6087186 A, Irori
- WO 9846548 A, Zeneca
- WO 2005062018 A2
- DK 0200687 W
- DK 2004000461 W
- DK 2004000330 W
- WO 9715390 A, Kaye and Tracey
- WO 9722594 A
- WO 9740034 A
- US 5288514 A
- WO 9603424 A
- US 5549974 A
- WO 9735199 A


### Non-patent literature cited in the description


- **RØNNEKLEIV et al.** *the 2005 IEEE Int. Ultrasonics Symp.,* 18 September 2005
- **RAPP, W.** Combinatorial Peptide and Nonpeptide Libraries: A Handbook. John Wiley & Sons, 1998, 425-464
- **RENIL et al.** *J. Pept. Sci.,* 1998, vol. 4, 195-210
- **RENIL ; MELDAL.** *Tetrahedron Lett.,* 1996, vol. 37, 6185-6188
- **BUCHARDT ; MELDAL.** *Tetrahedron Lett.,* 1998, vol. 39, 8695-8698
- **RADEMANN et al.** *J. Amer. Chem. Soc.,* 1999, vol. 121, 5459-5466
- **GROTH et al.** *J. Chem. Soc., Perkin Trans.,* 2000, vol. 1, 4258-4264
- **SMITH ; BRADLEY.** *J. Combi. Chem.,* 1999, vol. 1, 326-332
- **ST. HILAIRE et al.** *J. Combi. Chem.,* 1999, vol. 1, 509-523
- **ROSSÉ et al.** *J. Combi. Chem.,* 2000, vol. 2, 461-466
- **ADAMS et al.** *J.Org.Chem.,* 1998, vol. 63, 3706-3716
- **GR∅TLI et al.** *J.Combi.Chem.,* 2000, vol. 2, 108-119
- **PATEL et al.** *DDT,* April 1996, vol. 1 (4), 134-144
- **ROHR.** *Angew. Int. Ed. Engl.,* 1995, vol. 34, 881-884
- **NEEDELS et al.** *Proc. Natl. Acad. Sci. USA,* 1993, vol. 90, 10700-10704
- **GANTE, J.** *Angew. Chem. Int. Ed. Engl.,* 1994, vol. 33, 1699-1720
- **MERRIFIELD.** *J. Amer. Chem. Soc.,* 1963, vol. 35, 2149-2156
- The Peptides. Academic Press, 1979, vol. 1
- **RØNNEKLEIV et al.** *2005 IEEE Int. Ultrasonics Symp.,* 18 September 2005